(19) Europäisches Patentamt
European Patent Office
Office européen des brevets

(11) **EP 4 535 673 A1**

(12) **EUROPEAN PATENT APPLICATION**
published in accordance with Art. 153(4) EPC

(43) Date of publication:
09.04.2025 Bulletin 2025/15

(21) Application number: 24822834.8

(22) Date of filing: 14.06.2024

(51) International Patent Classification (IPC):
*H04B 1/525* (2015.01)       *G01S 7/35* (2006.01)
*G01S 7/285* (2006.01)       *G01S 7/41* (2006.01)
*H04B 1/40* (2015.01)        *H04B 1/04* (2006.01)
*G01S 13/58* (2006.01)       *G01S 13/522* (2006.01)
*G01S 7/292* (2006.01)

(52) Cooperative Patent Classification (CPC):
**G01S 7/285; G01S 7/292; G01S 7/35; G01S 7/41;
G01S 13/522; G01S 13/58; H04B 1/04; H04B 1/40;
H04B 1/525**

(86) International application number:
**PCT/CN2024/099411**

(87) International publication number:
**WO 2024/255887 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 14.06.2023  CN 202310702586
22.12.2023  CN 202311791286
27.12.2023  CN 202311828622
27.12.2023  CN 202311830908
29.12.2023  CN 202311870043
11.05.2024  CN 202410586691

(71) Applicant: **Calterah Semiconductor Technology
(Shanghai)
Co., Ltd.
Shanghai 201210 (CN)**

(72) Inventors:
• **TANG, Ran
Shanghai 201210 (CN)**
• **CHEN, Jiashu
Shanghai 201210 (CN)**

(74) Representative: **Penza, Giancarlo
Bugnion S.p.A.
Viale Lancetti, 17
20158 Milano (IT)**

(54) **SIGNAL PROCESSING METHOD AND LINK, AND TARGET DETECTION METHOD AND ELECTRONIC DEVICE**

(57) The present application discloses a signal processing method and chain, a target detection method, and an electronic device. For an FMCW radar having at least two receiving channels with unequal path lengths, compensation is performed in a digital domain for unequal receiving lengths of a digital baseband signal according to a path length difference between the receiving channels, which eliminates a problem that different receiving channels inevitably generate relative time delay due to the path length difference between the receiving channels, thereby improving the quality of the received signal, and improving the reception performance.

300 — Processing, for any receiving channel, an echo signal received by the receiving channel to obtain a digital baseband signal, wherein at least two receiving channels include a reference receiving channel and at least one remaining receiving channel having a length difference relative to the reference receiving channel

301 — Compensating the digital baseband signal obtained after the processing based on the length difference of the receiving channel relative to the reference receiving channel and frequency information of a transmitted signal corresponding to the received echo signal

FIG. 3

**Description**

Cross-Reference to Related Applications

The present application claims priority to Chinese Patent Application No. 202311830908.0 filed to the CNIPA on December 27, 2023 and entitled "Signal Transmitter Chain and Method, Integrated Circuit, Electromagnetic Wave Component and Device", priority to Chinese Patent Application No. 202311828622.9 filed to the CNIPA on December 27, 2023, and entitled "Signal Transceiving Chain and Method, Integrated Circuit, Electromagnetic Wave Component and Device", priority to Chinese Patent Application No. 202311791286.5 filed to the CNIPA on December 22, 2023, and entitled "Received Signal Compensation Method, Device, Integrated Circuit and Wireless communication device", priority to Chinese Patent Application No. 202310702586.5 filed to the CNIPA on June 14, 2023, and entitled "Signal Transmission, Calibration and Compensation and Transceiving Chain, IQ Mixer, Integrated Circuit, Sensor and Device", priority to Chinese Patent Application No. 202311870043.0 filed to the CNIPA on December 29, 2023, and entitled "Target Detection Method, Electronic Device and Storage Medium", and priority to Chinese Patent Application No. 202410586691.1 filed to the CNIPA on May 11, 2024, and entitled "Processing Method for Receiving Leakage of FMCW, User Terminal Device and Storage Medium", and contents of the above-identified applications should be understood as being incorporated herein by reference.

Technical Field

The present application relates to, but is not limited to, radar technology, in particular to a signal processing method, a signal processing chain, a target detection method, and an electronic device.

Background

In order to improve measurement accuracy of Radar, Frequency Modulated Continuous Wave (FMCW) Radar systems usually use multi-antenna transceiving technology. Under multi-antenna technology, in order to achieve better isolation between transceiving antennas, it is increasingly difficult to design a same antenna feeding path length for different transceiving antennas.

Unequal (disparity in) feeding path lengths of antenna may solve the aforementioned antenna design problems. Unequal feeding path lengths of antennas (variations in the lengths of the feed lines associated with the receiving antennas) may achieve better chain budget, simpler antenna design and routing, lower inter-antenna coupling, better target Direction of Angle (DOA) performance, smaller modules and lower costs. However, a difference in feeding path lengths of antennas between transceiving channels will inevitably lead to a problem of relative time delay of different receiving channels, that is, due to inconsistent feeding path lengths of transceiving antennas, a quality of a transceived signal will be reduced, resulting in poor transceiving performance.

Summary

In order to solve the above technical problems, an embodiment of the present application provides a signal processing method applicable to an FMCW radar having at least two receiving channels with unequal path lengths. The at least two receiving channels include a reference receiving channel and at least one additional receiving channel having a path length difference relative to the reference receiving channel. For any one of the receiving channels, the method includes steps of: processing an echo signal received by the receiving channel to obtain a digital baseband signal; and compensating the digital baseband signal obtained after the processing based on the path length difference of the receiving channel relative to the reference receiving channel and frequency information pertaining to a transmitted signal corresponding to the received echo signal.

An embodiment of the present application provides a computer-readable storage medium having computer-executable instructions stored therein, the computer-executable instructions being used for implementing the signal processing method according to any one of embodiments of the present application.

An embodiment of the present application provides a device for implementing signal processing, which may include a memory and a processor. The memory stores following instructions executable by the processor: instructions for executing steps of the signal processing method according to any one of embodiments of the present application.

An embodiment of the present application further provides a signal processing chain applicable to an FMCW radar having at least two receiving channels with unequal path lengths, including: a processing module, and a compensation module. The processing module is configured to process, for any receiving channel, an echo signal received by the receiving channel to obtain a digital baseband signal; and the at least two receiving channels include a reference receiving channel and at least one additional receiving channel having a path length difference relative to the

EP 4 535 673 A1

reference receiving channel. The compensation module is configured to compensate the digital baseband signal obtained after the processing based on the path length difference of the receiving channel relative to the reference receiving channel and frequency information pertaining to a transmitted signal corresponding to the received echo signal.

An embodiment of the present application provides a signal processing chain, including a waveform generator and a plurality of transmitter channels connected to the waveform generator. At least two of the transmitter channels have different signal transmission delays, and at least one of the transmitter channels includes a direct digital frequency synthesizer.

The direct digital frequency synthesizer is configured to generate a compensation signal according to a time delay difference between a signal transmission delay of a corresponding transmitter channel and a reference transmission delay, and to compensate a transmitted signal of the corresponding transmitter channel using the compensation signal.

An embodiment of the present application provides another signal processing method applied to an antenna array of an electromagnetic wave component having at least two signal transmitter chains, the signal transmitter chains being phase-shifters including a digital phase-shift architecture, a signal transmission method including: determining a reference transmission delay and a time delay difference between a signal transmission delay of each of transmitter channels and the reference transmission delay; generating a compensation signal corresponding to each of the transmitter channels according to the time delay difference; and compensating a transmitted signal of a corresponding transmitter channel using the compensation signal.

An embodiment of the present application provides a signal processing chain, including: a signal transmitter chain and a signal receiver chain. The signal transmitter chain includes a plurality of transmitter channels implemented based on an analog circuit, each of the transmitter channels includes a respective transmitting antenna, at least two of the transmitter channels have different signal transmission delays, and the plurality of the transmitting antennas transmit electromagnetic wave signals in a time division multiplexing mode. The signal receiver chain includes at least one receiving channel, and the receiving channel includes a signal compensator implemented using a digital phase-shift architecture. The signal compensator is configured to determine a transmitter channel corresponding to a currently received echo signal, generate a compensation signal according to a time delay difference between a signal transmission delay of a corresponding transmitter channel and a reference transmission delay, and compensate the currently received echo signal using the compensation signal.

An embodiment of the present application provides still another signal processing method applied to an antenna array of an electromagnetic wave component having at least two signal transmitter chains, a signal transceiving method including: determining a reference transmission delay and a time delay difference between a signal transmission delay of each of transmitter channels and the reference transmission delay; generating a compensation signal corresponding to each of the transmitter channels according to the time delay difference; and determining a transmitter channel corresponding to a currently received echo signal, and compensating an intermediate frequency phase difference and/or frequency difference of the currently received echo signal using the corresponding compensation signal.

An embodiment of the present application provides a target detection method applied to a DDM radar sensor having at least one transceiving channel, the method including: processing an echo signal received by a receiving channel by range-dimensional Fourier transform to obtain range-dimensional FFT data, and performing phase-shift compensation on the range-dimensional FFT data by using a phase-shift error coefficient of a transmitter channel to obtain range-dimensional FFT compensation data; processing the range-dimensional FFT compensation data through Doppler-dimensional Fourier transform to obtain Doppler-dimensional FFT data; and determining velocity information of a target object based on the Doppler-dimensional FFT data.

An embodiment of the present application provides still another signal processing chain, including a transmitter chain for transmitting an electromagnetic wave signal and a receiver chain for receiving an echo signal formed based on an electromagnetic wave signal. The transmitter chain includes an analog signal source and a digital phase-shifter. The analog signal source may be configured to provide an initial analog signal, and the digital phase-shifter may be configured to generate a digital phase-shifted signal and phase-shift the initial analog signal based on the digital phase-shifted signal to perform a preset phase-shifting operation on the initial analog signal. The receiver chain includes an analog-to-digital converter and a digital baseband processing module. The analog-to-digital converter may be configured to perform analog-to-digital conversion on the received echo signal to obtain a digital baseband signal, and the digital baseband processing module may be configured to sequentially perform range-dimensional Fourier transform and velocity-dimensional Fourier transform on the digital baseband signal. The digital baseband processing module includes a phase-shift compensation unit, which may be configured to use a phase-shift error coefficient of the digital phase-shifter in the transmitter chain to perform phase-shift compensation on range-dimensional FFT data obtained by range-dimensional Fourier transform. The digital baseband processing module may be configured to perform velocity-dimensional Fourier transform according to the compensated range-dimensional FFT data.

An embodiment of the present application provides a processing method for receiving leakage in an FMCW, including following steps: processing, in a target-free scenario, a received signal through range-dimensional Fourier transform to obtain range-dimensional FFT data, and extracting, for each chirp signal in the range-dimensional FFT data, first k data in the chirp signal ordered from low to high in frequency; obtaining, for each data belonging to a same order among the first k data of each group extracted from different chirp signals, a leakage value of the order, among the first k data of each group, data belonging to the same order having a same corresponding frequency; and subtracting, when performing target detection, data of a corresponding order of each chirp signal in the range-dimensional FFT data generated by a currently received signal, by using a leakage value of respective order, to realize leakage elimination of the received signal.

An embodiment of the present application provides another processing method for receiving leakage in an FMCW, including following steps: processing, in a target-free scenario, a received signal through range-dimensional Fourier transform to obtain range-dimensional FFT data, and extracting, for each chirp signal in the range-dimensional FFT data, first k data in the chirp signal; and obtaining, for each data belonging to a same order among the first k data of each group extracted from different chirp signals, a leakage value of the order, among the first k data of each group, data belonging to the same order having a same corresponding frequency.

An embodiment of the present application provides still another processing method for receiving leakage in an FMCW, including following steps: processing, in a target-free scenario, a received signal through range-dimensional Fourier transform to obtain range-dimensional FFT data; and using, for a plurality of predetermined range bins, an average value between different chirp signals as a first leakage value for each predetermined range bin based on a frame of the range-dimensional FFT data.

An embodiment of the present application provides yet another processing method for receiving leakage in an FMCW, including following steps: retrieving a leakage value of each order in a plurality of data in a chirp signal ordered from low to high in frequency from pre-stored data obtained based on range-dimensional transform; and subtracting, when performing target detection, the plurality of data in each chirp signal ordered from low to high in frequency in range-dimensional FFT data generated by a currently received signal, based on the retrieved leakage values of each order, to realize leakage elimination of the received signal.

An embodiment of the present application provides a signal processing chain applied to an electromagnetic wave sensor. A transmitter chain includes an analog signal source and a digital phase-shifter. The analog signal source is configured to provide an initial analog signal, and the digital phase-shifter is configured to provide a phase-shifted signal generated in a digital domain and phase-shift the initial analog signal based on the phase-shifted signal to perform a preset phase-shifting operation on the initial analog signal.

An embodiment of the present application provides another signal processing chain, including a signal transmitter chain and a signal receiver chain according to any one of the above embodiments. The signal receiver chain includes a real mixer, a real analog-to-digital converter and a digital signal processing module. The real mixer is configured to down-convert a received echo signal based on a received local oscillator signal to obtain an analog intermediate frequency signal, and the echo signal is a signal formed by a signal transmitted by a signal transmitter chain being reflected and/or scattered by a target object. The real analog-to-digital converter is configured to perform analog-to-digital conversion on a received intermediate frequency signal to obtain a digital intermediate frequency signal. The digital signal processing module is configured to process the digital intermediate frequency signal to obtain a target parameter.

An embodiment of the present application provides a signal calibration chain, including another signal processing chain described above. A receiving antenna connection port of a signal receiver chain in the signal processing chain is connected to a transmitting antenna connection port of a signal transmitter chain in the signal processing chain; and the signal receiver chain is further configured to calibrate the signal transmitter chain.

An embodiment of the present application provides another signal calibration chain, including another signal processing chain described above, and a BIST module. A receiving antenna connection port of a signal receiver chain in the signal processing chain is connected to a transmitting antenna connection port of a signal transmitter chain in the signal processing chain through the BIST module; and the signal receiver chain of the signal processing chain is further configured to calibrate the signal transmitter chain.

An embodiment of the present application provides yet another signal calibration chain, including two signal receiver chains, a BIST module, an auxiliary circuit unit, and a signal processing chain according to any one of above embodiments. Each of the signal receiver chains includes a real mixer, a real analog-to-digital converter and a digital signal processing module. The real mixer is configured to down-convert a received echo signal based on a received local oscillator signal to obtain an analog intermediate frequency signal, and the echo signal is a signal formed by a signal transmitted by a signal transmitter chain being reflected and/or scattered by a target object. The real analog-to-digital converter is configured to perform analog-to-digital conversion on a received intermediate frequency signal to obtain a digital intermediate frequency signal. The digital signal processing module is configured to process the digital intermediate frequency signal to obtain a target parameter. receiving antenna connection ports of the two signal receiver chains are respectively connected to a transmitting antenna connection port of the signal processing chain through the auxiliary circuit unit and the BIST module in sequence, and the signal receiver chains are configured to calibrate an intermediate frequency portion of the signal transmitter chain.

An embodiment of the present application provides a signal compensation chain, including a signal processing chain according to any one of the above embodiments, and a compensation module. The compensation module is configured to compensate for at least one of an IQ mismatch, an IQ imbalance, a signal leakage, and a harmonic distortion defect of the signal processing chain.

An embodiment of the present application provides a compensation method for an unequal feeding path length, which is applied to an antenna array of an electromagnetic wave sensor having at least two signal chains, the method including: taking a shorter feeding line in the at least two signal chains as a reference chain, and obtaining a time delay difference between each of rest of transmitter chains and the reference chain; and compensating for the unequal feeding path length of the antenna array in a digital domain based on the time delay difference.

An embodiment of the present application provides a signal calibration system applied to an electromagnetic wave sensor. The signal calibration system includes a signal transmitter chain and an auxiliary chain. The auxiliary chain is integrated in the electromagnetic wave sensor adjacent to the signal transmitter chain, and the auxiliary chain is configured to perform real-time calibration on the signal transmitter chain.

An embodiment of the present application provides an IQ mixer, including an I-branch mixing unit, a Q-branch mixing unit, and a transformer unit. The I-branch frequency mixing unit is configured to output an I-branch signal, the Q-branch mixing unit is configured to output a Q-branch signal, and the transformer unit is configured to magnetically couple the I-path signal and the Q-path signal to synthesize an IQ-mixed output signal.

An embodiment of the present application provides an integrated circuit, which may include a signal transceiving channel for transmitting a radio signal and receiving an echo signal formed by reflection of the radio signal by a target; and a signal processing chain according to any one of the embodiments of the present application for compensating a digital baseband signal obtained after processing; and/or a signal calibration and/or compensation chain according to any one of the embodiments of the present application, for calibrating and/or compensating a signal receiving/transmitter chain.

An embodiment of the present application further provides a wireless communication device, which may include a carrier; an integrated circuit according to any one of the embodiments of the present application, which is mounted on the carrier; and an antenna mounted on the carrier for transceiving a radio signal.

An embodiment of the present application provides a terminal device, which may include a device body; and a wireless communication device according to any one of the embodiments of the present application, which is mounted on the device body for object detection and/or communication.

Other features and advantages of the present application will be set forth in the description which follows, and in part will be obvious from the description, or may be learned by practice of the present application. Purposes and other advantages of the present application may be achieved and acquired by the structures particularly pointed out in the description, claims and drawings.

Brief Description of Drawings

Accompanying drawings are used to provide a further understanding of technical solutions of the present application, and constitute a part of the specification. They are used together with the embodiments of the present application to explain the technical solutions of the present application, and do not constitute a restriction on the technical solutions of the present application.

FIG. 1 is a schematic diagram of a transceiving chain according to an embodiment of the present application.
FIG. 2 is a schematic diagram of antenna feeding lines in a multi-receiving antenna according to an embodiment of the present application.
FIG. 3 is a schematic flowchart of a signal processing method according to an embodiment of the present application.
FIG. 4 is a schematic flowchart of an embodiment of a received signal compensation method according to an embodiment of the present application.
FIG. 5 is a schematic diagram of a composition structure of a signal processing chain according to an embodiment of the present application.
FIG. 6 is a schematic diagram of a composition structure of an embodiment of a received signal compensation device according to an embodiment of the present application.
FIG. 7 is a schematic diagram of a first circuit embodiment of a compensation module according to an embodiment of the present application.
FIG. 8 is a schematic diagram of a second circuit embodiment of a compensation module according to an embodiment of the present application.
FIG. 9 is a schematic structural diagram of a signal transmitter chain according to an embodiment of the present application.
FIG. 10 is a schematic diagram of an FMCW transmitted signal modulated by a sawtooth wave.
FIGS. 11A and 11B are schematic diagrams of FMCW transmitted signals and echo signals thereof of two different transmitting antennas.

FIG. 12A is a schematic structural diagram of a transmitter channel according to an embodiment of the present application.

FIG. 12B is a simplified schematic diagram of a signal transmitter chain of a digital phase-shifter architecture according to an embodiment of the present application.

FIG. 12C is a schematic diagram based on the digital phase-shifter architecture of a signal transmitter chain shown in FIG. 4B.

FIG. 12D is a schematic diagram of a transmitter chain including a specific compensation module according to an embodiment of the present application.

FIG. 12E is a schematic diagram of calibrating and compensating a transmitter chain using an auxiliary receiving circuit according to an embodiment of the present application.

FIG. 13 is a schematic flowchart of another signal processing method according to an embodiment of the present application.

FIG. 14A is a schematic structural diagram of another signal transmitter chain according to an embodiment of the present application.

FIG. 14B is a schematic structural diagram of another signal receiver chain according to an embodiment of the present application.

FIG. 15A is a schematic diagram of an FMCW transmitted signal modulated by a sawtooth wave.

FIG. 15B is a schematic diagram of a signal for two transmitting antennas and four receiving antennas.

FIG. 16 is a schematic structural diagram of one receiving channel according to an embodiment of the present application.

FIG. 17 is a schematic flowchart of another signal processing method according to an embodiment of the present application.

FIG. 18 is a schematic flowchart of a target detection method according to an embodiment of the present application.

FIG. 19A is a schematic diagram of chirp step phase modulation of a transmitting antenna according to an embodiment of the present application.

FIG. 19B is a 2D FFT plan view corresponding to FIG. 19A.

FIG. 20A is a schematic diagram of a process of performing range-dimensional FFT processing for a single receiving channel according to an embodiment of the present application.

FIG. 20B is a plan view of 1D FFT data obtained by the process of FIG. 20A.

FIG. 21A is a first schematic diagram of a process of performing phase-shift compensation on 1D FFT data of an M-th range gate according to an embodiment of the present application.

FIG. 21B is a second schematic diagram of a process of performing phase-shift compensation on 1D FFT data of an M-th range gate according to an embodiment of the present application.

FIG. 22 is a schematic diagram of a process of multi-receiving channel merging detection and virtual array synthesis angle calculation according to an embodiment of the present application.

FIG. 23 is a schematic structural diagram of an integrated circuit according to an embodiment of the present application.

FIG. 24 is a schematic diagram of a model signal of LO leakage according to an embodiment of the present application.

FIG. 25 is a first flowchart of a processing method for receiving leakage of an FMCW according to an embodiment of the present application.

FIG. 26 is a second flowchart of a processing method for receiving leakage of an FMCW according to an embodiment of the present application.

FIG. 27 is a third flowchart of a processing method for receiving leakage of an FMCW according to an embodiment of the present application.

FIG. 28 is a fourth flowchart of a processing method for receiving leakage of an FMCW according to an embodiment of the present application.

FIG. 29 is a simplified schematic diagram of a signal processing chain of an analog phase-shifter architecture.

FIG. 30 is a simplified schematic diagram of an analog phase-shifter in the signal processing chain shown in FIG. 29.

FIG. 31 is a schematic diagram of a transceiving chain including a TX IQ Mod, an RX IQ De-Mod, and an LO Freq Diff according to an embodiment of the present application.

FIG. 32 is a schematic diagram of a transceiving chain combined with a BIST based on the structure shown in FIG. 7 according to an embodiment of the present application.

FIG. 33 is a schematic diagram of a transceiving chain including a TX IQ Mod, a BIST IQ Mod, and an RX IQ De-Mod according to an embodiment of the present application.

FIG. 34 is a schematic diagram of a transceiving chain including an auxiliary circuit and a BIST IQ Mod according to an embodiment of the present application.

FIG. 35 is a schematic diagram of another transceiving chain including an auxiliary circuit and a BIST IQ Mod according to an embodiment of the present application.

FIG. 36 is a schematic diagram of a digital pre-compensation HD3 architecture based on a cubic module according to an embodiment of the present application.

FIG. 37 is a schematic diagram of a digital pre-compensation HD3 architecture based on a frequency-multiplied waveform generator module according to an embodiment of the present application.

FIG. 38 is a schematic diagram of calibration and compensation of a transmitter chain based on a digital phase-shifter architecture according to an embodiment of the present application.

FIG. 39 is a schematic diagram of a transmitter chain having at least two transmitter channels according to an embodiment of the present application.

FIG. 40 is a schematic structural diagram of a digital LO signal generator according to an embodiment of the present application.

FIG. 41 is a schematic structural diagram of a compensation module for unequal feeding path lengths according to an embodiment of the present application.

FIG. 42 is a schematic diagram of calibrating and compensating a transceiving chain using an auxiliary circuit according to an embodiment of the present application.

FIG. 43 is a schematic diagram of calibrating and compensating a receiver chain using an auxiliary transmitting circuit according to an embodiment of the present application.

FIG. 44 is a schematic diagram of calibrating and compensating a transmitter chain using an auxiliary receiving circuit according to an embodiment of the present application.

FIG. 45 is a schematic structural diagram of an auxiliary circuit according to an embodiment of the present application.

FIG. 46 is a schematic structural diagram of another auxiliary circuit according to an embodiment of the present application.

FIG. 47 is a schematic diagram of a circuit module of an IQ Mixer according to an embodiment of the present application.

FIG. 48 is a schematic structural diagram of an IQ Mixer according to an embodiment of the present application.

FIG. 49 is a schematic diagram corresponding to the structure shown in FIG. 48.

FIG. 50 is a schematic diagram of a physical structure of another IQ Mixer according to an embodiment of the present application.

Detailed Description

In order to make purposes, technical solutions and advantages of the present application clearer, the embodiments of the present application will be described in detail below with reference to the accompanying drawings. It should be noted that the embodiments in the present application and features in the embodiments can be arbitrarily combined with each other if there is not conflict. In order to facilitate the understanding of the present application, the present application will be described more fully below with reference to the accompanying drawings. Embodiments of the present application are shown in the accompanying drawings. However, the present application may be implemented in many different forms and is not limited to the embodiments described herein. Rather, these embodiments are provided for the purpose of making the disclosure of the present application more thorough and comprehensive.

An electromagnetic wave of a transmitted signal emitted by a radar transmitting antenna is a high-frequency continuous wave, and its frequency changes with time. A waveform of the high frequency continuous wave may be a zigzag shape, a triangle shape, or the like. Taking the waveform of the high-frequency continuous wave as a sawtooth wave as an example, each sawtooth wave is called a chirp; a duration of each chirp signal is T, which is called a period; and a frequency of each chirp increases linearly with time. After a transmitted signal encounters a target, it will be reflected back by the target, and a reflected electromagnetic wave may be called an echo signal. A receiving antenna of a radar system may receive the echo signal, identify the received echo signal according to the transmitted signal, and mix the echo signal with the transmitted signal based on the mixer to obtain a difference frequency signal between the transmitted signal and the echo signal.

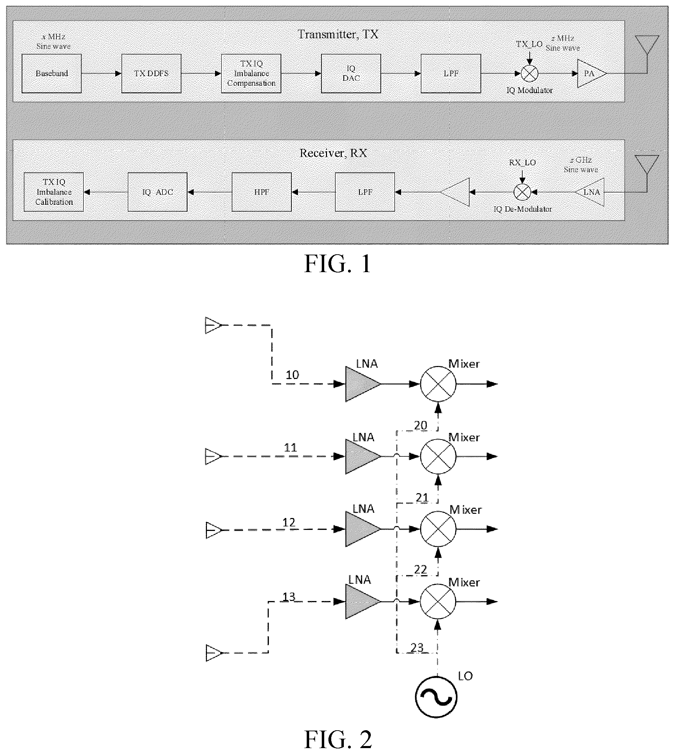

FIG. 1 is a schematic diagram of a transceiving chain according to an embodiment of the present application. As shown in FIG. 1, the transceiving chain may include a transmitter chain (TX, Transmitter), a receiver chain (RX, Receiver), and the like. The transmitter chain may include a digital Baseband signal source (Baseband), a direct digital frequency synthesizer (TX DDFS), a 10 IQ digital-to-analog converter (IQ DAC), a low-pass filter (LPF), an IQ Modulator (IQ), a Power Amplifier (PA), and the like, which are sequentially connected, and a signal amplified by the PA is radiated to a preset spatial area through a transmitting antenna. The receiver chain may include a Low Noise Amplifier (LNA), a Real Mixer, a Trans-Impedance Amplifier (TIA), a low-pass filter (LPF), a High-Pass Filter (HPF), a real analog-to-digital converter (Real ADC), and the like, which are sequentially connected, that is, an echo signal received by a receiving antenna is sequentially processed by the LNA, Real Mixer, TIA, LPF, HPF, and Real ADC above described, and then converted into a real digital baseband signal. A subsequent digital signal processing module processes the real digital baseband signal to obtain parameter information such as distance, velocity, angle, height and micro-motion characteristics of a target.

Optionally, in an embodiment of the present application, the receiver chain may include a receiving antenna, and the receiving antenna may be connected through a peripheral port of a chip, and formed on a carrier such as a PCB board. In some optional embodiments, the receiving antenna may also be integrated on a package of the chip to form an Antenna-in-Package (AiP) or an Antenna-on-Package (AoP), that is, a chip structure with a packaged antenna.

In order to improve radar measurement accuracy, multi-antenna reception technology is usually used. Different lengths from receiving antennas to respective LNAs (referred to as feeding path lengths of the receiving antennas in the present application) will cause a problem of relative time delay when a radio frequency signal passes through different receiving antennas. Moreover, since receiving antenna channels use a same local oscillator (LO), a length from the LO to a Mixer of each receiving channel (referred to as RXLO length in the present application) is different, which will cause a problem of relative time delay for different receiving channels. FIG. 2 is a schematic diagram of antenna feeding lines in a multi-receiving antenna according to an embodiment of the present application. In a receiving end shown in FIG. 2, dashed lines denoted by reference signs 10, 11, 12 and 13 respectively indicate lengths from different receiving antennas to LNAs, and dummy lines denoted by reference signs 20, 21, 22 and 23 respectively indicate lengths from the LO to different Mixers of respective receiving channels.

In order to eliminate the problem that different receiving channels inevitably cause relative time delay due to differences in path lengths between receiving channels, an embodiment of the present application provides a signal processing method, which may improve a quality of received signal by compensating the received signal, thereby improving reception performance.

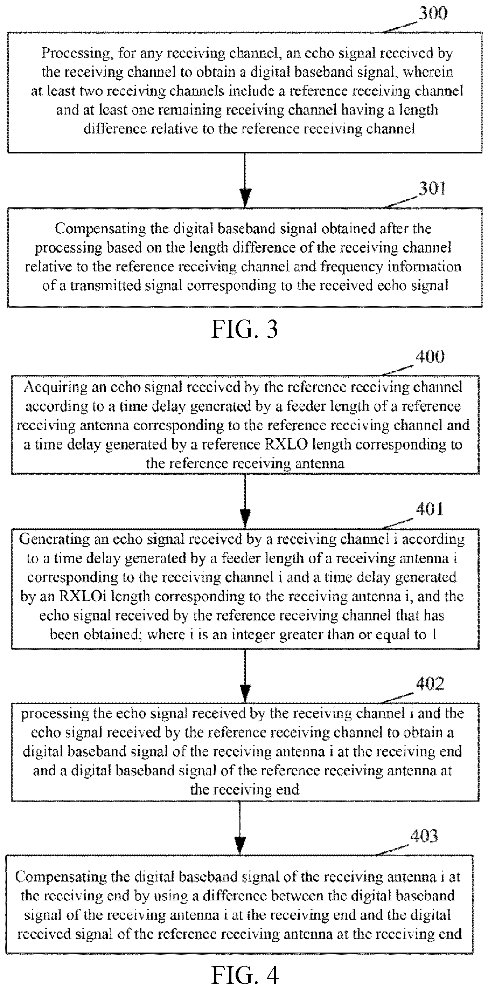

FIG. 3 is a schematic flowchart of a signal processing method according to an embodiment of the present application. The signal processing method according to the embodiment of the present application is applied to an FMCW radar having at least two receiving channels with unequal path lengths. The at least two receiving channels include a reference receiving channel and at least one additional receiving channel having a path length difference relative to the reference receiving channel. As shown in FIG. 3, the signal processing method includes Step 300 to Step 301.

Step 300: Processing, for any receiving channel, an echo signal received by the receiving channel to obtain a digital baseband signal.

In an exemplary embodiment, the processing on the echo signal received by the receiving channel in this step may include, but is not limited to, low-pass filtering, analog-to-digital conversion, and the like.

Step 301: Compensating the digital baseband signal obtained after the processing based on the path length difference of the receiving channel relative to the reference receiving channel and frequency information pertaining to a transmitted signal corresponding to the received echo signal.

In an exemplary embodiment, the frequency information pertaining to the transmitted signal corresponding to the received echo signal may include, but is not limited to, a bandwidth of frequency sweep, a period of frequency sweep, a center frequency of frequency sweep, and the like.

In an exemplary embodiment, the unequal path lengths may include unequal feeding path lengths of the receiving antennas and/or unequal RXLO lengths.

According to the signal processing method for compensating a received signal provided by the embodiment of the present application, for an FMCW radar having at least two receiving channels with unequal path lengths, compensation is performed in a digital domain for unequal receiving path lengths of digital baseband signals according to path length differences between the receiving channels, thereby eliminating the problem that different receiving channels inevitably generate relative time delay due to the path length differences between the receiving channels, improving the quality of the received signal, and thus improving the reception performance.

In an exemplary embodiment, in a case where the unequal path lengths include unequal feeding path lengths of the receiving antennas, the Step 301 may include: acquiring an echo signal received by the reference receiving channel according to a time delay produced by a feeding path length of a reference receiving antenna corresponding to the reference receiving channel; and processing the echo signal to obtain a digital baseband signal of the reference receiving antenna at a receiving end; generating an echo signal received by a receiving channel i according to a time delay produced by a feeding path length of a receiving antenna i corresponding to the receiving channel i and the obtained echo signal received by the reference receiving channel; and processing the echo signal to obtain a digital baseband signal of the receiving antenna i at the receiving end; and compensating the digital baseband signal of the receiving antenna i at the receiving end based on a difference between the digital baseband signal of the receiving antenna i at the receiving end and the digital baseband signal of the reference receiving antenna at the receiving end.

In an exemplary embodiment, in a case where the unequal path lengths include unequal RXLO lengths, the Step 301 includes: acquiring an echo signal received by the reference receiving channel according to a time delay produced by a reference RXLO length corresponding to the reference receiving antenna corresponding to the reference receiving channel; and processing the echo signal to obtain a digital baseband signal of the reference receiving antenna at a receiving end; generating an echo signal received by a receiving channel i according to a time delay produced by an $RXLO_i$ length corresponding to a receiving antenna i corresponding to the receiving channel i and the obtained echo signal received by the reference receiving channel; and processing the echo signal to obtain a digital baseband signal of the receiving antenna i at the receiving end; and compensating the digital baseband signal of the receiving antenna i at the receiving end based on a difference between the digital baseband signal of the receiving antenna i at the receiving end and the digital baseband signal of the reference receiving antenna at the receiving end.

In an exemplary embodiment, in a case where the unequal path lengths include unequal feeding path lengths of the receiving antennas and unequal RXLO lengths, the Step 301 includes: acquiring an echo signal received by the reference receiving channel according to a time delay produced by a feeding path length of a reference receiving antenna corresponding to the reference receiving channel and a time delay produced by a reference RXLO length corresponding to the reference receiving antenna; and processing the echo signal to obtain a digital baseband signal of the reference receiving antenna at a receiving end; generating an echo signal received by a receiving channel i according to a time delay produced by a feeding path length of a receiving antenna i corresponding to the receiving channel i and a time delay produced by an $RXLO_i$ length corresponding to the receiving antenna i, and the obtained echo signal received by the reference receiving channel; and processing the echo signal to obtain a digital baseband signal of the receiving antenna i at the receiving end; and compensating the digital baseband signal of the receiving antenna i at the receiving end based on a difference between the digital baseband signal of the receiving antenna i at the receiving end and the digital baseband signal of the reference receiving antenna at the receiving end.

FIG. 4 is a schematic flowchart of an embodiment of a received signal compensation method according to an embodiment of the present application, which is applied to an FMCW radar having at least two receiving channels with unequal path lengths. The at least two receiving channels include a reference receiving channel and at least one additional receiving channel i having a path length difference relative to the reference receiving channel, where i is an integer greater than or equal to 1. An antenna corresponding to the reference receiving channel is a reference receiving antenna, and an antenna corresponding to the receiving channel i is a receiving antenna i. In this embodiment, taking the unequal path lengths including unequal feeding path lengths of the receiving antennas and unequal RXLO lengths as an example, the method may include Step 400 to Step 403.

Step 400: Acquiring an echo signal received by the reference receiving channel according to a time delay produced by a feeding path length of a reference receiving antenna corresponding to the reference receiving channel and a time delay produced by a reference RXLO length corresponding to the reference receiving antenna.

In an exemplary embodiment, acquiring the echo signal received by the reference receiving channel includes: acquiring a first received signal $x1(t - \tau_{11})$ input from the reference receiving antenna through an LNA to a mixer on a receiving channel where the reference receiving antenna is located, and a second received signal $x1(t - \tau_{12})$ input through an LO to the mixer on the receiving channel where the reference receiving antenna is located; and performing correlation processing on the obtained first received signal $x1(t - \tau_{11})$ and second received signal $x1(t - \tau_{12})$ to obtain an echo signal $x1(t - \tau_{11}) x1^*(t - \tau_{12})$ received by the reference receiving channel, where $\tau_{11}$ represents a time delay caused by the feeding path length of the reference receiving antenna, and $\tau_{12}$ represents a time delay produced by the reference RXLO length corresponding to the reference receiving antenna.

If the problem of relative time delay produced when the radio frequency signal passes through different receiving antennas due to inconsistent feeding path lengths of the receiving antennas, and the problem of relative time delay produced by different receiving channels due to different RXLO lengths are not considered, the echo signal x1(t) received by each receiving channel at the receiving end is as shown in Formula (1):

$$x1(t) = \exp\left(j * \left(2\pi f_c t + \pi \frac{\beta}{T} t^2 + \theta\right)\right), 0 \leq t \leq T \quad (1)$$

In Formula (1), $\beta$ represents a bandwidth of frequency sweep, T represents a time when a frequency of a single chirp signal of the FMCW radar rises, $\theta$ represents an initial phase of the echo signal received by the antenna, and $f_c$ is a center frequency of a frequency sweep signal.

For the reference receiving antenna corresponding to the reference receiving channel, assuming that the time delay caused by the feeding path length F of the reference receiving antenna is $\tau_{11}$, then according to Formula (1), the first received signal $x1(t - \tau_{11})$ input from the reference receiving antenna through the LNA to the mixer on the receiving channel where the reference receiving antenna is located is as shown in Formula (2):

$$x1(t - \tau_{11}) = \exp\left(j * \left(2\pi f_c(t - \tau_{11}) + \pi \frac{\beta}{T}(t - \tau_{11})^2 + \theta\right)\right)$$

$$= x1(t)^* \exp\left(-j * \left(2\pi f_c \tau_{11} + \pi \frac{\beta}{T}(2\tau_{11}t - \tau_{11}^2)\right)\right) \quad (2)$$

Assuming that the time delay caused by the reference RXLO length corresponding to the reference receiving antenna is $\tau_{12}$, according to Formula (1), the second received signal $x1(t - \tau_{12})$ input through the LO to the mixer on the receiving channel where the reference receiving antenna is located is as shown in Formula (3):

$$x1(t - \tau_{12}) = \exp\left(j * \left(2\pi f_c(t - \tau_{12}) + \pi\frac{\beta}{T}(t - \tau_{12})^2 + \theta\right)\right)$$

$$= x1(t)*\exp\left(-j * \left(2\pi f_c\tau_{12} + \pi\frac{\beta}{T}(2\tau_{12}t - \tau_{12}^2)\right)\right) \quad (3)$$

According to the time delay produced by the feeding path length of the reference receiving antenna and the time delay produced by the reference RXLO length corresponding to the reference receiving antenna, the echo signal received by the reference receiving channel, after passing through the mixer, is $x1(t - \tau_{11}) \, x1^*(t - \tau_{12})$.

Step 401: Generating an echo signal received by a receiving channel i according to a time delay produced by a feeding path length of a receiving antenna i corresponding to the receiving channel i and a time delay produced by an $RXLO_i$ length corresponding to the receiving antenna i, and the obtained echo signal received by the reference receiving channel; where i is an integer greater than or equal to 1.

In an exemplary embodiment, generating the echo signal received by the receiving channel i includes: acquiring a third received signal $x1(t - \tau_{11} - \mu_{i11})$ input from the receiving antenna i through an LNA to a mixer on a receiving channel where the receiving antenna i is located, and a fourth received signal $x1(t - \tau_{12} - \mu_{i12})$ input through an LO to the mixer on the receiving channel where the receiving antenna is located; and performing correlation processing on the obtained third received signal $x1(t - \tau_{11} - \mu_{i11})$ and fourth received signal $x1(t - \tau_{12} - \mu_{i12})$ to obtain an echo signal $x1(t - \tau_{11} - \mu_{i11})x1^*(t - \tau_{12} - \mu_{i12})$ received by the receiving channel i, where $\mu_{i11}$ represents a time delay produced by the feeding path length of the receiving antenna i relative to the feeding path length of the reference receiving antenna, and $\mu_{i12}$ represents a time delay produced by the RXLO_i length corresponding to the receiving antenna i relative to the reference RXLO length.

For a certain receiving antenna i among multiple receiving antennas, assuming that a time delay of a feeding path length $F_i$ of the receiving antenna i relative to a feeding path length F of the reference receiving antenna is $\mu_{i11}$, and the time delay produced by the $RXLO_i$ length corresponding to the receiving antenna i relative to the reference RXLO length is $\mu_{i12}$, then, after a received signal passes through the Mixer on the receiving channel where the receiving antenna i is located, the echo signal $x1(t - \tau_{11} - \mu_{i11}) \, x1^*(t - \tau_{12} - \mu_{i12})$ received by the receiving channel i is as shown in Formula (4):

$$x1(t - \tau_{11} - \mu_{i11}) \, x1^*(t - \tau_{12} - \mu_{i12}) = x1(t - \tau_{11}) \quad x1^*(t - \tau_{12}) \quad * \quad \exp\left(-j * \left(2\pi f_c\mu_{i11} + \right.\right.$$

$$\left.\left.\pi\frac{\beta}{T}(2\mu_{i11}(t - \tau_{11}) - \mu_{i11}^2)\right)\right) * \exp\left(j * \left(2\pi f_c\mu_{i12} + \pi\frac{\beta}{T}(2\mu_{i12}(t - \tau_{12}) - \mu_{i12}^2)\right)\right) = x1(t - \tau_{11}) \quad x1^*(t - \tau_{12}) * \exp\left(-j * (2\pi f_c(\mu_{i11} - \mu_{i12}))\right) * \exp\left(+j * \left(2\pi\frac{\beta}{T}(\mu_{i11} - \mu_{i12})\tau_{12}\right)\right) * \exp\left(+j * \pi\frac{\beta}{T}(\mu_{i11}^2 - \mu_{i12}^2)\right)$$

$$*\exp\left(-j * \left(2\pi\frac{\beta}{T}(\mu_{i11} - \mu_{i12})t\right)\right) * \exp\left(+j * \left(2\pi\frac{\beta}{T}\mu_{i11}(\tau_{11} - \tau_{12})\right)\right) \quad (4)$$

In formula (4), $x1(t - \tau_{11}) \quad x1^*(t - \tau_{12}) * \exp\left(-j * (2\pi f_c(\mu_{i11} - \mu_{i12}))\right) * \exp\left(+j * \left(2\pi\frac{\beta}{T}(\mu_{i11} - \mu_{i12})\tau_{i12})\right)\right)$ represents an initial digital mixer phase within each chirp; $\exp\left(+j * \pi\frac{\beta}{T}(\mu_{i11}^2 - \mu_{i12}^2)\right)$ represents a digital mixer beat frequency compensation; and $\exp\left(-j * \left(2\pi\frac{\beta}{T}(\mu_{i11} - \mu_{i12})t\right)\right)$ represents a compensation for respective receiving antenna delay $\mu_{i11}$.

A relationship between the echo signal received by the reference receiving channel and the echo signal received by the receiving channel i due to the time delay may be deduced from Formula (4) as in Formula (5):

$$x1(t - \tau_{11})\ x1^*(t - \tau_{12}) = x1(t - \tau_{11} - \mu_{i11})\, x1^*(t - \tau_{12} - \mu_{i12}) * \exp\left(j * \left(2\pi f_c(\mu_{i11} - \mu_{i12})\right)\right) *$$

$$\exp\left(-j\left(2\pi\tfrac{\beta}{T}(\mu_{i11} - \mu_{i12})\tau_{12}\right)\right) * \exp\left(-j * \pi\tfrac{\beta}{T}\left(\mu_{i11}^2 - \mu_{i12}^2\right)\right) * \exp\left(j * \left(2\pi\tfrac{\beta}{T}(\mu_{i11} - \mu_{i12})t\right)\right) *$$

$$\exp\left(-j * \left(2\pi\tfrac{\beta}{T}\mu_{i11}(\tau_{11} - \tau_{12})\right)\right) \qquad (5)$$

Step 402: Processing the echo signal received by the receiving channel i and the echo signal received by the reference receiving channel to obtain a digital baseband signal of the receiving antenna i at the receiving end and a digital baseband signal of the reference receiving antenna at the receiving end.

In an exemplary embodiment, the processing on the received echo signal in this step may include, but is not limited to, low-pass filtering, analog-to-digital conversion, and the like.

Step 403: Compensating the digital baseband signal of the receiving antenna i at the receiving end based on a difference between the digital baseband signal of the receiving antenna i at the receiving end and the digital baseband signal of the reference receiving antenna at the receiving end.

In an exemplary embodiment, the digital baseband signal of the receiving antenna i at the receiving end may be compensated based on a bandwidth of frequency sweep, a chirp effective duration, and a time delay of a current receiving antenna relative to the reference receiving antenna. For convenience of description, an analog signal is still used for description here. According to Formula (5), $exp\left(j * \left(2\pi\tfrac{\beta}{T}(\mu_{i11} - \mu_{i12})t\right)\right)$, $0 \leq t \leq T$ may be used to perform frequency compensation on the digital baseband signal of the receiving antenna i at the receiving end.

According to the signal processing method for compensating a received signal provided by the embodiment of the present application, by performing frequency compensation on the received signal of the receiving antenna i at the receiving end, a partial influence of the time delay produced by the feeding path length of the receiving antenna i and the time delay produced by the RXLO$_i$ length corresponding to the receiving antenna i on the received signal of the receiving antenna i at the receiving end is eliminated, thereby improving the quality of the received signal and thus improving the reception performance.

In an exemplary embodiment, a signal processing method according to an embodiment of the present application may further include: performing a first phase compensation on the digital baseband signal of the receiving antenna i at the receiving end based on a difference between the digital baseband signal of the receiving antenna i at the receiving end and the digital baseband signal of the reference receiving antenna at the receiving end.

In an embodiment, the first phase compensation may be performed on the digital baseband signal of the receiving antenna i at the receiving end based on a bandwidth of frequency sweep, a chirp effective duration, a center frequency of a frequency sweep signal, and a time delay of a current receiving antenna relative to the reference receiving antenna. For the convenience of description, an analog signal is still used for description here. According to Formula (5),

$$exp\left(j * \left(2\pi f_c(\mu_{i11} - \mu_{1i2})\right)\right) * exp\left(-j * \left(2\pi\tfrac{\beta}{T}(\mu_{i11} - \mu_{i12})\tau_{12}\right)\right) * exp\left(-j * \pi\tfrac{\beta}{T}\left(\mu_{i11}^2 - \mu_{i12}^2\right)\right)$$, $0 \leq t \leq T$ may be used to perform the first phase compensation on the received signal of the receiving antenna i at the receiving end.

According to the signal processing method for compensating a received signal provided by the embodiment of the present application, by performing the first phase compensation on the received signal of the receiving antenna i at the receiving end, influence of the time delay produced by the feeding path length of the receiving antenna i and the time delay produced by the RXLO$_i$ length corresponding to the receiving antenna i on the received signal of the receiving antenna i at the receiving end is further eliminated, thereby further improving the quality of the received signal and thus improving the reception performance.

In an exemplary embodiment, a signal processing method according to an embodiment of the present application may further include, on the basis of performing frequency compensation, or on the basis of performing frequency compensation and the first phase compensation, performing a second phase compensation on the received signal of the receiving antenna i at the receiving end based on a difference between the received signal of the receiving antenna i at the receiving end and the received signal of the reference receiving antenna at the receiving end.

In an embodiment, the second phase compensation may be performed on the digital baseband signal of the receiving antenna i at the receiving end based on a bandwidth of frequency sweep, a chirp effective duration, a time delay produced by the reference receiving antenna, and a time delay of a current receiving antenna relative to the reference receiving antenna. For the convenience of description, an analog signal is still used for description here. According to Formula (5), $exp\left(-j * \left(2\pi\tfrac{\beta}{T}\mu_{i11}(\tau_{11} - \tau_{12})\right)\right)$, $0 \leq t \leq T$ may be used to perform the second phase compensation on the received signal of the receiving antenna i at the receiving end.

According to the signal processing method provided by the embodiment of the present application, by performing the second phase compensation on the received signal of the receiving antenna i at the receiving end, influence of the time delay produced by the feeding path length of the receiving antenna i and the time delay produced by the $\text{RXLO}_i$ length corresponding to the receiving antenna i on the received signal of the receiving antenna i at the receiving end is eliminated, thereby improving the quality of the received signal better and thus improving the reception performance.

In an exemplary embodiment, frequency compensation, a first phase compensation, and a second phase compensation are performed on the received signal of the receiving antenna i at the receiving end by using the difference between the digital baseband signal of the receiving antenna i at the receiving end and the digital baseband signal of the reference receiving antenna at the receiving end.

In an embodiment, for the convenience of description, an analog signal is still used for description here. According to Formula (5),

$$\exp\left(j * \left(2\pi f_c(\mu_{i11} - \mu_{i12})\right)\right) \ * \exp\left(-j\left(2\pi\frac{\beta}{T}(\mu_{i11} - \mu_{i12})\tau_{12}\right)\right) \ * \ \exp\left(-j *\right.$$

$$\left.\pi\frac{\beta}{T}(\mu_{i11}^2 - \mu_{i12}^2)\right) \ * \exp\left(j * \left(2\pi\frac{\beta}{T}(\mu_{i11} - \mu_{i12})t\right)\right) \ * \exp\left(-j * \left(2\pi\frac{\beta}{T}\mu_{i11}(\tau_{11} - \tau_{12})\right)\right)_{, \ 0 \le t \le T} \text{ may be}$$

used to compensate for the received signal of the receiving antenna i at the receiving end. According to the signal processing method provided by this embodiment, by performing compensation on the received signal of the receiving antenna i at the receiving end, influence of the time delay produced by the feeding path length of the receiving antenna i and the time delay produced by the $\text{RXLO}_i$ length corresponding to the receiving antenna i on the received signal of the receiving antenna i at the receiving end is effectively eliminated, thereby further improving the quality of the received signal and thus improving the reception performance.

In an embodiment, in actual use, information used for compensation, $\exp$ (j * (2πf_c(μ_{i11} - μ_{i12}))) *

$$\exp\left(-j\left(2\pi\frac{\beta}{T}(\mu_{i11} - \mu_{i12})\tau_{12}\right)\right) \ * \ \exp\left(-j * \pi\frac{\beta}{T}(\mu_{i11}^2 - \mu_{i12}^2)\right) \ * \exp\left(j * \left(2\pi\frac{\beta}{T}(\mu_{i11} - \mu_{i12})t\right)\right) \ *$$

$$\exp\left(-j * \left(2\pi\frac{\beta}{T}\mu_{i11}(\tau_{11} - \tau_{12})\right)\right)_{,} \quad \text{may} \quad \text{be} \quad \text{simplified} \quad \text{to:}$$

$$\exp(j * (2\pi f_c\mu_{i11}))\exp\left(j * \left(2\pi\frac{\beta}{T}\mu_{i11}t\right)\right) = \ \exp\left(j2\pi * \left(\frac{\beta}{T}\mu_{i11}t + f_c\mu_{i11}\right)\right).$$

The present application further provides a computer-readable storage medium having computer-executable instructions stored therein, wherein the computer-executable instructions are configured to implement the signal processing method according to any one of the above embodiments.

The present application further provides a device for implementing received signal compensation, including a memory and a processor. The memory stores the following instructions executable by the processor for executing the steps of the signal processing method described in any one of the above embodiments.

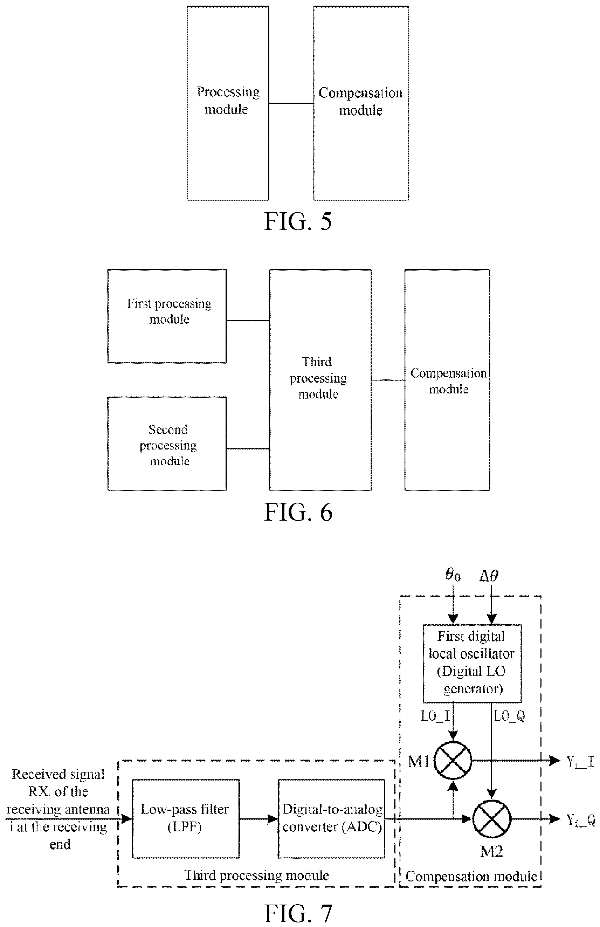

FIG. 5 is a schematic diagram of a composition structure of a signal processing chain according to an embodiment of the present application, which is applied to an FMCW radar having at least two receiving channels with unequal path lengths. As shown in FIG. 5, the signal processing chain includes a processing module and a compensation module. The processing module is configured to process, for any receiving channel, an echo signal received by the receiving channel to obtain a digital baseband signal. The at least two receiving channels include a reference receiving channel and at least one additional receiving channel having a path length difference relative to the reference receiving channel. The compensation module is configured to compensate the digital baseband signal obtained after the processing based on the path length difference of the receiving channel relative to the reference receiving channel and frequency information pertaining to a transmitted signal corresponding to the received echo signal. In an exemplary embodiment, the unequal path lengths may include unequal feeding path length of the receiving antennas and/or unequal RXLO lengths.

According to the signal processing chain provided by the embodiment of the present application, for an FMCW radar having at least two receiving channels with unequal path lengths, compensation is performed in a digital domain for unequal receiving path lengths of a digital baseband signal according to a path length difference between the receiving channels, which eliminates a problem that different receiving channels inevitably generate relative time delay due to path length differences between the receiving channels, thereby improving the quality of the received signal, and improving the reception performance.

In an exemplary embodiment, the unequal path lengths include unequal feeding path lengths of the receiving antennas; and the compensation module may be configured to: acquire an echo signal received by the reference receiving channel according to a time delay produced by a feeding path length of a reference receiving antenna corresponding to the reference receiving channel; and process the echo signal to obtain a digital baseband signal of the reference receiving antenna at a receiving end; generate an echo signal received by a receiving channel i according to a time delay produced by a feeding path length of a receiving antenna i corresponding to the receiving channel i and the obtained echo signal received by the reference receiving channel; and process the echo signal to obtain a digital baseband signal of the receiving antenna i at the receiving end; and compensate the digital baseband signal of the receiving antenna i at the receiving end based on a difference between the digital baseband signal of the receiving antenna i at the receiving end and the digital baseband signal of the reference receiving antenna at the receiving end.

In an exemplary embodiment, the unequal path lengths include unequal RXLO lengths; and the compensation module may be configured to: acquire an echo signal received by the reference receiving channel according to a time delay produced by a reference RXLO length corresponding to the reference receiving antenna corresponding to the reference receiving channel; and process the echo signal to obtain a digital baseband signal of the reference receiving antenna at a receiving end; generate an echo signal received by a receiving channel i according to a time delay produced by a $RXLO_i$ length corresponding to a receiving antenna i corresponding to the receiving channel i and the obtained echo signal received by the reference receiving channel; and process the echo signal to obtain a digital baseband signal of the receiving antenna i at the receiving end; and compensate the digital baseband signal of the receiving antenna i at the receiving end based on a difference between the digital baseband signal of the receiving antenna i at the receiving end and the digital baseband signal of the reference receiving antenna at the receiving end.

In an exemplary embodiment, the unequal path lengths include unequal feeding path lengths of the receiving antennas and unequal RXLO lengths; and the compensation module may be configured to: acquire an echo signal received by the reference receiving channel according to a time delay produced by a feeding path length of a reference receiving antenna corresponding to the reference receiving channel and a time delay produced by a reference RXLO length corresponding to the reference receiving antenna; and process the echo signal to obtain a digital baseband signal of the reference receiving antenna at a receiving end; generate an echo signal received by a receiving channel i according to a time delay produced by a feeding path length of a receiving antenna i corresponding to the receiving channel i and a time delay produced by an $RXLO_i$ length corresponding to the receiving antenna i, and the obtained echo signal received by the reference receiving channel; and process the echo signal to obtain a digital baseband signal of the receiving antenna i at the receiving end; and compensate the digital baseband signal of the receiving antenna i at the receiving end based on a difference between the digital baseband signal of the receiving antenna i at the receiving end and the digital baseband signal of the reference receiving antenna at the receiving end. In an exemplary embodiment, the processing module may be further configured to perform low-pass filtering on the echo signal received by the receiving channel to convert the signal subjected to the low-pass filtering into a digital baseband signal.

FIG. 6 is a schematic diagram of a composition structure of an embodiment of a signal processing chain according to an embodiment of the present application. As shown in FIG. 6, the signal processing chain may include a first processing module, a second processing module, a third processing module, and a compensation module. The first processing module is configured to acquire an echo signal received by the reference receiving channel according to a time delay produced by a feeding path length of a reference receiving antenna corresponding to the reference receiving channel and a time delay produced by a reference RXLO length corresponding to the reference receiving antenna. The second processing module is configured to generate an echo signal received by a receiving channel i according to a time delay produced by a feeding path length of a receiving antenna i corresponding to the receiving channel i and a time delay produced by an $RXLO_i$ length corresponding to the receiving antenna i, and the obtained echo signal received by the reference receiving channel. The third processing module is configured to process the echo signal received by the receiving channel i and the echo signal received by the reference receiving channel to obtain a digital baseband signal of the receiving antenna i at the receiving end and a digital baseband signal of the reference receiving antenna at the receiving end. The compensation module is configured to compensate the digital baseband signal of the receiving antenna i at the receiving end based on a difference between the digital baseband signal of the receiving antenna i at the receiving end and the digital baseband signal of the reference receiving antenna at the receiving end.

In an exemplary embodiment, for the convenience of description, an analog signal is still used for description here. The compensation module may be configured to: use $\exp\left(j * \left(2\pi\frac{\beta}{T}(\mu_{i11} - \mu_{i12})t\right)\right)$, $0 \leq t \leq T$, to perform frequency compensation on the digital baseband signal of the receiving antenna i at the receiving end; where $\beta$ represents a bandwidth of frequency sweep, T represents a time when a frequency of a single chirp signal of the FMCW radar rises, $\mu_{i11}$ represents a time delay produced by the feeding path length of the receiving antenna i relative to the feeding path length of the reference receiving antenna, and $\mu_{i12}$ represents a time delay produced by an $RXLO_i$ length corresponding to the receiving antenna i relative to the reference RXLO length.

In an exemplary embodiment, the compensation module may compensate for the digital baseband signal obtained after the processing by using a signal processing method according to any one of the embodiments of the present application. In an exemplary embodiment, the compensation module may be further configured to perform a first phase compensation on the digital baseband signal of the receiving antenna i at the receiving end based on a difference between the digital baseband signal of the receiving antenna i at the receiving end and the digital baseband signal of the reference receiving antenna at the receiving end.

In an embodiment, for the convenience of description, an analog signal is still used for description here. The compensation module may use

$$exp\left(j * \left(2\pi f_c(\mu_{i11} - \mu_{i12})\right)\right) * exp\left(-j * \left(2\pi\frac{\beta}{T}(\mu_{i11} - \mu_{i12})\tau_{12}\right)\right) * exp\left(-j * \left(\mu_{i11}^2 - \mu_{i12}^2\right)\right)$$

and $0 \leq t \leq T$ to perform a first phase compensation on the received signal of the receiving antenna i at the receiving end, where $f_c$ is a center frequency of a frequency sweep signal, and $\tau_{12}$ represents a time delay produced by a reference RXLO length corresponding to the reference receiving antenna.

According to the signal processing chain provided by the embodiment of the present application, by performing the first phase compensation on the received signal of the receiving antenna i at the receiving end, influence of the time delay produced by the feeding path length of the receiving antenna i and the time delay produced by the $RXLO_i$ length corresponding to the receiving antenna i on the received signal of the receiving antenna i at the receiving end is further eliminated, thereby further improving the quality of the received signal and thus improving the reception performance.

In an exemplary embodiment, the compensation module may be further configured to perform a second phase compensation on the digital baseband signal of the receiving antenna i at the receiving end based on a difference between the digital baseband signal of the receiving antenna i at the receiving end and the digital baseband signal of the reference receiving antenna at the receiving end.

In an embodiment, for the convenience of description, an analog signal is still used for description here. The

$$exp\left(-j * \left(2\pi\frac{\beta}{T}\mu_{i11}(\tau_{11} - \tau_{12})\right)\right)$$

compensation module may use , $0 \leq t \leq T$ to perform a second phase compensation on the received signal of the receiving antenna i at the receiving end, where $\tau_{11}$ represents a time delay produced by the feeding path length of the reference receiving antenna.

According to the signal processing chain provided by the embodiment of the present application, by performing the second phase compensation on the received signal of the receiving antenna i at the receiving end, influence of the time delay produced by the feeding path length of the receiving antenna i and the time delay produced by the $RXLO_i$ length corresponding to the receiving antenna i on the received signal of the receiving antenna i at the receiving end is eliminated, thereby improving the quality of the received signal better and thus improving the reception performance.

In an exemplary embodiment, the compensation module is configured to compensate for the digital baseband signal of the receiving antenna i at the receiving end based on a difference between the digital baseband signal of the receiving antenna i at the receiving end and the digital baseband signal of the reference receiving antenna at the receiving end. In an embodiment, the compensation may be performed on the digital baseband signal of the receiving antenna i at the receiving end based on a bandwidth of frequency sweep, a chirp effective duration, a center frequency of a frequency sweep signal, and a time delay of a current receiving antenna relative to the reference receiving antenna. For the convenience of description, an analog signal is still used for description here. The compensation module may use (j *

$$(2\pi f_c\mu_{i11}))exp(j * \left(2\pi\frac{\beta}{T}\mu_{i11}t\right)) = exp\left(j2\pi * \left(\frac{\beta}{T}\mu_{i11}t + f_c\mu_{i11}\right)\right)$$

, $0 \leq t \leq T$ to compensate for the received signal of the receiving antenna i at the receiving end.

FIG. 7 is a schematic diagram of a first circuit embodiment of a compensation module according to an embodiment of the present application. As shown in FIG. 7, before performing compensation on the received signal of the receiving antenna i at the receiving end, a received signal $RX_i$ of the receiving antenna i at the receiving end may be preprocessed in one channel by a third processing module. For example, after being processed by a low-pass filter (LPF) and a digital-to-analog converter (ADC), a preprocessed digital baseband signal of the receiving antenna i at the receiving end is obtained, which is expressed as $\cos(\omega t + \varphi)$, and $\cos(\omega t + \varphi)$ is input to the compensation module.

In the first circuit embodiment shown in FIG. 7, in information

$$exp\left(j2\pi * \left(\frac{\beta}{T}\mu_{11}t + f_c\mu_{11}\right)\right)$$

used for compensation, $\frac{\beta}{T}\mu_{11}$ is $\theta_0$, and $f_c\mu_{11}$ is $\Delta\theta$. The information

$$\left(j2\pi * \left(\frac{\beta}{T}\mu_{11}t + f_c\mu_{11}\right)\right)$$

used for compensation may be expressed as $exp(j(\omega_0 t + \varphi_0)) = \cos(\omega_0 t + \varphi_0) + j\sin(\omega_0 t + \varphi_0)$. In the first circuit embodiment, as shown in FIG. 7, the compensation module may include a first multiplier M1, a second multiplier M2, and a first digital local oscillator (Digital LO generator). An input to the first digital local oscillator includes $\theta_0$ and $\Delta\theta$ which are information used for compensation, another output LO_I of the first digital local oscillator is LO_I = $\cos(\omega_0 t + \varphi_0)$, and an output LO_Q of the first digital local oscillator is LO_Q = $\sin(\omega_0 t + \varphi_0)$. One input of the first multiplier M1 is a preprocessed digital baseband signal $\cos(\omega t + \varphi)$ of the receiving antenna i at the receiving end, the other input of the first multiplier M1 is the output LO_I of the first digital local oscillator, and an output of the first multiplier M1 is a real part $Y_{i\_}I$ of a compensated received signal of the receiving antenna i. One input of the second multiplier M2 is a preprocessed received signal $\cos(\omega t + \varphi)$ of the receiving antenna i at the receiving end, the other input of the second multiplier M2 is the output LO_Q of the first digital local oscillator, and an output of the second multiplier M2 is an imaginary part $Y_{i\_Q}$ of the compensated received signal of the receiving antenna i. The compensated received signal of the receiving antenna i may be expressed as $\cos(\omega t + \varphi)\exp(j(\omega_0 t + \varphi_0))$.

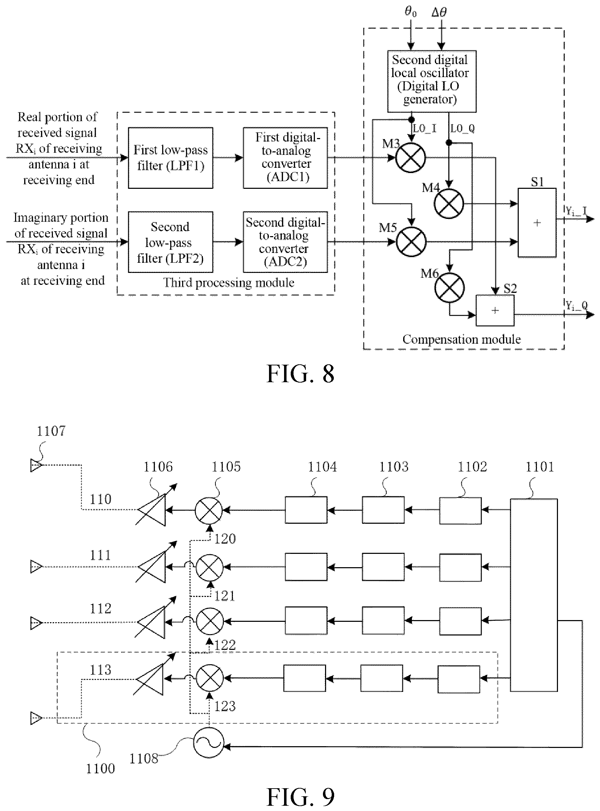

FIG. 8 is a schematic diagram of a second circuit embodiment of a compensation module according to an embodiment of the present application. As shown in FIG. 8, before performing compensation on the received signal of the receiving antenna i at the receiving end, a real part and an imaginary part of the received signal $RX_i$ of the receiving antenna i at the receiving end may be respectively preprocessed by a third processing module. For example: a real part of the preprocessed digital baseband signal $RX_i$ of the receiving antenna i at the receiving end is obtained after being processed by a first LPF and a first ADC, which is expressed as $\cos(\omega t + \varphi)$; and an imaginary part of the preprocessed digital baseband signal $RX_i$ of the receiving antenna i at the receiving end is obtained after being processed by a second LPF and a second ADC, which is expressed as $\sin(\omega t + \varphi)$; $\cos(\omega t + \varphi)$ and $\sin(\omega t + \varphi)$ are respectively input to the compensation module.

In the second circuit embodiment shown in FIG. 8, in information $\exp\left(j2\pi * \left(\frac{\beta}{T}\mu_{11}t + f_c\mu_{11}\right)\right)$ used for compensation, $\frac{\beta}{T}\mu_{11}$ is $\theta_0$, and $f_c\mu_{11}$ is $\Delta\theta$. The information $\exp\left(j2\pi * \left(\frac{\beta}{T}\mu_{11}t + f_c\mu_{11}\right)\right)$ used for compensation may be expressed as $\exp(j(\omega_0 t + \varphi_0)) = \cos(\omega_0 t + \varphi_0) + j\sin(\omega_0 t + \varphi_0)$. In the second circuit embodiment, as shown in FIG. 6, the compensation module may include a third multiplier M3, a fourth multiplier M4, a fifth multiplier M5, a sixth multiplier M6, a first adder S1, a second adder S2, and a second digital local oscillator. An input of the second digital local oscillator includes $\theta_0$ and $\Delta\theta$ which are information used for compensation, an output LO_I of the second digital local oscillator is LO_I = $\cos(\omega_0 t + \varphi_0)$, and another output LO_Q of the second digital local oscillator is LO_Q = $\sin(\omega_0 t + \varphi_0)$. One input of the third multiplier M3 is a real part $\cos(\omega t + \varphi)$ of the preprocessed received signal of the receiving antenna i at the receiving end, the other input of the third multiplier M3 is the output LO_I of the second digital local oscillator, and an output of the third multiplier M3 is connected to an input of the second adder. An input of the fourth multiplier M4 is the output LO_Q of the second digital local oscillator, and an output of the fourth multiplier M4 is connected to an input to the first adder. One input of the fifth multiplier M5 is an imaginary part $\sin(\omega t + \varphi)$ of the preprocessed received signal of the receiving antenna i at the receiving end, the other input of the fifth multiplier M5 is the output LO_I of the second digital local oscillator, and an output of the fifth multiplier M5 is connected to the other input of the first adder. An input of the sixth multiplier M6 is the output LO_Q of the second digital local oscillator, and an output of the sixth multiplier M6 is connected to the other input of the first adder. The two inputs of the first adder S1 are the output of the fourth multiplier M4 and the output of the fifth multiplier M5, respectively, and an output of the first adder S1 is the real part $Y_{i\_I}$ of the compensated received signal of the receiving antenna i. Two inputs of the second adder S2 are the output of the third multiplier M3 and the output of the sixth multiplier M6, respectively, and an output of the first adder S1 is the imaginary part $Y_{i\_Q}$ of the compensated received signal of the receiving antenna i. The compensated received signal of the receiving antenna i may be expressed as $\cos(\omega t + \varphi)\exp(j(\omega_0 t + \varphi_0))$.

In an exemplary embodiment, the first processing module may configured to acquire a first received signal $x1(t - \tau_{11})$ input from the reference receiving antenna through an LNA to a mixer on a receiving channel where the reference receiving antenna is located, and a second received signal $x1(t - \tau_{12})$ input through an LO to the mixer on the receiving channel where the reference receiving antenna is located; and perform correlation processing on the obtained first received signal $x1(t - \tau_{11})$ and second received signal $x1(t - \tau_{12})$ to obtain an echo signal $x1(t - \tau_{11})x1^*(t - \tau_{12})$ received by the reference receiving channel, where

$$x1(t - \tau_{11}) = x1(t)^*\exp\left(-j * \left(2\pi f_c\tau_{11} + \pi\frac{\beta}{T}(2\tau_{11}t - \tau_{11}^2)\right)\right);$$

and

$$x1(t - \tau_{12}) = x1(t)^*\exp\left(-j * \left(2\pi f_c\tau_{12} + \pi\frac{\beta}{T}(2\tau_{12}t - \tau_{12}^2)\right)\right);$$

where

$$x1(t) = \exp\left(j * \left(2\pi f_c t + \pi\frac{\beta}{T}t^2 + \theta\right)\right), 0 \leq t \leq T.$$

In an exemplary embodiment, the second processing module may be configured to acquire a third received

signal x1(t - $\tau_{11}$ - $\mu_{i11}$) input from the receiving antenna i through an LNA to a mixer on a receiving channel where the receiving antenna i is located, and a fourth receiving signal x1(t - $\tau_{12}$ - $\mu_{i12}$) input through a local oscillator LO to the mixer on the receiving channel where the receiving antenna i is located; and perform correlation processing on the obtained third receiving signal x1(t - $\tau_{11}$ - $\mu_{i11}$) and the fourth receiving signal x1(t - $\tau_{12}$ - $\mu_{i12}$) to obtain an echo signal x1(t - $\tau_{11}$ - $\mu_{i11}$) x1*(t - $\tau_{12}$ - $\mu_{i12}$) received by the receiving channel i;

where x1(t - $\tau_{11}$ - $\mu_{i11}$) x1*(t - $\tau_{12}$ - $\mu_{i12}$) = x1(t - $\tau_{11}$) x1*(t - $\tau_{12}$) * exp(-j * (2$\pi f_c$($\mu_{i11}$ -

$\mu_{i12}$))) * $\exp\left(j * \left(2\pi\frac{\beta}{T}(\mu_{i11} - \mu_{12})\tau_{12}\right)\right)$ * $\exp\left(j * (\mu_{i11}^2 - \mu_{i12}^2)\right)$ * $\exp\left(-j * \left(2\pi\frac{\beta}{T}(\mu_{i11} - \mu_{12})t\right)\right)$

$*\exp\left(j * \left(2\pi\frac{\beta}{T}\mu_{i11}(\tau_{11} - \tau_{12})\right)\right)$.

In some optional embodiments, since the radar is an electronic device that uses electromagnetic waves to detect a target, that is, the radar transmits a beam through a signal transmitter chain, when the transmitted beam encounters an obstacle, an echo reflected by the obstacle is received by a receiving antenna and transmitted to a radar chip, and the radar chip determines position, distance, velocity and other information of the target relative to a transmitting point of the electromagnetic waves. With the development of microelectronics and other technologies, the radar, especially millimeter-wave radar (such as automotive radar), has gradually been widely used. Because of its small antenna, it has been widely used in autonomous driving, smart home devices and industrial automation component. At present, miniaturization and integration of radar have become the current development trend.

Antenna feeding line is a device that transmits, controls and distributes radio energy of a frequency electromagnetic signal in a radar. Due to the demand of miniaturization and integration of radar, an arrangement position of the antenna feeding line has a significant impact on a quality of signal perceived by the radar chip. At present, the arrangement of the antenna feeding line depends on a positional relationship between a transceiving unit and an antenna in the radar chip. There are multiple groups of transceiving antennas in a Multi Input Multi Output (MIMO) system. In order to ensure accuracy in target detection, it is necessary to ensure that a relative time delay produced by each transmitting antenna is the same. However, when using a design method of unequal feeding path lengths of transmitting antennas, due to the different feeding path lengths of the transmitting antennas, relative time delays of radio frequency signals after passing through different transmitting antennas are different, which affects the quality of received signals and the accuracy of detection results of a radar system.

As shown in FIG. 9, an embodiment of the present application provides a signal processing chain for signal transmission, including a waveform generator 1101, a plurality of transmitter channels 1100 connected to the waveform generator 1101, and a plurality of transmitting antennas 1107 connected in one-to-one correspondence to the transmitter channels 1100. At least two transmitter channels 1100 have different signal transmission delays from the waveform generator 1101 to the transmitting antennas 1107. At least one transmitter channel 1100 includes a direct digital frequency synthesizer 1102, which may be configured to generate a compensation signal according to a time delay difference between a signal transmission delay of a corresponding transmitter channel 1100 and a reference transmission delay, and to compensate a transmitted signal of the corresponding transmitter channel 1100 using the compensation signal.

In an exemplary embodiment, the signal transmitter chain shown in FIG 9 including four transmitter channels is taken as an example. It should be noted that the embodiments of the present application are not limited thereto, and a quantity of transmitter channels may be set as necessary. As shown in FIG. 9, among the four transmitter channels, lengths of a transmitting antenna feeding line 110, a transmitting antenna feeding line 111, a transmitting antenna feeding line 112, and a transmitting antenna feeding line 113 are different, and relative time delays produced by a transmitted signal passing through the transmitting antenna feeding line 110, the transmitting antenna feeding line 111, the transmitting antenna feeding line 112, and the transmitting antenna feeding line 113 will also be different. In this embodiment, the direct digital frequency synthesizer 1102 generates a compensation signal according to a time delay difference between a signal transmission delay of a transmitter channel 1100 corresponding thereto and a reference transmission delay, and uses the compensation signal to compensate a transmitted signal of the transmitter channel 1100 corresponding thereto, thereby solving the problem that a radio frequency signal passing different transmitting antennas produces different relative time delays due to inconsistent feeding path lengths of the transmitting antennas, improving the quality of the transmitted signal, further improving the quality of the received signal, and ultimately improving the detection accuracy and detection range of the radar system.

In some exemplary embodiments, the transmitter channel further includes a digital-to-analog converter 1103, a low-pass filter 1104, a mixer 1105, and a power amplifier 1106, and the signal transmitter chain further includes a local oscillator 1108. The waveform generator 1101, the direct digital frequency synthesizer 3102, the digital-to-analog converter 1103, the low-pass filter 1104, the mixer 1105, the power amplifier 1106, and the transmitting antenna 1107 are connected in sequence, and the local oscillator 1108 is respectively connected to the waveform generator 1101 and the mixer 1105 of each transmitter channel. The waveform generator 1101 is configured to generate an initial transmitted signal and output the initial transmitted signal to the direct digital frequency synthesizer 1102 and the local oscillator 1108. The direct digital frequency synthesizer 1102 is configured to perform phase compensation and/or frequency compensation on the transmitted signal. The digital-to-analog converter 1103 is configured to perform digital-to-analog conversion on a received signal and output it to the low-pass filter 1104. The low-pass filter 1104 is configured to perform low-pass filtering on the received signal and output it to the mixer 1105. The mixer 1105 is configured to multiply an intrinsic signal generated by the local oscillator 1108 with the signal output by the low-pass filter 1104 to generate a radio frequency signal and output the radio frequency signal to the power amplifier 1106. The power amplifier 1106 is configured to power-amplify the radio frequency signal and output the amplified signal to the transmitting antenna 1107. The local oscillator 1108 is configured to generate the intrinsic signal according to the initial transmitted signal and output it to the mixer 1105. In an exemplary embodiment, the initial transmitted signal may be, but is not limited to, such as FMCW.

In some exemplary embodiments, each transmitter channel is provided with a direct digital frequency synthesizer 1102. Each direct digital frequency synthesizer 1102 is configured to generate a compensation signal based on a time delay difference between a signal transmission delay of the transmitter channel in which the direct digital frequency synthesizer is located and a reference transmission delay, and to compensate a transmitted signal of the transmitter channel in which the direct digital frequency synthesizer is located using the compensation signal.

It should be noted that, in the signal transmitter chain shown in FIG. 9, each transmitter channel 1100 is provided with a direct digital frequency synthesizer 1102. However, in practical application, some transmitter channels 1100 may not be provided with a direct digital frequency synthesizer 1102. For example, when a signal transmission delay of a certain transmitter channel 1100 is the reference transmission delay and the signal transmitter chain is a fixed-frequency signal transmitter chain, the transmitter channel 1100 may not be provided with a direct digital frequency synthesizer 1102. A transmitter channel that is not provided with a direct digital frequency synthesizer 1102 includes a digital-to-analog converter 1103, a low-pass filter 1104, a mixer 1105 and a power amplifier 1106 connected in sequence. The waveform generator 1101 generates an initial transmitted signal and outputs it to the digital-analog converter 1103 and a local oscillator 1108. The digital-analog converter 1103 performs digital-analog conversion on the received signal and outputs it to the low-pass filter 1104. The low-pass filter 1104 performs low-pass filtering on the received signal and outputs it to the mixer 1105. The mixer 1105 multiplies an intrinsic signal generated by the local oscillator 1108 with the signal output by the low-pass filter 1104 to generate a radio frequency signal and outputs the radio frequency signal to the power amplifier 1106. The power amplifier 1106 power-amplifies the radio frequency signal and outputs the amplified signal to the transmitting antenna 1107. The local oscillator 1108 generates the intrinsic signal according to the initial transmitted signal and outputs it to the mixer 1105.

As shown in FIG. 9, since each transmitter channel uses a same local oscillator 1108, lengths of signal lines from the local oscillator 1108 to the mixer 1105 of each transmitter channel (denoted as 120, 121, 122, and 123 in FIG. 9) are also different, and this difference also causes the problem that different transmitter channels produce different relative time delays.

In some exemplary embodiments, the case where at least two of the transmitter channels have different signal transmission delays, includes a difference in signal transmission delay produced by the transmitting antenna feeding lines of the at least two transmitter channels, and/or a difference in signal transmission delay caused by the signal lines from the local oscillator to the mixers of the at least two transmitter channels.

In an exemplary embodiment, the direct digital frequency synthesizer 1102 generating the compensation signal according to the time delay difference between the signal transmission delay of the transmitter channel 1100 corresponding thereto and the reference transmission delay, includes that: the direct digital frequency synthesizer 1102 generates a compensation signal according to a time delay difference between a signal transmission delay produced by a transmitting antenna feeding line of the transmitter channel 1100 corresponding thereto and a first reference transmission delay, and/or a time delay difference between a signal transmission delay produced by a signal line between the local oscillator 1108 and the mixer 1105 of the transmitter channel 1100 corresponding thereto and a second reference transmission delay. However, the embodiments of the present application are not limited thereto. The direct digital frequency synthesizer 1102 may further generate a compensation signal according to a time delay difference between a signal transmission delay produced at another position in the transmitter channel 1100 corresponding thereto and a reference transmission delay, thereby solving the problem that the signal transmission delays are different due to a difference in lengths of the signal lines from the local oscillator 1108 to mixers 1105 of at least two transmitter channels 1100 or due to a difference at any other position.

In some exemplary embodiments, when the time delay difference between the signal transmission delay of the transmitter channel and the reference transmission delay includes a time delay difference between the signal transmission delay of the transmitting antenna feeding line of the transmitter channel and the first reference transmission delay, the first reference transmission delay may be a signal transmission delay produced by a transmitting antenna feeding line of any one of a plurality of transmitter channels. When the time delay difference between the signal transmission delay of the transmitter channel and the reference transmission delay includes a time delay difference between the signal transmission delay from the local oscillator to the mixer of the transmitter channel and the second reference transmission delay, the second reference transmission delay may be a signal transmission delay produced by a signal line from the local oscillator to a mixer of any one of a plurality of transmitter channels.

In some exemplary embodiments, when the time delay difference between the signal transmission delay of the transmitter channel and the reference transmission delay includes a time delay difference between the signal transmission delay of the transmitting antenna feeding line of the transmitter channel and the first reference transmission delay, the first reference transmission delay may be a signal transmission delay produced by a shortest transmitting antenna feeding line of a plurality of transmitter channels. When the time delay difference between the signal transmission delay of the transmitter channel and the reference transmission delay includes a time delay difference between the signal transmission delay from the local oscillator to the mixer of the transmitter channel and the second reference transmission delay, the second reference transmission delay may be a signal transmission delay produced by a shortest signal line between the local oscillator and the mixers of a plurality of transmitter channels.

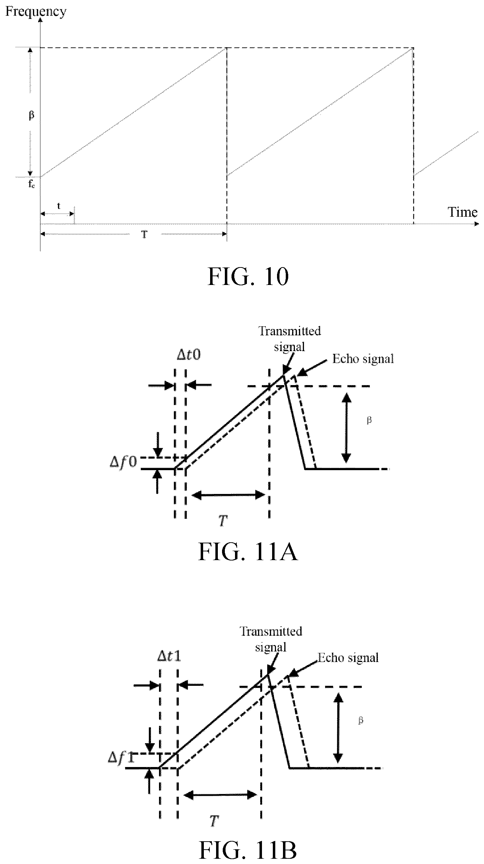

FIG. 10 is a schematic diagram of an FMCW transmitted signal using sawtooth wave modulation. As shown in FIG. 10, a sawtooth is usually called a Chirp. In some exemplary embodiments, a mathematical expression corresponding to the initial transmitted signal x2(t) generated by the waveform generator is as follows:

$$x2(t) = \exp\left(j * \left(2\pi f_c t + \pi \frac{\beta}{T} t^2 + \theta\right)\right), 0 \le t \le T,$$

where t is a time, $f_c$ is a starting frequency of a chirp in a frequency sweep process, $\beta$ is a frequency variation range of the chirp in the frequency sweep process, T is a scanning time of the chirp in the frequency sweep process, and $\theta$ is an initial phase.

FIGS. 11A and 11B are schematic diagrams of FMCW transmitted signals and echo signals thereof of two different transmitting antennas. As shown in FIGS. 11A and 11B, because the relative time delays produced by the transmitter channels corresponding to the two transmitting antennas are different, $\Delta t1 > \Delta t0$, that is, the relative time delay of the transmitting antenna shown in FIG. 11B is greater than the relative time delay of the transmitting antenna shown in FIG. 11A, resulting in a difference between range frequencies of a target detected by the two transmitting antennas, f1 > f0, and then affecting a final detection result of the radar chip.

Assuming that the signal transmission delay produced by the transmitting antenna feeding line of any one of the plurality of transmitter channels is defined as a first reference delay $\tau_{21}$, and the signal transmission delay produced by the signal line between the local oscillator and a mixer of any one of the multiple transmitter channels is defined as a second reference delay $\tau2_2$, a FMCW signal passing through the first reference delay $\tau_{21}$ and the second reference delay $\tau_{22}$ may be expressed as follows:

$$x2(t - \tau) = \exp\left(j * \left(2\pi f_c(t - \tau) + \pi \frac{\beta}{T}(t - \tau)^2 + \theta\right)\right)$$
$$= x2(t)^* \exp\left(-j * \left(2\pi f_c \tau + \pi \frac{\beta}{T}(2\tau t - \tau^2)\right)\right),$$

where $t \ge \tau = \tau_{21} + \tau_{22}$.

In some exemplary embodiments, the first reference delay $\tau_{21}$ may be defined as a signal transmission delay generated by a shortest transmitting antenna feeding line, and the second reference delay $\tau_{22}$ may be defined as a signal transmission delay produced from a shortest signal line between the local oscillator and the mixer. However, it is not limited in embodiments of the present application. In some other exemplary embodiments, it is also possible to define a signal transmission delay produced by a transmitting antenna feeding line of any one of the transmitter channels as the first reference delay $\tau_{21}$, and define a signal transmission delay produced by a signal line between the local oscillator and a mixer of this transmitter channel as the second reference delay $\tau_{22}$.

Assuming that an additional delay of the signal transmission delay produced by the transmitting antenna feeding line of any one of the transmitter channels relative to the first reference delay $\tau_{21}$ is $\mu_{21}$, and an additional delay of the signal transmission delay produced by the signal line between the local oscillator and the mixer of this transmitter channel relative to the second reference delay $\tau2_2$ is $\mu_{22}$, a FMCW signal passing through the transmitter channel may be expressed as follows:

$$x2(t - \tau - \mu)$$

$$= \exp\left(j * \left(2\pi f_c(t - \tau - \mu) + \pi\frac{\beta}{T}(t - \tau - \mu)^2 + \theta\right)\right)$$

$$= x2(t - \tau) * \exp\left(-j * \left(2\pi f_c\mu + \pi\frac{\beta}{T}(2\mu t - \mu^2)\right)\right),$$

where $t \geq \tau + \mu$, and $\mu = \mu_{21} + \mu_{22}$.

In some exemplary embodiments, a corresponding compensation signal $\exp\left(j * \left(2\pi f_c\mu + \pi\frac{\beta}{T}(2\mu t - \mu^2)\right)\right)$ may be generated by a direct digital frequency synthesizer to compensate a transmitted signal of the transmitter channel.

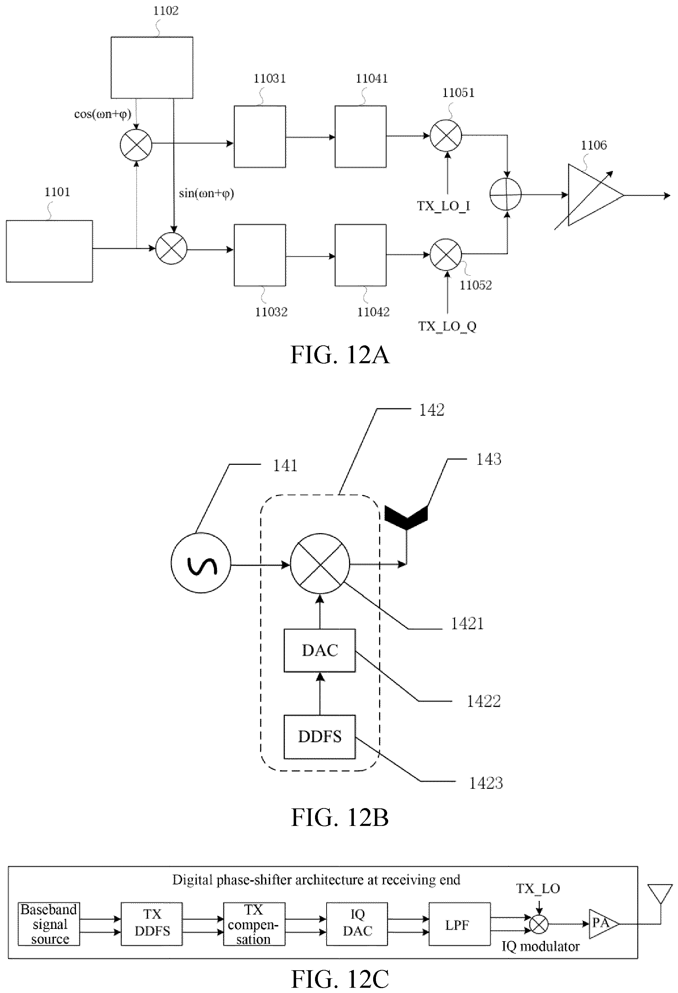

In some exemplary embodiments, as shown in FIG. 12A, each transmitter channel includes an I-transmitter channel and a Q-transmitter channel, and the compensation signal includes a cosine compensation signal and a sinusoidal compensation signal. The cosine compensation signal and the sinusoidal compensation signal have a same frequency and a same initial phase. One of the cosine compensation signal and the sinusoidal compensation signal is used to compensate a current transmitted signal of the I-transmitter channel, and the other is used to compensate a current transmitted signal of the Q-transmitter channel.

As shown in FIG. 12A, a transmitter channel includes an IQ digital-to-analog converter (i.e., a digital-to-analog converter 11031 and a digital-to-analog converter 11032), an IQ low-pass filter (i.e., a low-pass filter 11041 and a low-pass filter 11042), an IQ mixer (i.e., a mixer 11051 and a mixer 11052), a power amplifier 1106 and a transmitting antenna 1107. The signal transmitter chain includes a local oscillator 1108, a waveform generator 1101, a direct digital frequency synthesizer 1102, IQ digital-to-analog converters, IQ low-pass filters, IQ mixers, a power amplifier 1106, and a transmit antenna 1107, which are connected in sequence. The local oscillator 1108 is respectively connected to the waveform generator 1101 and the IQ mixer of each transmitter channel. The waveform generator 1101 is configured to generate a frequency modulated continuous wave signal; and the direct digital frequency synthesizer 1102 is configured to phase-compensate and/or frequency-compensate a transmitted signal.

In some exemplary embodiments, the cosine compensation signal may be cos $(\omega n + \varphi)$, and the sinusoidal compensation signal may be sin $(\omega n + \varphi)$, where n is a digital signal sampling point, $\omega = \frac{\beta\mu}{T}$, $\varphi = f_c\mu - \frac{\beta\mu^2}{2T}$, where $f_c$ is a starting frequency of an initial transmitted signal generated by the waveform generator, $\beta$ is a frequency variation range of the initial transmitted signal generated by the waveform generator, T is a scan duration of a chirp in the initial transmitted signal generated by the waveform generator, and $\mu$ is a delay difference between a signal transmission delay of a transmitter channel and a reference transmission delay.

According to the signal processing chain of the embodiment of the present application, a compensation signal is generated according to a delay difference $\mu$ of the signal transmission delay of the transmitter channel relative to the reference transmission delay, and the compensation signal is used to compensate the transmitted signal of the corresponding transmitter channel, which solves the problem that a radio frequency signal has different relative delays after passing through different transmitting antennas due to inconsistent transmitting antenna feeding path lengths and/or inconsistent signal path lengths between the local oscillator and the mixers of a plurality of transmitter channels, thereby improving the quality of the transmitted signal, further improving the quality of the received signal, and ultimately improving the detection accuracy and the detection range of the radar system.

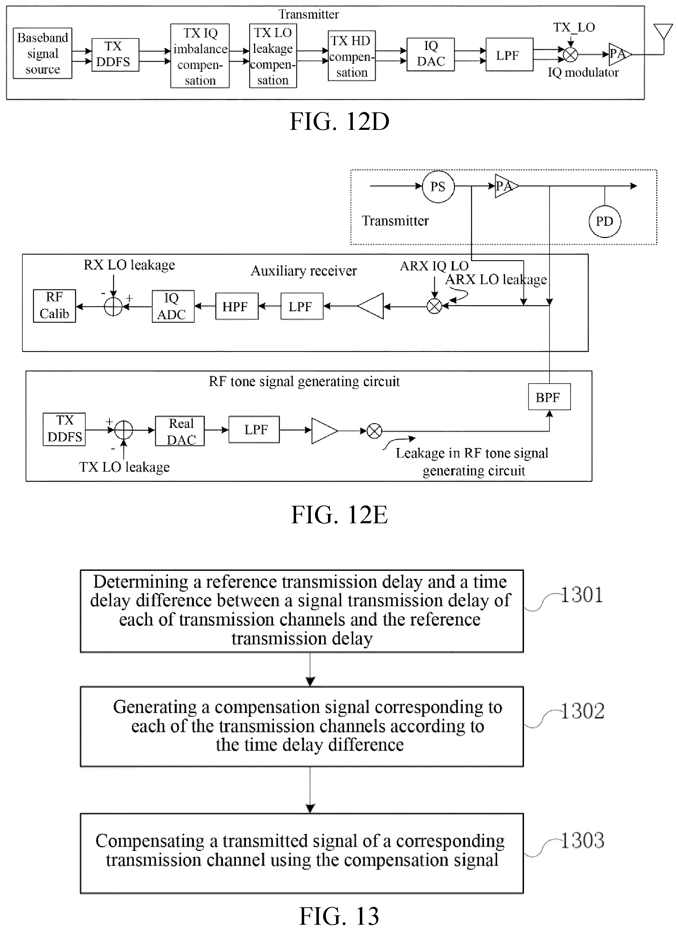

As shown in FIG. 13, an embodiment of the present application further provides a signal processing method applied to an antenna array of an electromagnetic wave component having at least two signal transmitter chains, the signal transmitter chains being phase-shifters including a digital phase-shift architecture, and the method may include Step 1301 to Step 1303.

Step 1301: Determining a reference transmission delay and a time delay difference between a signal transmission delay of each of transmitter channels and the reference transmission delay.

In some exemplary embodiments, the reference transmission delay includes a first reference transmission delay and/or a second reference transmission delay. The first reference transmission delay may be a signal transmission delay of a transmitting antenna feeding line of any one of the transmitter channels, and the second reference transmission delay may be a signal transmission delay of a signal line between a local oscillator and a mixer of any one of the transmitter channels.

In other exemplary embodiments, the reference transmission delay includes a first reference transmission delay, and/or a second reference transmission delay. The first reference transmission delay may be a signal transmission delay of a shortest transmitting antenna feeding line in the plurality of transmitter channels, and the second reference transmission delay may be a signal transmission delay of a shortest signal line between the local oscillator and the mixers in the plurality of transmitter channels.

In an exemplary embodiment, a distance of the transmitting antenna feeding line and/or the signal line between the local oscillator and a mixer in each of the transmitter channels may be measured, and a method for measuring the distance may include a model simulation measurement or an actual measurement.

Step 1302: Generating a compensation signal corresponding to each of the transmitter channels according to the time delay difference.

In an exemplary embodiment, a frequency control parameter of the compensation signal is $\omega = \frac{\beta\mu}{T}$, and a phase control parameter is $\varphi = f_c\mu - \frac{\beta\mu^2}{2T}$, where $f_c$ is a starting frequency of the initial transmitted signal generated by the waveform generator, $\beta$ is a frequency variation range of the initial transmitted signal generated by the waveform generator, T is a scan duration of a chirp in the initial transmitted signal generated by the waveform generator, and $\mu$ is a delay difference between a signal transmission delay of a transmitter channel and a reference transmission delay.

Step 1303: Compensating a transmitted signal of a corresponding transmitter channel using the compensation signal.

In an exemplary embodiment, a transmitter channel includes an I-transmitter channel and a Q-transmitter channel, and the compensation signal includes a cosine compensation signal $\cos(\omega n + \varphi)$ and a sinusoidal compensation signal $\sin(\omega n + \varphi)$. One of the cosine compensation signal and the sinusoidal compensation signal is used to compensate a transmitted signal of the I-transmitter channel, and the other is used to compensate a transmitted signal of the Q transmitter channel.

According to another signal processing method of the embodiment of the present application, a compensation signal is generated according to a delay difference of the signal transmission delay of each transmitter channel relative to the reference transmission delay, and the compensation signal is used to compensate the transmitted signal of the corresponding transmitter channel, which solves the problem that a radio frequency signal has different relative delays after passing through different transmitting antennas due to inconsistent transmitting antenna feeding path lengths and/or inconsistent signal path lengths between the local oscillator and the mixers of a plurality of transmitter channels, thereby improving the quality of the transmitted signal, further improving the quality of the received signal, and ultimately improving the detection accuracy and the detection range of the radar system.

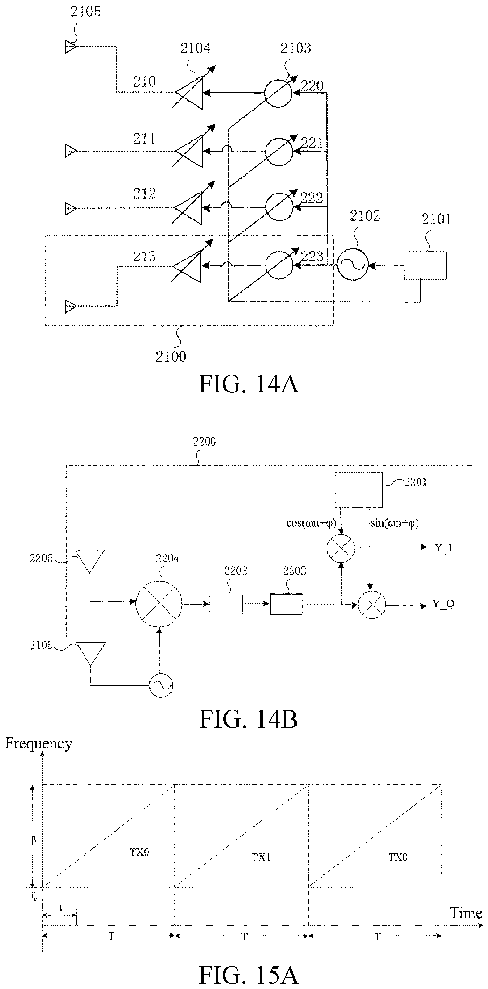

An embodiment of the present application provides another signal processing chain for transceiving a signal, including a signal transmitter chain as shown in FIG. 14A and a signal receiver chain as shown in FIG. 14B. The signal transmitter chain includes a plurality of transmitter channels 2100 implemented based on an analog circuit, each transmitter channel 2100 includes a respective transmitting antenna 2105, at least two transmitter channels 2100 have different signal transmission delays, and a plurality of transmitting antennas 2105 transmit electromagnetic wave signals in a time division multiplexing mode. The signal receiver chain includes at least one receiving channel 2200, and a receiving channel 2200 includes a signal compensator 2201 implemented using a digital phase-shift architecture. The signal compensator 2201 is configured to determine a transmitter channel 2100 corresponding to a currently received echo signal, generate a compensation signal according to a delay difference between a signal transmission delay of the corresponding transmitter channel 2100 and the reference transmission delay, and compensate the currently received echo signal using the compensation signal.

In an exemplary embodiment, the signal transmitter chain shown in FIG. 14A includes four transmitter channels and the signal receiver chain shown in FIG. 14B includes one receiving channel. However, it is not limited in embodiments of the present application, and quantities of transmitter channels and receiving channels may be set as necessary, as long as the quantity of transmitter channels is more than or equal to 2 and the quantity of receiving channels is more than or equal to 1 in embodiments of the present application. As shown in FIG. 14A, among the four transmitter channels, lengths of a transmitting antenna feeding line 210, a transmitting antenna feeding line 211, a transmitting antenna feeding line 212, and a transmitting antenna feeding line 213 are different, and relative time delays produced by a transmitted signal passing through the transmitting antenna feeding line 210, the transmitting antenna feeding line 211, the transmitting antenna feeding line 212, and the transmitting antenna feeding line 213 will also be different. In an embodiment, the signal compensator 2201 generates a compensation signal according to a time delay difference between a signal transmission delay of a transmitter channel corresponding to a currently received echo signal and the reference transmission delay, and uses the compensation signal to compensate the currently received echo signal. For example, the compensation signal is used to compensate a phase difference and/or a frequency difference of intermediate frequency signal of the currently received echo signal, so as to improve the quality of the received signal, thereby achieving the purpose of improving the detection accuracy and detection range of the radar system.

In some exemplary embodiments, as shown in FIG. 14A, the signal transmitter chain further includes a waveform generator 2101 and a local oscillator 2102 connected in sequence. Each transmitter channel includes a phase-shifter 2103, a power amplifier 2104, and a transmitting antenna 2105 connected in sequence. The local oscillator 2102 is respectively connected to the phase-shifter 2103 of each transmitter channel 2100, and the waveform generator 2101 is respectively connected to the phase-shifter 2103 of each transmitter channel. The waveform generator 2101 is configured to generate an initial transmitted signal and output it to the local oscillator 2102 and the phase-shifter 2103. The local oscillator 2102 is configured to generate an intrinsic signal according to the initial transmitted signal and output it to the phase-shifter 2103. The phase-shifter 2103 is configured to phase-shift the received initial transmitted signal and output it to the power amplifier 2104. The power amplifier 2104 is configured to power-amplify the received signal and output the amplified signal to the transmitting antenna 2105.

In some exemplary embodiments, as shown in FIG. 14B, each receiving channel 2200 further includes a receiving antenna 2205, a first mixer 2204, a low-pass filter 2203, an analog-to-digital converter 2202, and the like, which are connected in sequence. The receiving antenna 2205, the first mixer 2204, the low-pass filter 2203, the analog-to-digital converter 2202, and the signal compensator 2201 are connected in sequence. The first mixer 2204 is configured to multiply a signal received by the receiving antenna and a chirp signal transmitted by the transmitting antenna to obtain a mixed signal and output it to the low-pass filter 2203. The low-pass filter 2203 is configured to low-pass filter the received mixed signal to obtain a difference frequency signal and output it to the analog-to-digital converter 2202. The analog-to-digital converter 2202 is configured to perform analog-to-digital conversion on the received difference frequency signal and output it to the signal compensator 2201. The signal compensator 2201 is configured to perform phase difference and/or frequency difference compensation for an intermediate frequency signal output by the IQ analog-to-digital converter.

As shown in FIG. 14A, since each transmitter channel uses a same local oscillator 2102, lengths of signal lines from the local oscillator 2102 to the phase-shifter 2103 of each transmitter channel (reference sign 220, reference sign 221, reference sign 222, and reference sign 223 in FIG. 14A) are also different, and this difference also causes the problem that different transmitter channels generate different relative time delays.

In some exemplary embodiments, the case where at least two of the transmitter channels have different signal transmission delays, includes a difference in signal transmission delay produced by the transmitting antenna feeding lines of the at least two transmitter channels, and/or a difference in signal transmission delay caused by the signal lines from the local oscillator to the phase-shifters of the at least two transmitter channels.

In an exemplary embodiment, the signal compensator 2201 generating the compensation signal according to the time delay difference between the signal transmission delay of the corresponding transmitter channel 2100 and the reference transmission delay, includes that: the signal compensator 2201 generates a compensation signal according to a time delay difference between a signal transmission delay produced by a transmitting antenna feeding line of the corresponding transmitter channel 2100 and a first reference transmission delay and/or a time delay difference between a signal transmission delay produced by a signal line between the local oscillator 2102 and the phase-shifter 2103 of the corresponding transmitter channel 2100 and the second reference transmission delay. However, it is not limited in embodiments of the present application. The signal compensator 2201 may further generate a compensation signal according to a signal transmission delay produced at other positions in the corresponding transmitter channel 2100, thereby solving the problem that the signal transmission delays are different due to a difference in length of the signal lines between the local oscillator 2102 and the phase-shifter 2103 of each transmitter channel or due to a difference at any other position.

In some exemplary embodiments, when the time delay difference between the signal transmission delay of the transmitter channel and the reference transmission delay includes a time delay difference between the signal transmission delay of the transmitting antenna feeding line of the transmitter channel and the first reference transmission delay, the first reference transmission delay may be a signal transmission delay produced by a transmitting antenna feeding line of any one of a plurality of transmitter channels. When the time delay difference between the signal transmission delay of the transmitter channel and the reference transmission delay includes a time delay difference between the signal transmission delay from the local oscillator to the phase-shifter and the second reference transmission delay, the second reference transmission delay may be a signal transmission delay produced by a signal line between the local oscillator to a phase-shifter of any one of a plurality of transmitter channels. In an embodiment of the present disclosure, the transmitter channels corresponding to the first reference transmission delay and the second reference transmission delay may be the same or different.

In some exemplary embodiments, when the time delay difference between the signal transmission delay of the transmitter channel and the reference transmission delay includes a time delay difference between the signal transmission delay of the transmitting antenna feeding line of the transmitter channel and the first reference transmission delay, the first reference transmission delay may be a signal transmission delay produced by a shortest transmitting antenna feeding line of a plurality of transmitter channels. When the time delay difference between the signal transmission delay of the transmitter channel and the reference transmission delay includes a time delay difference between the signal transmission delay from the local oscillator to the phase-shifter and the second reference transmission delay, the second reference transmission delay may be a signal transmission delay produced by a shortest signal line between the local oscillator and the phase-shifters of a plurality of transmitter channels.

FIG. 15A is a schematic diagram of an FMCW transmitted signal using sawtooth wave modulation. As shown in

**EP 4 535 673 A1**

FIG. 15A, usually a sawtooth is called a Chirp. The FMCW transmitted signal shown in FIG. 15A is formed by two transmitting antennas transmitting in TDM mode, where TX0 represents a first transmitting antenna, TX1 represents a second transmitting antenna, and cycle down in sequence. It should be noted that the first transmitting antenna TX0 and the second transmitting antenna TX1 described in the present application only indicate a logical order of the antennas, and are not required to correspond one-to-one with a physical order of the antennas. A starting frequency, a frequency range, a chirp duration, and the like of chirp signals transmitted by a plurality of transmitting antennas may be the same or different, as long as the chirp signals transmitted by the plurality of transmitting antennas do not overlap in time.

In some exemplary embodiments, a mathematical expression corresponding to a transmitted signal x2(t) is as follows: $x2(t) = \exp\left(j * \left(2\pi f_c t + \pi \frac{\beta}{T} t^2 + \theta\right)\right)$, $0 \le t \le T$; where t is a time, $f_c$ is a starting frequency of a chirp in a frequency sweep process, $\beta$ is a frequency variation range of the chirp in the frequency sweep process, T is a scanning time of the chirp in the frequency sweep process, and $\theta$ is an initial phase.

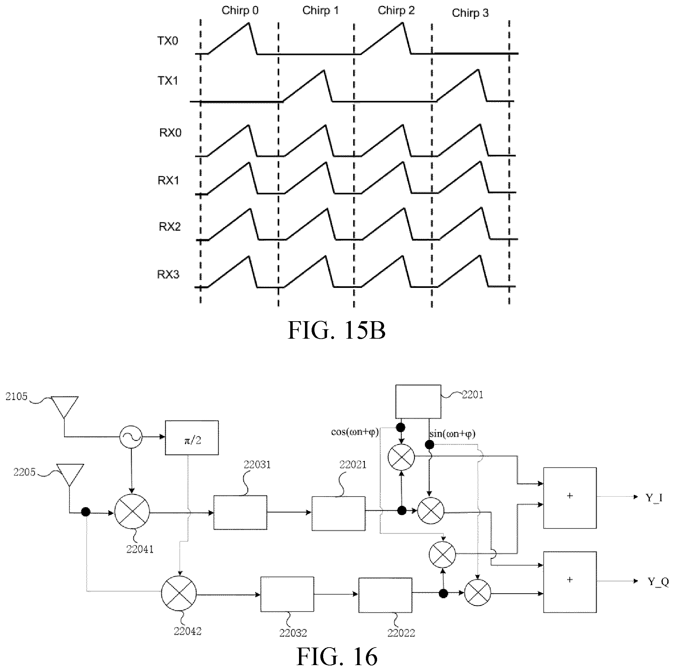

FIG. 15B is a schematic signal diagram of signals for two transmitting antennas and four receiving antennas, where RX0 represents a first receiving antenna, RX1 represents a second receiving antenna, RX2 represents a third receiving antenna, and RX3 represents a fourth receiving antenna. As can be seen from FIG. 15B, each receiving antenna may receive chirp signals transmitted by all transmitting antennas. FIG. 15A illustrates an example in which the signal transmitter chain includes two transmitting antennas, and FIG. 15B illustrates an example in which the signal transmitter chain includes two transmitting antennas and the signal receiver chain includes four receiving antennas. However, it is not limited in embodiments of the present application.

In some exemplary embodiments, a corresponding compensated signal $\exp\left(j * \left(2\pi f_c \mu + \pi \frac{\beta}{T}(2\mu t - \mu^2)\right)\right)$ may be generated by a signal compensator in a receiving channel to compensate for an additional delay of a signal transmitted by the transmitter channel.

In some exemplary embodiments, as shown in FIG. 14B, the receiving channel includes an I-receiving channel Y_I and a Q-receiving channel Y_Q, and the compensation signal includes a cosine compensation signal and a sinusoidal compensation signal. The cosine compensation signal and the sinusoidal compensation signal have a same frequency and a same initial phase. An intermediate frequency signal of a currently received echo signal is compensated using one of the cosine compensation signal and the sine compensation signal and then output to the I-receiving channel Y_I, and the intermediate frequency signal of the currently received echo signal is compensated using the other of the cosine compensation signal and the sine compensation signal and then output to the Q-receiving channel Y_Q.

In some exemplary embodiments, the cosine compensation signal may be cos (ωn + φ), and the sinusoidal compensation signal may be sin (ωn + φ), where n is a digital signal sampling point, $\omega = \frac{\beta\mu}{T}$, and $\varphi = f_c\mu - \frac{\beta\mu^2}{2T}$, where $f_c$ is a starting frequency of a chirp signal, β is a frequency variation range of the chirp signal, T is a frequency sweeping time of the chirp signal, μ is a time delay difference between a signal transmission delay of a transmitter channel and a reference transmission delay.

In some exemplary embodiments, the time delay difference μ between the signal transmission delay of the transmitter channel and the reference transmission delay includes a time delay difference between a signal transmission delay of a transmitting antenna feeding line of the transmitter channel and a first reference transmission delay, and/or a time delay difference between a signal transmission delay from the local oscillator to the phase-shifter and a second reference transmission delay. Here, a method for setting the first reference transmission delay and the second reference transmission delay is as described above, and will not be repeated here.

In some other exemplary embodiments, as shown in FIG. 16A, when an analog-to-digital converted signal of each receiving channel is a complex signal, a signal output end of the receiving antenna 2205 is respectively connected to a first mixer 22041 and a first mixer 22042 (the first mixer 22041 and the first mixer 22042 are collectively referred to as a first IQ mixer), and signal output ends of the first mixer 22041 and the first mixer 22042 are respectively connected to a low-pass filter 22031 and a low-pass filter 22032 (the low-pass filter 22031 and the low-pass filter 22032 are collectively referred to as an IQ low-pass filter). A signal coupled output from the transmitter channel is also respectively connected to the first mixer 22041 and a 90 ° (π/2) phase-shifter, and the other end of the 90 ° phase-shifter is connected to the first mixer 22042. A signal output end of the low-pass filter 22031 is connected to the analog-to-digital converter 22021 and a signal output end of the low-pass filter 22032 is connected to the analog-to-digital converter 22022. Signals output from signal output ends of an analog-to-digital converter 22021 and an analog-to-digital converter 22022 (the analog-to-digital converter 22021 and the analog-to-digital converter 22022 are collectively referred to as a IQ analog-to-digital converter) are respectively multiplied by the cosine compensation signal cos (ωn + φ), and then summed, to obtain a signal, which is output to the Q-receiving channel Y_Q. Signals output from the signal output ends of the analog-to-digital converter 22021 and the analog-to-digital converter 22022 are respectively multiplied by the sine compensation signal sin(ωn+φ), and then

summed, to obtain a signal, which is output to the I-receiving channel Y_I.

According to the signal processing chain of this embodiment, the signal compensator generates a compensation signal according to the signal transmission delay corresponding to a currently received echo signal, and uses the compensation signal to compensate a received intermediate frequency signal corresponding to the echo signal, thereby improving the quality of the received signal, and further improving the detection accuracy and detection range of the radar system.

In some optional embodiments, the phase-shifter 2103 in the transmitter chain in FIG. 14A may be a phase-shifter of an analog architecture or a phase-shifter of a digital phase-shifting architecture. For example, in the field of FMCW millimeter-wave radar, a structure of a phase-shifter in a traditional transmitter chain is generally composed of analog circuits. And the analog phase-shifter may also be replaced by a digital architecture phase-shifter to perform its function, thereby realizing accurate phase-shifting operation of each transmitter chain. The following is an overview of a transceiving chain for a digital phase-shift architecture.

Since the mixer is a very important and critical component for frequency conversion in the transceiving chain, it is widely used in wireless communication devices such as communication and radar, for example, a single sideband mixer having a good suppression effect for image signals, and an IQ mixer in the transceiving chain in the embodiment of the present disclosure. The IQ mixer (such as a single sideband mixer) includes two branches, I-branch and Q-branch with a phase difference of 90°, to transmit a signal.

For an application scenario with a relatively compact layout area, such as in a high-frequency sensor application in a millimeter wave frequency band, physical distances between the I-branch and the Q-branch, and between an input branch and an output branch before mixing, etc. are short, which may cause a transmitted signal to have a problem of signal leakage between branches, between input and output ports, and between an IQ matching network and a mixer output by means such as magnetic coupling, substrate coupling, electrical coupling, and the like, thereby leading to serious deterioration of image rejection ratio and local oscillator leakage of mixer.

FIG. 12B is a simplified schematic diagram of a signal transmitter chain of a digital phase-shifter architecture according to an embodiment of the present disclosure. FIG. 12C is a schematic diagram based on the digital phase-shifter architecture in a signal transmitter chain shown in FIG. 12B. FIG. 4D is a schematic diagram of a transmitter chain including a specific compensation module according to an embodiment of the present disclosure.

A signal processing chain provided by an embodiment of the present application may be applied to an electromagnetic wave component, and the transmitter chain may include an analog signal source and a digital phase-shifter. The analog signal source is configured to provide an initial analog signal (such as an LO signal), and the digital phase-shifter is configured to provide a phase-shifted signal generated in a digital domain. The digital phase-shifter may also phase-shift the initial analog signal based on the generated phase-shifted signal to perform a preset phase-shifting operation on the initial analog signal.

As shown in FIG. 12B, in some optional embodiments, a signal transmitter chain of a digital phase-shifter architecture may include an analog signal source 141, a digital phase-shifter (Digital PS) 142, a transmitting antenna 143, and the like. That is, the analog signal source 141 may be configured to provide an LO signal, and the digital phase-shifter 142 may be configured to perform a preset phase-shifting operation on a received LO signal so that the phase-shifted LO signal is radiated into a preset spatial area through the transmitting antenna 143. The analog signal source 141 may be an architecture including a phase-locked loop (PLL), and may provide electromagnetic wave (such as laser, microwave, and the like) signals. The analog signal source 141, the digital phase-shifter 142, and the transmitting antenna 143 may be integrated into a single component, or may be separate individual components. For example, the analog signal source 141 and the digital phase-shifter 142 may be integrated in a package such as an SoC chip, and the transmitting antenna 143 may be connected through a peripheral port of the chip and formed on a carrier such as a PCB board. At the same time, in some optional embodiments, the transmitting antenna 143 may also be integrated on the package of the chip to form an AiP or an AoP, and has a chip structure of a packaged antenna.

As shown in FIG. 12B, in an exemplary embodiment, the digital phase-shifter 142 may include a Mixer 1421, a digital-to-analog converter (i.e., DAC) 1422, and a phase-shift signal source (e.g., a digital baseband signal source (Baseband)) 1423, and the like. That is, the phase-shift signal source 1423 may be configured to provide a digital phase-shifted signal; the digital-to-analog converter 1422 may then be configured to perform analog-to-digital conversion on the received digital phase-shifted signal to convert the digital phase-shifted signal to an analog phase-shifted signal; and the mixer 1421 may then be configured to perform a mixing operation on the received analog phase-shifted signal and a received transmitted signal from the analog signal source 141 to achieve a phase-shifting operation of setting the transmitted signal by using the digital phase-shifted signal. Optionally, when the signal transmitter chain described above provides a frequency sweep signal, such as an FMCW laser signal or an FMCW microwave signal, a frequency sweep transmitted signal may be provided based on the analog signal source 141, and/or a frequency sweep digital phase-shifted signal may be provided based on the phase-shift signal source 1423, so that a frequency sweep continuous wave signal may be output after being mixed by the mixer 1421.

In some optional embodiments, based on the structure shown in FIG. 12B, the analog signal source 141 may be configured to provide an FMCW signal in a centimeter wave band or millimeter wave band (e.g., 3.1 GHz, 24 GHz, 60 GHz, 77 GHz, 120 GHz, 250 GHz, etc.) in a microwave, the phase-shift signal source 1423 may be configured to provide a digital phase-shifted signal at MHz level (e.g., 3 MHz to 5 MHz, e.g., 3 MHz, 4 MHz, 5 MHz, etc.). That is, the digital-to-analog converter 1422 performs digital-to-analog conversion on an MHz-level digital phase-shifted signal to obtain an analog phase-shifted signal in a corresponding frequency range. The mixer 1421 may be configured to perform up-mixing or down-mixing operation on the received millimeter-wave frequency band FMCW signal based on the received analog phase-shifted signal in a fixed frequency band, so as to achieve a preset phase-shifting operation on the FMCW signal.

In some optional embodiments, a centimeter wave signal in the 3.1 GHz band may include a signal of 3.1 GHz to 10.6 GHz, such as 3.1 GHz, 5 GHz, 5 GHz, 6 GHz, 8 GHz or 10.6 GHz. A millimeter wave signal in the 77 GHz band may include a signal of 76 GHz to 81 GHz, such as a frequency sweep signal of 76 GHz to 77 GHz, 77 GHz to 79 GHz, or 79 GHz to 81 GHz, or a fixed frequency band signal of 76 GHz, 77 GHz, 78 GHz, 79 GHz, 80 GHz, or 81 GHz.

Based on the structure shown in FIG. 12B, since the phase-shift signal source 1423 provides a digital signal, in order to further adapt signal characteristics, the mixer 1421 may be set as an IQ Mixer and the digital-to-analog converter 1422 as an IQ DAC. Meanwhile, the phase-shift signal source 1423 may be configured to provide a digital baseband signal source (DDFS) for phase-shifting and/or to provide a corresponding source signal as a waveform controller (Waveform Control).

In an embodiment, as shown in FIG. 12C, a signal transmitter chain of a digital phase shifter architecture (TX digital phase shifter architecture) may include a digital Baseband signal source (Baseband), a Direct Digital Frequency Synthesizer (DDFS), an IQ digital to analog converter (DAC), a Low-Pass Filter (LPF), an IQ modulator (IQ modulator/IQ Mixer), a Power Amplifie (PA), etc. that is, the baseband signal source is configured to provide a digital phase-shifted source signal, and the direct digital frequency synthesizer may be configured to implement, based on a received source signal, at least one of a plurality of signal waveforms and transmission modes, such as Code-Division Multiplexing (CDM), Doppler Division Multiplexing (DDM), Time-Division Multiplexing (TDM), Space Division Multiplexing (SDM), Circuit Switch Data (CSD), and Digital Intermediate Frequency (Digital IF). A signal amplified by the power amplifier may be radiated into a preset spatial area through a transmitting antenna packaged as an integral or externally mounted.

According to the signal transmitter chain of the digital phase-shifter architecture in the embodiment of the present application, the digital phase-shifter architecture is configured to be abole to generate a baseband signal sequence in a digital domain, and may generate an analog baseband signal through a DAC, and then modulate the transmitted signal to a high frequency through a quadrature mixer, that is, the baseband signal of the architecture is generated in the digital domain and has better quadrature and lower side lobes, therefore, its phase-shifted phase may be generated very accurately, resulting in higher phase modulation accuracy.

In some optional embodiments, for a signal transmitter chain of the digital phase-shifter architecture, when an RF LO frequency sweep is used to realize the transmitted signal as an FMCW signal, a compensation module may be additionally provided to the signal transmitter chain for problems such as TX IQ Imbalance (Imbalance), signal leakage (such as TX LO Leakage) and harmonic distortion (HD) caused by IQ Mismatch. As shown in FIG. 12C, a compensation module (TX compensation) may be provided between a TX DDFS and an IQ DAC to perform operations such as calibration and compensation on the signal transmitter chain of the digital phase-shifter architecture to achieve operations that solve at least one of the above-described problems. The HD caused by a third-order nonlinearity of the baseband may be simply referred to as HD3.

In some optional embodiments, as shown in FIGS. 12C and 12D, the compensation module (TX compensation) may include at least one of an LO compensation unit (TX LO leakage compensation), an IQ compensation unit (TX IQ Imbalance compensation), and an HD3 compensation unit (TX HD3 compensation). That is, the LO compensation unit may be configured to compensate for signal leakage, the IQ compensation unit may be configured to compensate for IQ imbalance, and the HD3 compensation unit may be configured to compensate for the above-mentioned HD3. The LO compensation unit is configured to be operable to compensate for at least one of an IQ modulator imbalance (TX IQ Modulator imbalance), and an IQ channel imbalance. In addition, when the compensation module includes at least two of the LO compensation unit, the IQ compensation unit, and the HD3 compensation unit, compensation may be performed synchronously (such as in parallel) or sequentially (such as in series) according to actual needs and signal characteristics. As shown in FIG4D, IQ compensation may be performed first, then LO compensation is performed, and ultimately HD3 compensation is performed.

In some optional embodiments, the signal transmitter chain of the digital phase-shifter architecture may further include an error correction module (TX DAC Board Error Correction) for DAC and an additive white gaussian noise (AWGN) module for Gaussian white noise, etc., which are not shown in the figure, and may be added or deleted according to actual needs. I in the IQ mentioned in the embodiments of the present application may be expressed as an abbreviation of In-Phase (i.e., In-Phase), Q may be expressed as an abbreviation of Quadrature, and RF may be expressed as an abbreviation of Radio Frequency.

In an optional embodiment, the compensation for the IQ Imbalance may be achieved by compensating a conjugate signal of a BB (baseband) signal to reverse cancel a image component, and this compensation operation mode is not affected by a calibration mode of the IQ Imbalance. Compensation for LO Leakage may be achieved by adjusting DC components of both I and Q channels (i.e. DC bias). Similarly, a calibration mode of the LO Leakage has no impact on its compensation scheme. For HD3, since third-order harmonic distortion of a quadrature mixer V/I Converter is a main source of HD3, and the harmonic distortion will be affected by DC bias, when both the LO Leakage and HD3 in the transmitter chain need to be calibrated, it is necessary to perform LO Leakage calibration first, followed by HD3 calibration, to ensure accurate performance of HD3 calibration.

In addition, a compensation mode of HD3 in a digital pre-compensation architecture based on a digital cubic module and a digital pre-compensation architecture based on a frequency-multiplied waveform generator module will directly affect a subsequent calibration scheme and a subsequent compensation process. Specifically,

In an optional embodiment, for the digital pre-compensation architecture based on the digital cubic module, after calibrating and compensating the LO Leakage, after calibrating and compensating LO Leakage, a root source of the HD3 problem, i.e., a compensation coefficient of HD3, may be calibrated under a stable DC bias; then, IQ Imbalance is calibrated, and after continuing to compensate IQ Imbalance, the third-order harmonic distortion in both the I and Q channels according to the pre-compensation results for IQ Imbalance.

In an optional embodiment, for the digital pre-compensation architecture based on the frequency-multiplied waveform generator module, after calibrating and compensating for the LO Leakage, a compensation coefficient for HD3 may be obtained by calibration, and the IQ Imbalance may be calibrated and compensated under a stable DC bias; subsequently, actual waveforms of signals of both I and Q channels and a compensation coefficient for HD3 are respectively calculated based on the compensated results, and waveform information of 3 times and 5 times frequency that need to be pre-compensated is inversely calculated.

In another optional embodiment, for the digital pre-compensation architecture based on the frequency-multiplied waveform generator module, the LO Leakage may be calibrated and compensated first, then a pre-compensation coefficient for HD3 and IQ Imbalance may be calibrated simultaneously by multiple (e.g., three) observations, and then a pre-compensation coefficient at a HD3 mirror position may be calibrated by re-observation (e.g., twice); and ultimately, based on the pre-compensation coefficient at HD3 and HD3 mirror position, 3 times and 5 times frequency coefficients that need to be pre-compensated are inversely calculated. It should be noted that the observation in the embodiment of the present disclosure is used to represent operations such as testing and comparison and analysis of different test results.

FIG. 12E is a schematic diagram of calibrating and compensating a transmitter chain using an auxiliary receiving circuit according to an embodiment of the present application. As shown in FIG. 12E, the Transmitter may include a phase-shifting module PS, an amplifier PA, a power detector PD, and the like. For example, the transmitter may adopt a transmitter chain of a digital phase-shift architecture (Digital phase shifter) described in any embodiment of the present application. For details, please refer to the related diagrams and text descriptions, and it will not be repeated here. Since the transmitter adopts a digital phase-shifter architecture, while achieving more accurate phase-shifting operation, the transmitter channel may simultaneously support multiple modes such as multi-antenna DDM and Frequency Division Multiplexing (FDM). It may also eliminate a calibration operation of an RF Phase-Shifter, reduce isolation and coupling in a phase-shifting system, and reduce chain loss and manufacturing costs. In addition, in view of possible TX IQ mismatch, LO leakage and other problems, the transmitter of the digital phase-shifter architecture may also support RF Frequency Response compensation and calibration operation for IQ imbalance and LO leakage in a digital domain.

In view of TX IQ Mismatch, LO leakage, frequency response and other problems in the transmitter, relevant calibration and compensation operations may be performed by providing an Auxiliary Receiver (ARX for short). As shown in FIG. 12E, the ARX may include a Mixer, a TIA, an LPF, an HPF, an IQ ADC, an adder and an RF calibration module (RF Calib), which are connected in sequence. That is, an ARX IQ LO signal is received at one input of the Mixer and the other input is connected to a node before PD of the transmitter in a signal transmission direction (i.e., a direction of the arrow shown in FIG. 12E), or to any node after the phase-shifter (module). For example, it is connected to an output end of a PA (synchronously implementing calibration of the PA), an input end of the PA, and the like, to perform calibration operation on the transmitter through the ARX. There is a set frequency difference between a frequency of the LO signal in the transmitter and a frequency of the ARX IQ LO signal so that there is a frequency error between the two signals to simulate a real transceived signal loop.

In an optional embodiment, in order to further improve the calibration accuracy, a corresponding calibration circuit (i.e., a calibration receiving unit) may be provided for the ARX (i.e., an auxiliary receiving unit). For example, an RF tone signal generating circuit (RF Tone Generator) shown in FIG. 12E may include a TX DDFS, an adder, a Real DAC, an LPF, an amplifier, a multiplier, and a Band Pass Filter (BPF), which are connected in sequence. The adder may be configured to perform calibration compensation for the TX LO leakage Waveform (TX LO leakage Waveform), the multiplier may be configured to compensate for RF Tone Gen LO leakage, and the BPF is may be configured to filter out a DC signal generated by the LO leakage of the RF Tone Generator. That is, the RF Tone Generator may be configured to generate a plurality of stable Tone signals of different frequencies to enable calibration operation on the ARX.

In some optional embodiments, as shown in FIG. 12E, the ARX may be calibrated using the RF Tone Generator first, and then the calibrated ARX may be used to calibrate the Transmitter including a PA, for example, calibrate components and circuits such as a PD at PA output, a phase-shifter in the transmitter, a total gain from DAC to PA output, and a frequency response.

In an embodiment, as shown in FIG. 12E, a plurality of stable tone signals with different frequencies may be generated by using an RF Tone Generator to assist in calibrating the ARX, and then the calibrated ARX may be used to assist in calibrating the IQ imbalance, local oscillator leakage, inconsistent frequency response, and other problems of the transmitter.

As shown in FIG. 16, an embodiment of the present disclosure further provides still another signal processing method applied to an antenna array of an electromagnetic wave component having at least two signal transmitter chains. The method includes Step 1601 to Step 1603.

Step 1601: Determining a reference transmission delay and a time delay difference between a signal transmission delay of each of transmitter channels and the reference transmission delay.

In some exemplary embodiments, the reference transmission delay includes a first reference transmission delay and/or a second reference transmission delay. The first reference transmission delay may be a signal transmission delay of a transmitting antenna feeding line of any one of the transmitter channels, and the second reference transmission delay may be a signal transmission delay of a signal line between a local oscillator and a phase-shifter of any one of the transmitter channels.

In other exemplary embodiments, the reference transmission delay includes a first reference transmission delay, and/or a second reference transmission delay. The first reference transmission delay may be a signal transmission delay of a shortest transmitting antenna feeding line in the plurality of transmitter channels, and the second reference transmission delay may be a signal transmission delay of a shortest signal line between the local oscillator and the phase-shifters in the plurality of transmitter channels.

In an exemplary embodiment, a distance of the transmitting antenna feeding line and/or the signal line between the local oscillator and a phase-shifter in each of the transmitter channels may be measured, and a mode of measuring the distance may include a model simulation measurement or an actual measurement.

Step 1302: Generating a compensation signal corresponding to each of the transmitter channels according to the time delay difference.

In an exemplary embodiment, a frequency control parameter of the compensation signal is $\omega = \frac{\beta\mu}{T}$, and a phase control parameter is $\varphi = f_c\mu - \frac{\beta\mu^2}{2T}$, where $f_c$ is a starting frequency of a chirp signal, $\beta$ is a frequency variation range of the chirp signal, T is a frequency sweeping time of the chirp signal, and $\mu$ is a time delay difference between a signal transmission delay of a transmitter channel and a reference transmission delay.

Step 1303: Determining a transmitter channel corresponding to a currently received echo signal, and compensating the currently received echo signal using the corresponding compensation signal.

In an exemplary embodiment, the receiving channel includes an I-transmitter channel and a Q-transmitter channel. The compensation signal includes a cosine compensation signal cos ($\omega$n + $\varphi$) and a sinusoidal compensation signal sin ($\omega$n + $\varphi$). The currently received echo signal is compensated using one of the cosine compensation signal and the sinusoidal compensation signal, and then output to an I-receiving channel Y_I, and the currently received echo signal is compensated using the other of the cosine compensation signal and the sinusoidal compensation signal, and then output to a Q-receiving channel Y_Q.

According to still another signal transceiving method provided by an embodiment of the present application, a compensation signal is generated by a signal compensator according to a signal transmission delay corresponding to a currently received echo signal, and the compensation signal is used to compensate the currently received echo signal, thereby improving the quality of the received signal, and further improving the detection accuracy and detection range of the radar system.

In a radar system, a series of continuous linear frequency modulation pulse signals are transmitted through a transmitting antenna, and echoes of the pulse signals are received through a receiving antenna. After processing, detected target information may be output. This process is generally called a frame in time. The radar system detects surrounding moving or stationary objects in real time through continuous frame processing.

In a millimeter-wave radar system, in order to synthesize a large-aperture receiving antenna array and improve angular resolution performance of the radar system, multiple transmitting antennas are usually used to virtualize more receiving arrays to increase equivalent receiving aperture, which is called a Multiple Input Multiple Output (MIMO, Multiple Input Multiple Output) radar system. Doppler Division Multiplexing (DDM) technology may be used to separate signals transmitted by different transmitting antennas, but in DDM scheme, each transmitting antenna needs to be modulated with an initial phase that steps with a chirp (a linear frequency modulated continuous wave), which is generally realized by a phase-shifter in a radio frequency circuit. Howver, the phase-shifter generally has a phase-shift error, and the phase-shifter also affects amplitude of the pulse signal. Therefore, when different phase-shift values are set for the transmitting antenna, the amplitude of the pulse signal will fluctuate slightly. When the phase-shift error and the amplitude fluctuate greatly, accurate detection of a target object would be impossible.

Therefore, calibration of the phase-shifter plays an important role in the performance of the DDM MIMO radar system. A currently used calibration mode is: find appropriate setting of a phase-shifter under different working parameters and temperatures, so that an output of the phase-shifter is closest to the ideal phase-shift value, thereby achieving a purpose of phase-shifter calibration. However, there are still residual errors between the calibrated phase-shift value of the phase-shifter and the ideal phase-shift value, and the performance of the radar system cannot be well improved.

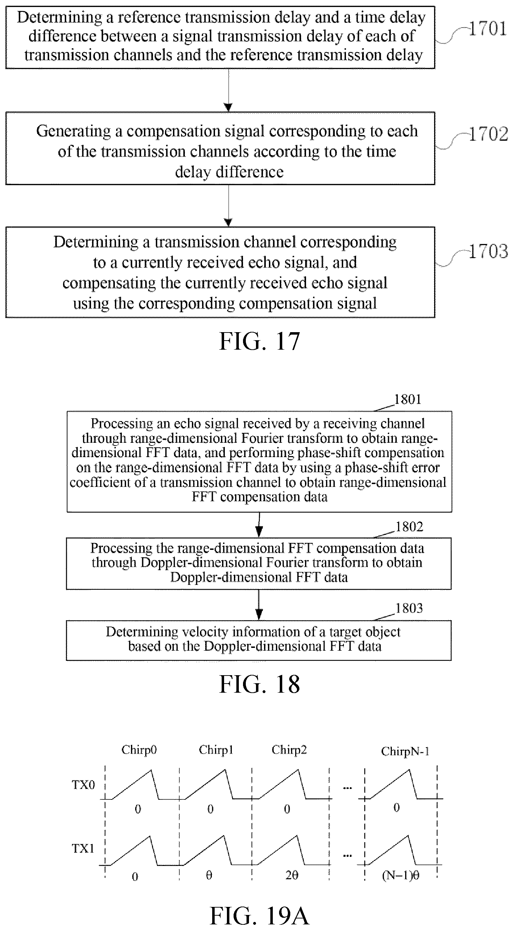

An embodiment of the present application provides a target detection method applied to a DDM radar sensor having at least one transceivingr channel, which is capable of compensating for an error of a phase-shifter and improving accuracy of angle calculation of a radar system, thereby improving accuracy of a detected target. As shown in FIG. 18, a target detection method according to an embodiment of the present application may include Step 10801 to Step 1803.

Step 1801: Processing an echo signal received by a receiving channel by range-dimensional Fourier transform to obtain range-dimensional FFT data, and performing phase-shift compensation on the range-dimensional FFT data by using a phase-shift error coefficient of a transmitter channel to obtain range-dimensional FFT compensation data.

In a DDM MIMO radar system, a pre-calibration method is generally used, that is, to find a suitable phase-shifter under different working parameters and temperatures, so that the phase-shifter outs a phase-shift value that is closest to an ideal phase-shift value, to phase-shift a chirp transmitted by the transmitter channel, so as to reduce the error caused by the phase-shifter. However, in fact, there is still a residual error between the calibrated phase-shift value and the ideal phase-shift value.

Each transmitting antenna has a phase-shifter, and phase-shift errors of different transmitting antennas are different. The errors have no influence on the range-dimensional FFT data, but only affects the accuracy of the Doppler-dimensional FFT data. Therefore, an embodiment of the present application proposes that after performing a range-dimensional Fourier transform (also called "1D FFT") on an echo signal received by each receiving channel to obtain the range-dimensional FFT data (also called "1D FFT data"), a compensation coefficient of each transmitter channel is used to perform phase-shift compensation on the range-dimensional FFT data to effectively eliminate the influence of the phase-shift error, thereby obtaining accurate range-dimensional FFT data.

According to the target detection method provided by the embodiment of the present application, compensation for the phase-shift error of the phase-shifter of the transmitting antenna is realized by performing phase-shift compensation processing on the range-dimensional FFT data. Specific operation process of how to perform the phase-shift compensation processing by using a phase-shift error coefficient, the specific coefficient included in the phase-shift error coefficient, and method steps of how to obtain the phase-shift error coefficient are not limited. In following embodiments, these contents will be described in a plurality of embodiments, and will not be repeated herein.

Step 1802: Processing the range-dimensional FFT compensation data through Doppler-dimensional Fourier transform to obtain Doppler-dimensional FFT data.

After obtaining the range-dimensional FFT compensation data, it may be continued to be processed through Doppler-dimensional Fourier transform (also referred to as "2D FFT") to obtain Doppler-dimensional FFT data (also referred to as "2D FFT data" and "velocity-dimensional FFT data").

Step 1803: Determining velocity information of a target object based on the Doppler-dimensional FFT data.

By performing constant false alarm detection (Constant False Alarm Rate, CFAR) on the Doppler-dimensional FFT data to remove a false target from energy dimension, target information has range-dimensional information and velocity-dimensional information.

According to the target detection method provided the embodiment of the present application, after obtaining the range-dimensional FFT data, the range-dimensional FFT data is phase-shifted and compensated by a compensation coefficient of each transmitter channel, so that accurate range-dimensional FFT data may be obtained. Then, the Doppler-dimensional FFT data is obtained through the compensated range-dimensional FFT data, and based on the Doppler-dimensional FFT data, the determined velocity information of the target object is accurate velocity information, thereby realizing the accurate detection of the target object.

Hereinafter, a phase-shift compensation process in the target detection method according to the above embodiment will be described with reference to a plurality of embodiments.

In some embodiments, the step of performing phase-shift compensation on the range-dimensional FFT data by using the phase-shift error coefficient of the transmitter channel includes: respectively using, for data corresponding to each chirp sequence in the range-dimensional FFT data, a phase-shift error coefficient of a transmitter channel corresponding to each chirp sequence to perform phase-shift compensation.

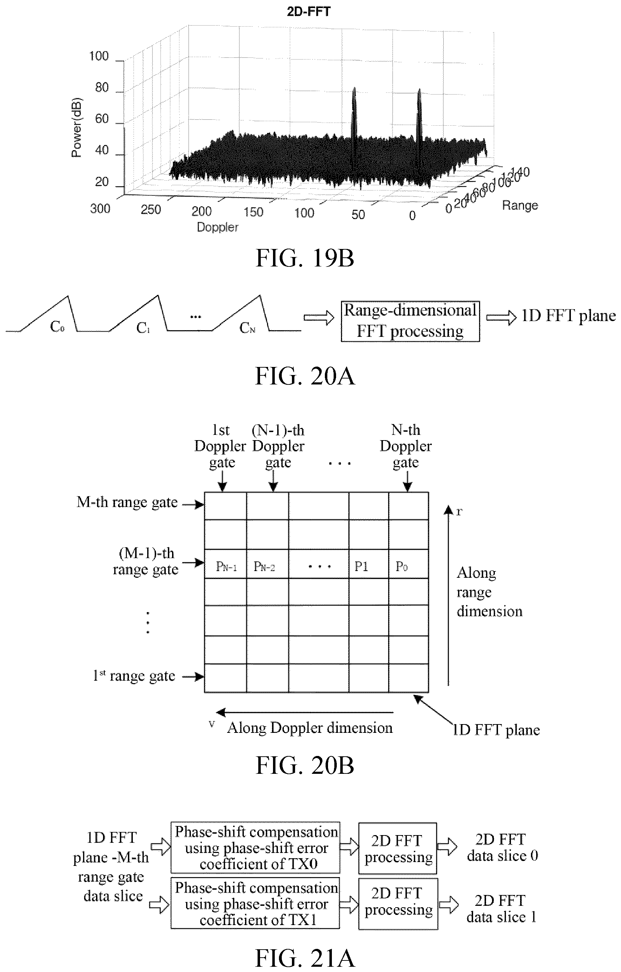

Taking a DDM radar sensor including two transmitter channels (corresponding to two transmitting antennas TX0 and TX1) as an example, as shown in FIG. 19a, it is a schematic diagram of chirp step phase modulation of two transmitting antennas. In a chirp sequence transmitted by the transmitting antenna TX0, each chirp has not been modulated in phase by a phase-shifter (it may also be considered that a phase sequence with a step of 0 degrees is modulated), so its echo signal has no velocity shift. In a chirp sequence transmitted by the transmitting antenna TX1, a modulation phase step is an initial phase of θ= π/2. When a phase error of modulation is 0, a receiver processes a received echo signal by two-dimensional Fourier transform (2D FFT) to obtain a 2D FFT plane, as shown in FIG. 19b. Two peaks on the 2D FFT plane are respectively 2D FFT peaks formed by echo signals transmitted by TX0 and TX1 and reflected by targets with a certain distance and velocity. According to pre-modulated step phases of TX0 and TX1, A distance of these two peaks in Doppler dimension is known, so they may correspond to TX0 and TX1, thereby achieving a purpose of multiplexing and smooth separation in the Doppler dimension.

As can be seen, in principle, as long as the echo signals of TX0 and TX1 have been obtained, in range gate FFT data obtained by performing 1D FFT processing on the echo signals, the phase-shift error coefficient of the transmitter channel corresponding to TX0 may be used for phase-shift compensation for data corresponding to the chirp sequence transmitted by TX0, and the phase-shift error coefficient of the transmitter channel corresponding to TX1 may be used for phase-shift compensation for data corresponding to the chirp sequence transmitted by TX0.

However, in the range gate FFT data, the data corresponding to the chirp sequences belonging to TX0 and TX1 may only be separated by the Doppler dimension obtained after the 2D FFT processing, so when the range gate FFT data is compensated, the data corresponding to the two chirp sequences may not be distinguished first. That is, the phase-shift error coefficients corresponding to the two transmitter channels (TX0 and TX1) are respectively used for the entire obtained range gate FFT data to perform phase-shift compensation simultaneously. This covers the operation of performing phase-shift compensation on the data corresponding to each chirp sequence in the range-dimensional FFT data by using the phase-shift error coefficient of the transmitter channel corresponding to each chirp sequence. Then, the data corresponding to the chirp sequences corresponding to the two transmitter channels (TX0 and TX1) are separated from the ultimately obtained Doppler FFT data, so that it can be distinguished that the phase-shift compensated range gate FFT data (range gate FFT compensated data) corresponding to each Doppler FFT data is data obtained by using the phase-shift error coefficient of which transmitter channel to perform phase-shift compensation processing on the range gate FFT data corresponding to the chirp sequence transmitted by which transmitter channel.

In an exemplary embodiment, the range-dimensional FFT data is composed of a plurality of range gate FFT data, and correspondingly, the step of respectively using, for data corresponding to each chirp sequence in the range-dimensional FFT data, the phase-shift error coefficient of the transmitter channel corresponding to each chirp sequence to perform phase-shift compensation, may include: using, for each range gate FFT data, a phase-shift error coefficient of a transmitter channel respectively corresponding to each chirp sequence to perform phase-shift compensation, to obtaining range gate FFT compensation data corresponding to each range gate FFT data. Correspondingly, the step of processing the range-dimensional FFT compensation data through Doppler-dimensional Fourier transform to obtain Doppler-dimensional FFT data may include: processing each range gate FFT compensation data through Doppler-dimensional Fourier transform to obtain Doppler-gate FFT data corresponding to each range gate FFT compensation data.

In an embodiment, FIG. 20a is a schematic diagram of a process of performing range-dimensional FFT processing for a single receiving channel. In FIG. 20a, the echo signal received by the receiving channel, that is, the chirp sequence ($C_0$, $C_1$, ... $C_N$), includes the chirp sequences of two transmitter channels corresponding to TX0 and TX1. By performing range-dimensional FFT processing on the echo signal, range-dimensional FFT data ($P_0$, $P_1$, ...$P_{N-1}$) is obtained, and a 1D FFT data plan view is formed as shown in FIG. 20b. On the 1D FFT data plane, two dimensions are included: range dimension and Doppler dimension. The range dimension includes M range gates, and each range gate is range-dimensional FFT data having a same range but different chirp sequence numbers. The Doppler dimension includes N Doppler gates, and each Doppler gate is range-dimensional FFT data of a chirp pulse.

Referring to FIGS. 20a and 20b, it can be seen that the range-dimensional FFT data $P_0$, $P_1$, ...$P_{N-1}$ corresponding to each receiving channel corresponds to the chirp sequence $C_1$, $C_2$, ...$C_N$, and the chirp sequence $C_1$, $C_2$, ... $C_N$ includes echo signals of the two transmitter channels corresponding to TX0 and TX1, that is, chirp sequences corresponding to the two transmitter channels. Since the range-dimensional FFT data is composed of a plurality of range gate FFT data, when phase-shift compensation is performed on the range-dimensional FFT data, phase-shift compensation processing may be performed separately on each range gate in FIG. 20b.

In an embodiment, as shown in FIG. 21a, taking an M-th range gate as an example, phase-shift compensation is performed on the 1D FFT data of the M-th range gate (also referred to as "M-th range gate data slice") along the Doppler dimension using the phase-shift error coefficients of the transmitter channels of the transmitting antennas TX0 and TX1, respectively, to obtain two corresponding range gate FFT compensation data slices. Since the phase-shift compensation for each range gate FFT data slice is supplemented by each transmitter channel respectively, a plurality of range gate FFT compensation data slices equal to a quantity of transmitter channels may be obtained for each range gate FFT data slice.

In this way, after subsequent 2D FFT processing is performed on the range gate FFT compensation data slice, a plurality of 2D FFT data slices equal to a quantity of transmitter channels may be obtained, for example, 2D FFT data slice 0 and 2D FFT data slice 1 in FIG. 21a. Since the 2D FFT data slice 0 and the 2D FFT data slice 1 each contain data corresponding to chirp sequences of two transmitter channels (TX0 and TX1), respectively, after obtaining the 2D FFT data slice, the data corresponding to respective transmitter channel may be separated, thereby separating the Doppler-dimensional FFT data obtained by performing phase-shift compensation on the range-dimensional FFT data of a certain transmitter channel based on the phase-shift compensation coefficient of the transmitter channel.

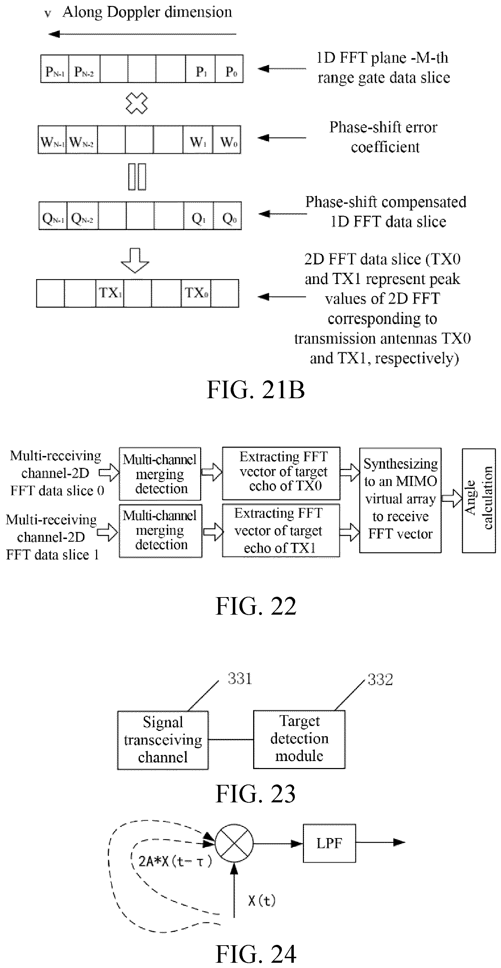

In an embodiment, as shown in FIG. 21b, still taking the M-th range gate as an example, phase-shift compensation is performed on an M-th range gate data slice $P_0$, $P_1$, ... $P_{N-1}$ by using a phase error coefficient $W_0$, $W_1$, ... $W_{N-1}$. For example, the compensation algorithm is to multiply the two in pairs, and a phase-shift compensated 1D FFT data slice $Q_0$, $Q_1$, ... $Q_{N-1}$ may be obtained; then, 2D FFT processing is performed on the compensated data to obtain a 2D FFT data slice, which contains two peaks corresponding to two transmitter channels, respectively (2D FFT peaks corresponding to TX0 and TX1). By determining the transmitter channel to which the phase-shift error coefficient used in the phase-shift compensation process belongs, it can be known that the two 2D FFT peaks are the 2D FFT data correspondingly obtained by respectively using the phase-shift error coefficient of which transmitter channel to perform phase-shift compensation processing on the range gate FFT data of which transmitter channel.

In a DDM radar sensor, due to different quantities of transmitter channels and receiving channels in a transceiving channel, the process of determining the velocity information of the target object based on the Doppler-dimensional FFT data is also different, because when there are two or more receiving channels, it is necessary to consider a process of merging 2D FFT data of different receiving channels.

First, taking one receiving channel as an example, for example, when the transceiving channel is composed of at least two transmitter channels and one receiving channel, the step of determining the velocity information of the target object based on the Doppler-dimensional FFT data may include determining velocity information of the target object based on all Doppler gate FFT data.

In the foregoing embodiments, the processing of a plurality of Doppler gate FFT data obtained via one range gate FFT data in the phase-shift compensated 2D FFT data formed by a transmitter channel corresponding to two transmitter channels TX0 and TX1 and one receiving channel (single receiving channel) has been described. Since it is a single receiving channel, it is not necessary to consider the merging of the 2D FFT data for a certain transmitter channel between channels. Therefore, after obtaining the plurality of Doppler gate FFT data corresponding to each range gate FFT data, CFAR processing may be performed based on all the Doppler gate FFT data to remove a false target from an energy dimension, thereby obtaining range information and velocity information of the target object.

When the transceiving channel includes two or more receiving channels, it is necessary to consider the merging of the 2D FFT data of different receiving channels. For example, when the transceiving channel consists of at least two transmitter channels and at least two receiving channels, the step of determining the velocity information of the target object based on the Doppler-dimensional FFT data may be implemented by following steps:

Step a: separately extracting Doppler gate FFT data in each receiving channel, the Doppler gate FFT data in each receiving channel including Doppler gate FFT data compensated by phase-shift error coefficients of different transmitter channels;

Step b: merging the Doppler gate FFT data in all receiving channels that have been compensated by a phase-shift error coefficient of a same transmitter channel to obtain a plurality of groups of Doppler gate FFT data corresponding to each transmitter channels;

Step c: extracting target Doppler gate FFT data from each group of Doppler gate FFT data, the target Doppler gate FFT data being an echo signal of a transmitter channel corresponding to the group of Doppler gate FFT data; and

Step d: synthesizing the target Doppler gate FFT data extracted from each group of Doppler gate FFT data, and determining velocity information of the target object based on the target Doppler gate FFT data extracted from each group of Doppler gate FFT data.

In an embodiment, as shown in FIG. 22, in the 2D FFT data slice (Doppler gate FFT data) of multiple receiving channels, data of multiple receiving channels and multiple transmitter channels are covered in each slice, so it is necessary to perform multi-channel merging detection for each 2D FFT data slice, determine the 2D FFT data of each transceiving channel (a receiving channel and a transmitter channel constitute a transceiving channel), extract an FFT vector of a target echo of a transmitted signal of each transmitter channel from the 2D FFT data, synthesize FFT vectors of receptive transmitter channels into an MIMO virtual array to form an FFT vector of the receiving channel, and then calculate an angle of the target based on the synthesized FFT vector to determine the velocity information of the target object.

In Step a, for example, the processing procedure shown in FIGS. 21a and 21b may be adopted. Two Doppler gate FFT data slices may be obtained for each range gate data slice of each receiving channel, for example, the M-th range gate FFT data slice. One Doppler gate FFT data slice is obtained by phase-shift compensation based on the phase-shift error coefficient of TX0 and is denoted as 2D FFT data slice 0, and the other Doppler gate FFT data slice is obtained by phase-shift compensation based on the phase-shift error coefficient of TX1 and denoted as 2D FFT data slice 1. In other words, for the Doppler gate FFT data of an entire receiving channel, two types of Doppler gate FFT data may be obtained by extracting according to the phase-shift error coefficients of different transmitter channels used in the phase-shift compensation process, one is obtained by phase-shift compensation based on the phase-shift error coefficient of TX0, and the other is obtained by phase-shift compensation based on the phase-shift error coefficient of TX1.

In Step b, after obtaining the Doppler gate FFT data of each receiving channel and classifying and extracting the Doppler gate FFT data according to the phase-shift error coefficients of different transmitter channels used in the phase-shift compensation process, the extracted Doppler gate FFT data compensated by the phase-shift error coefficient of the same transmitter channel may be merged to obtain a plurality of groups of Doppler gate FFT data corresponding to the corresponding transmitter channels. For example, for each M-th range gate shown in FIG. 21a, all 2D FFT data slices 0 in respective receiving channels that have been obtained by performing phase-shift compensation based on the TX0 phase-shift error coefficient are merged to obtain a 2D FFT data slice 0 of multiple receiving channels (shown in FIG. 22). Similarly, all 2D FFT data slices 1 in respective receiving channels that have been obtained by performing phase-shift compensation based on the TX1 phase-shift error coefficient of each receiving channel are merged to obtain a 2D FFT data slice 1 of multiple receiving channels (shown in FIG. 22).

It should be noted that, in the 2D FFT data slice 0 of multiple receiving channels, although all the Doppler gate FFT data are obtained by performing phase-shift compensation based on the TX0 phase-shift error coefficient, there are 2D FFT data corresponding to echo signals of two transmitter channels. Therefore, when performing phase-shift compensation based on the TX0 phase-shift error coefficient, there will be two phase-shift compensation situations: one is phase-shift compensation for an echo signal of the TX0 transmitting channel based on the TX0 phase-shift error coefficient, and the other is phase-shift compensation for an echo signal of the TX1 transmitting channel based on the TX0 phase-shift error coefficient. Obviously, only the first situation, that is, the phase-shift compensation for the echo signal of the TX0 transmitting channel based on the phase-shift error coefficient of TX0, is effective phase-shift compensation, and the 2D FFT data slice 0 correspondingly obtained is valid Doppler gate FFT data.

Similarly, in the 2D FFT data slice 1 of multiple receiving channels, although all the Doppler gate FFT data are obtained by performing phase-shift compensation based on the TX1 phase-shift error coefficient, there are 2D FFT data corresponding to echo signals of two transmitter channels. Therefore, when performing phase-shift compensation based on the TX1 phase-shift error coefficient, there will be two phase-shift compensation situations: one is phase-shift compensation for an echo signal of the TX0 transmitting channel based on the TX1 phase-shift error coefficient, and the other is phase-shift compensation for an echo signal of the TX1 transmitting channel based on the TX1 phase-shift error coefficient. Obviously, only the second situation, that is, the phase-shift compensation for the echo signal of the TX1 transmitting channel based on the phase-shift error coefficient of TX1, is effective phase-shift compensation, and the 2D FFT data slice 1 correspondingly obtained is valid Doppler gate FFT data.

Therefore, in Step c, it is necessary to extract valid Doppler gate FFT data from each group of Doppler gate FFT data corresponding to respective transmitter channel. That is, for each group of Doppler gate FFT data, it is necessary to determine which Doppler gate FFT data are the echo signals of the corresponding transmitter channel (which may be realized by multi-channel merging detection as in FIG. 22), and those Doppler gate FFT data that are the echo signals of the corresponding transmitter channel are taken as target Doppler gate FFT data and extracted from the group of Doppler gate FFT data.

As shown in FIG. 22, in an embodiment, for each group of Doppler gate FFT data corresponding to the transmitter channel of TX0, it is necessary to extract a portion of Doppler gate FFT data that are echo signals of the transmitter channel of TX0 as target Doppler gate FFT data (corresponding operation is to extract a FFT vector of a target echo of TX0), and for each group of Doppler gate FFT data corresponding to the transmitter channel of TX1, it is necessary to extract a portion of Doppler gate FFT data that are echo signals of the transmitter channel of TX1 as target Doppler gate FFT data (corresponding operation is to extract a FFT vector of a target echo of TX1).

In step d, all the target Doppler gate FFT data are merged, that is, all the Doppler gate FFT data received by the receiving channels that have been obtained based on the effective phase-shift compensation processing are merged to obtain an MIMO virtual array, which is used as a 2D FFT data vector of multiple receiving channels (corresponding operation is to synthesize a MIMO virtual array in FIG. 22 to obtain a received FFT vector). By performing CFAR processing on the 2D FFT data vector obtained by merging to remove a false target from energy dimension, target information has range-dimensional information and velocity-dimensional information.

Hereinafter, a step of acquiring a phase-shift error coefficient will be described with reference to at least one embodiment.

In some embodiments, the phase-shift error coefficient of the transmitter channel may be obtained by comparing a chirp sequence corresponding to the transmitter channel with a standard chirp sequence generated by a standard phase-shifter to obtain the phase-shift error coefficient of the transmitter channel.

In an exemplary embodiment, a chirp sequence transmitted by each transmitter channel of the DDM radar sensor under modulation of a built-in phase-shifter may be detected in advance, meanwhile a standard phase-shifter is used to generate a standard chirp sequence, then the chirp sequence corresponding to the transmitter channel is compared with the standard chirp sequence, and compensation calculation relationship between the two is determined, to obtain a phase-shift error coefficient of the transmitter channel. The compensation calculation relationship may be, but is not limited to, calculation relationship of multiplication or addition.

In some embodiments, the step of performing phase-shift compensation on the range-dimensional FFT data by using the phase-shift error coefficient of the transmitter channel to obtain range-dimensional FFT compensation data may include: multiplying or adding the phase-shift error coefficient of the transmitter channel with the range-dimensional FFT data to obtain a range-dimensional FFT compensation data.

For example, in FIG. 21b, the M-th range gate slice in the 1D FFT data plane may be multiplied by the phase-shift error coefficient to obtain a compensated 1D FFT data slice. In some embodiments, the phase-shift error coefficient may include a phase-shift phase error and/or a phase-shift amplitude error.

Hereinafter, the method described above will be supplemented by at least one embodiment, and a processing procedure for determining angle information of the target object will be added.

In some embodiments, the target detection method described above may further include a step of determining angle information of the target object based on the Doppler-dimensional FFT data. In an embodiment, when a radar detects a target object, in addition to detecting position and velocity of the target object, another important detection content is to determine angle information of the target object, i.e., the angle information of the target object relative to a monitoring point. In some embodiments, the step of determining angle information of the target object based on the Doppler-dimensional FFT data may include: extracting and compensating complex data at a peak of the Doppler-dimensional FFT data generated by the corresponding transmitter channel from the Doppler-dimensional FFT data, and synthesizing a receiving vector to determine angle information of the target object.

For example, in FIG. 22, after obtaining the target 2D FFT data slices corresponding to TX0 and TX1 respectively, complex values at 2D FFT peaks corresponding to TX0 and TX1 are extracted from the two groups of 2D FFT data slices respectively, and synthesized into a receiving vector, which expand a receiving array and improve an angular resolution. Because of the corresponding compensation, these 2D FFT complex values are accurate, and after angle calculation, accurate angle information of the target object may be obtained.

In some embodiments, the transmitter chain corresponding to the transmitter channel in an embodiment of the present application may include an analog signal source and a phase-shifter. The analog signal source may be configured to provide an initial analog signal, and the phase-shifter may be configured to generate a phase-shifted signal and phase-shift the initial analog signal based on the phase-shifted signal to perform a preset phase-shifting operation on the initial analog signal, thereby realizing a wave transmission mode of DDM. The phase-shifter may be a delay line phase-shifter or a digital phase-shifter.

In some embodiments, when the phase-shifter is a digital phase-shifter, the digital phase-shifter includes a digital phase-shift signal source, a digital-to-analog converter, and a mixer. The digital phase-shifter may be configured to generate a digital phase-shifted signal, the digital-to-analog converter may be configured to convert a received digital phase-shifted signal to an analog phase-shifted signal, and the mixer may be configured to perform a mixing operation on a received initial analog signal using the received analog phase-shift signal to perform a preset phase-shift operation on the initial analog signal.

An embodiment of the present application provides a signal processing chain, including a transmitter chain for transmitting an electromagnetic wave signal and a receiver chain for receiving an echo signal formed based on the electromagnetic wave signal. The transmitter chain includes an analog signal source and a digital phase-shifter. The analog signal source may be configured to provide an initial analog signal, and the digital phase-shifter may be configured to generate a digital phase-shifted signal and phase-shift the initial analog signal based on the digital phase-shifted signal to perform a preset phase-shift operation on the initial analog signal. The receiver chain includes an analog-to-digital converter and a digital baseband processing module. The analog-to-digital converter may be configured to perform analog-to-digital conversion on a received echo signal to obtain a digital baseband signal, and the digital baseband processing module may be configured to sequentially perform range-dimensional Fourier transform and velocity-dimensional Fourier transform on the digital baseband signal The digital baseband processing module includes a phase-shift compensation unit which may be configured to use a phase-shift error coefficient of the digital phase-shifter in the transmitter chain to perform phase-shift compensation on range-dimensional FFT data obtained by range-dimensional Fourier transform; and the digital baseband processing module may be configured to perform velocity-dimensional Fourier transform according to the compensated range-dimensional FFT data.

In the transceiving chain in the embodiment of the present application, a frequency of a TX-LO signal received by an IQ modulator in the transmitter chain and a frequency of a RX-LO signal received by a Real Mixer in the receiver chain may be the same. For example, as shown in FIG. 12B, if a signal output by the Baseband is a sine wave of x MHz, the TX-LO signal and the RX-LO signal may be both a sine wave of z GHz.

In some embodiments, the transmitter chain may adopt a digital phase-shift architecture, and the receiver chain may adopt a component of an analog architecture, that is, a component adopting IQ is not used, which may effectively be compatible with sensors of the receiver chain of the analog architecture, and effectively reduce the development cost of an entire transceiving chain system. Optionally, in an embodiment of the present application, the receiver chain may include a receiving antenna, that is, the receiving antenna may be connected through a peripheral port of a chip, and formed on a carrier such as a PCB board. Meanwhile, in some optional embodiments, the receiving antenna may also be integrated on a package of the chip to form a structure such as AiP, AoP, RoP, or the like, that is, a chip structure having a packaged antenna.

In some optional embodiments, in order to match the transmitter chain of the digital phase-shifter architecture, relevant adjustments may be made to the receiver chain accordingly. For example, the transceiving chain shown in FIG. 12C may include a transmitter chain architecture and a receiver chain similar to those in FIG. 12B (the same portions will not be specifically described here to avoid redundant description). That is, the Real Mixer in the receiver chain in FIG. 12B is adjusted to an IQ Demodulator, and the Real ADC is adjusted to an IQ ADC. In this case, the receiver chain may include a low noise amplifier (LNA), an IQ Demodulator (IQ Demodulator), a transimpedance amplifier (TIA), a low pass filter (LPF), a high pass filter (HPF), an IQ digital-to-analog converter (IQ ADC), and the like, which are connected in sequence. That is, after being sequentially processed by the LNA, IQ Demodulator, TIA, LPF, HPF and IQ, an echo signal received by the receiving antenna is converted into an IQ digital baseband signal, and a subsequent digital signal processing module processes the IQ digital baseband signal to obtain parameter information such as distance, velocity, angle, height and micro-motion characteristics (i.e., micro-Doppler) of the target.

In some optional embodiments, in a signal transceiving chain of the digital phase-shifter architecture, the digital baseband processing module (which may be provided after the IQ ADC) in the receiver chain may further include a phase-shift compensation unit for compensating for an error of the phase-shifter. The phase-shift compensation unit may obtain range-dimensional FFT data through range-dimensional Fourier transform, and perform phase-shift compensation on the range-dimensional FFT data by using the phase-shift error coefficient of the transmitter channel (or transmitter chain) to obtain range-dimensional FFT compensation data, and subsequently, performing processing such as velocity-dimensional FFT and wave arrival estimation based on the range-dimensional FFT compensation data, to achieve detection of target data. Specifically, it may be implemented according to the method according to any one of embodiments of the present application.

Another embodiment of the present application relates to an integrated circuit, as shown in FIG. 23, including: a signal transceiving channel 331 for transmitting a radio signal and receiving an echo signal formed by reflection of the radio signal by a target, and a target detection module 332 configured to detect a target object according to the echo signal based on the method according to any one of the above embodiments. Optionally, the integrated circuit may be a chip structure, such as a millimeter wave radar chip, or the like. Of course, the integrated circuit may be implemented by other hardware. In some embodiments, the target detection module 332 may include: a first processing unit configured to process the echo signal received by the receiving channel by range-dimensional Fourier transform to obtain range-dimensional FFT data, and perform phase-shift compensation on the range-dimensional FFT data by using a phase-shift error coefficient of the transmitter channel to obtain range-dimensional FFT compensation data; a second processing unit configured to process the range-dimensional FFT compensation data through Doppler-dimensional Fourier transform to obtain Doppler-dimensional FFT data; and a detection unit configured to determine velocity information of a target object based on the Doppler-dimensional FFT data.

A receiving end of Linear Frequency Modulated Continuous Wave (LFMCW) radar uses a local oscillator (LO) and a received echo to mix to obtain an intermediate frequency (IF) signal, which is then sampled by an analog/digital converter (ADC) and further digitally processed to determine the target. LO may be coupled to another input port of the mixer through multiple paths, and mixed with a local oscillator signal itself to obtain a low-frequency intermediate frequency signal. This phenomenon is called local oscillator leakage. In addition, a signal of the transmitting antenna may also be coupled to the receiving end. This phenomenon is called transmit-receive leakage. Both of these phenomena will produce false targets at close distance near direct current (DC) in results of digital processing.

For FMCW, a transmitted signal is: $z(t) = \exp(j*(2\pi f_c t + \pi \frac{\beta}{T} t^2 + \theta))$, where z(t) is the transmitted signal, $f_c$ is an operating frequency, $\beta$ is a scanning bandwidth of the transmitted signal, T is a bandwidth of the transmitted signal, and $\theta$ is an initial phase of the transmitted signal.

FIG. 24 is a schematic diagram of a model signal of LO leakage according to an embodiment of the present application. As shown in FIG. 24, LPF represents a low-pass filter, and a circle represents a mixer. Under normal circumstances, a portion of the local oscillator signal x (t) will leak to the other end of the mixer through other portions of a circuit, and there may be many paths for such leakage. Therefore, for K leakage paths, there is an expression as follows:

$$\sum_{k=0}^{K-1} 2A_k \cdot x(t-\tau_k) = \sum_{k=0}^{K-1} 2A_k \cdot (\cos(2\pi f_c(t-\tau_k) + \pi \frac{\beta}{T}(t-\tau_k)^2 + \theta)$$

, where $A_k$ is an amplitude of a leakage signal on a k-th leakage path, and $\tau_k$ is a delay of the leakage signal on the k-th leakage path.

Then, output of the mixer at the receiving end, after passing through LPF, may be obtained as:

$$\mathrm{LPF}\!\left(\mathrm{x(t)}\sum_{k=0}^{K-1} 2A_k \cdot \mathrm{x}(t-\tau_k)\right) = \sum_{k=0}^{K-1} A_k \cdot \cos\!\left(2\pi f_c \tau_k - \pi \frac{\beta}{T}\tau_k{}^2 + 2\pi \frac{\beta \tau_k}{T}\mathrm{t}\right)$$

It is equivalent to generating k beat frequencies of $\dfrac{\beta \tau_k}{T}$. Therefore, for LO leakage at the receiving end, K low frequency components in the echo signal at the receiving end need to be estimated and filtered out.

In order to be able to filter out several low-frequency interference frequency components in the received signal to suppress low-frequency leakage so as to avoid generation of false targets at close distance near DC in the result of digital processing, an embodiment of the present application provides , which is used for estimating and filtering out K low-frequency frequency components in the signal received at the receiving end, so as to effectively eliminate influence of LO leakage on the received signal, thereby avoiding generation of false targets at close distance near direct current (DC) in the result of digital processing.

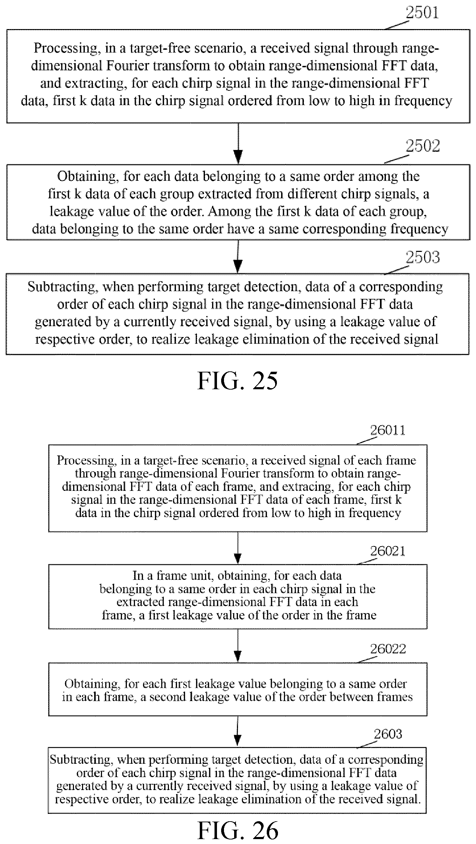

An embodiment of the present application relates to a processing method for receiving leakage in an FMCW, and an execution subject of the method may be an FMCW radar system. As shown in FIG. 25, the processing method for receiving leakage in an FMCW includes Step 2501 to Step 2503.

Step 2501: Processing, in a target-free scenario, a received signal through range-dimensional Fourier transform to obtain range-dimensional FFT data, and extracting, for each chirp signal in the range-dimensional FFT data, first k data in the chirp signal ordered from low to high in frequency.

In an exemplary embodiment, in a target-free scenario, a radar system performs range-dimensional Fourier transform (also referred to as "1D FFT") on the signal received by the receiving channel to obtain range-dimensional FFT data (also referred to as "1D FFT data"), and then orders data in each chirp according to the frequency from low to high for each chirp signal (chirp) in the range-dimensional FFT data, that is, the data in each chirp is ordered from small to large according to a range gate, and the smaller the frequency of the data, the smaller the corresponding range gate. When there are LO leakage signals in the received signal, frequencies of these LO leakage signals will be mainly distributed in a low frequency band, which makes it easy for false targets near DC to appear in radar detection results. Therefore, it is necessary to evaluate a low-frequency LO leakage signal in the target-free scenario, and eliminate the low-frequency LO leakage signal from each chirp of the received signal when performing target detection.

In an embodiment, for each chirp in the range-dimensional FFT data generated by the received signal in a target-free scenario, first k data in the chirp ordered from low to high in frequency are first extracted, and the k data are used as evaluation objects of LO leakage, where k is an integer greater than 1.

Step 2502: Obtaining, for each data belonging to a same order among the first k data of each group extracted from different chirp signals, a leakage value of the order. Among the first k data of each group, data belonging to the same order have a same corresponding frequency.

In an exemplary embodiment, for each chirp in the range-dimensional FFT data generated by the received signal in a target-free scenario, a group of first k data ordered from low to high in frequency may be extracted correspondingly, and a rank of each data in the first k data in which it is located is called an order, which may be expressed as index (i), where i is an integer of [1, k]. When a sampling frequency used for receiving each chirp is the same, the data in the first k data of each group that belong to the same order have a same corresponding frequency, which may represent a same range gate. By evaluating energy of each data in the same order in each chirp, signal leakage corresponding to the order may be obtained, and the signal leakage may be quantitatively described by the leakage value. In this way, a leakage value of the order may be obtained for the data corresponding to each order in each chirp. By ordering the corresponding leakage values of each order according to the same order, k leakage values with an order relationship may be obtained.

Step 2503: Subtracting, when performing target detection, data of a corresponding order of each chirp signal in the range-dimensional FFT data generated by a currently received signal, by using a leakage value of respective order, to realize leakage elimination of the received signal.

In an exemplary embodiment, after obtaining k leakage values with an order relationship in a target-free scenario, based on the same order relationship, data of a corresponding order in each chirp in the range-dimensional FFT data obtained by processing the received signal when the radar system performs target detection may be subtracted using the leakage values of each order, to eliminate leakage of the received signal, that is, to obtain leakage-eliminated range-dimensional FFT data.

According to the processing method for receiving leakage in an FMCW, when there are a plurality of leakage paths at the receiving end of an LFMCW radar, a leakage signal is estimated to obtain a low frequency of the leakage signal, and a plurality of low frequency interference frequency components in a signal received during target detection are filtered out based on the low frequency to realize leakage suppression, which avoids generation of false targets at close distance near digital conversion (DC) in the result of digital processing.

Another embodiment of the present application relates to a processing method for receiving leakage in an FMCW, in which each execution step is refined in units of frames on the basis of the embodiment shown in FIG. 25. As shown in FIG. 26, the processing method for receiving leakage in an FMCW includes following steps.

In some embodiments, Step 2501 in FIG. 25 may include Step 26011.

Step 26011: Processing, in a target-free scenario, a received signal of each frame through range-dimensional Fourier transform to obtain range-dimensional FFT data of each frame, and extracting, for each chirp signal in the range-dimensional FFT data of each frame, first k data in the chirp signal ordered from low to high in frequency.

As shown in FIG. 20b, it is a one-dimensional FFT plane ("1D FFT plane") obtained by performing range-dimensional FFT processing on a signal of a frame. A transverse direction is a Doppler-dimensional direction (v), one frame includes M Doppler gates, and each Doppler gate corresponds to a chirp. A longitudinal direction is a range-dimensional direction (r), one frame includes N range gates, and each range gate corresponds to range-dimensional FFT data on a same frequency. Each chirp is divided into multiple range gates from low to high in frequency (range gates from small to large).

In this embodiment, for each chirp in the range-dimensional FFT data corresponding to each frame, first k data in the chirp ordered from low to high in frequency, that is, data of first k range gates ordered from small to large in FIG. 20b, are extracted in a frame unit.

In some embodiments, Step 2502 in FIG. 25 may include Steps 26021-26022.

Step 26021: In a frame unit, obtaining, for each data belonging to a same order in each chirp signal in the extracted range-dimensional FFT data in each frame, a first leakage value of the order in the frame.

In an embodiment, in a frame unit, a signal received in each frame includes M chirps, and each chirp includes N data sampling points. In order of frequency from low to high, s1 [0] represents a first data sampling point corresponding to a first chirp, and Fs1 [0] represents range-dimensional FFT data obtained after the first data sampling point corresponding to the first chirp is processed through range-dimensional FFT transform. By analogy, range-dimensional data corresponding to N data sampling points in M chirps is calculated as follows:

$$s1 \ [0], \ s1 \ [1],... \ s1 \ [N-1], \ (FFT) = > Fs1 \ [0], \ Fs1 \ [1],... \ Fs1 \ [k], \ ... \ Fs1 \ [N-1],$$
$$s2 \ [0], \ s2 \ [1],... \ s2 \ [N-1], \ (FFT) = > Fs2 \ [0], \ Fs2 \ [1],... \ Fs2 \ [k], \ ... \ Fs2 \ [N-1],$$
$$\ldots$$
$$sM \ [0], \ sM \ [1],... \ sM \ [N-1], \ (FFT) = > FsM \ [0], \ FsM \ [1],... \ FsM \ [k], \ ... \ FsM \ [N-1].$$

For the data in the same order in each chirp in the range-dimensional FFT data (such as Fs1 [0], Fs2 [0], ... FsM [0] are all range-dimensional FFT data in the first order), a leakage value corresponding to the order (referred to as "a first leakage value" in the frame) is calculated.

In some embodiments, an arithmetic average of data in the same order may be taken as the first leakage value.

In an embodiment, for a small signal energy difference between the chirps in the range-dimensional FFT data within the frame, a leakage value corresponding to the same order within the frame may be calculated based on an average value of the data on the order in each chirp, which may reflect signal change of a small difference between the chirps within the frame.

For example, q [0], q [1] ... and q [k-1] represent first leakage values of first k ranges of each chirp in the range-dimensional FFT data in a frame, where q [0] represents an average value obtained by averaging M range-dimensional FFT data, Fs1[0], Fs2[0],...FsM[0], obtained by performing range-dimensional transform on a first sample data of each chirp (a total of M chirps) in the received signal in a frame, which is used as a first leakage value q [0] corresponding to range 0. By analogy, first leakage values (q [0] ~ q [k]) corresponding to each range in the first k ranges are obtained as follows:

$$q \ [0] = (Fs1 \ [0] + Fs2 \ [0] + Fs3 \ [0] + ... + FsM \ [0])/M,$$
$$q \ [1] = (Fs1 \ [1] + Fs2 \ [1] + Fs3 \ [0] + ... + FsM \ [1])/M,$$
$$\ldots$$
$$q \ [k-1] = (Fs1 \ [k-1] + Fs2 \ [k-1] + Fs3 \ [k-1] + ... + FsM \ [k-1])/M.$$

Step 26022: Obtaining, for each first leakage value belonging to a same order in each frame, a second leakage value of the order between frames.

In an exemplary embodiment, after each first leakage value belonging to the same order in each frame is obtained, a leakage belonging to the same order between frames may be further obtained. In this embodiment, the leakage value that quantifies the leakage belonging to the same order among frames is recorded as a second leakage value.

In some embodiments, a median value of the first leakage values may be taken as the second leakage value.

For a large signal energy difference between chirps in the range-dimensional FFT data between frames, a leakage value corresponding to the same order between frames may be calculated based on the median value of the first leakage values in the order in the frames, which may reflect signal change of a large difference between chirps among different frames.

After obtaining the first leakage values q[0]~q[k-1] corresponding to respective ranges in the first k ranges of each chirp signal of the distance-dimensional FFT data of each frame, a leakage of this frame may be evaluated, and evaluation result is Q. For example, Q [0] represents a first leakage value of the first k ranges in a signal of a first frame, that is, the first leakage values q [0] to q [k-1] corresponding to each range in the first frame are sequentially arranged to obtain Q [0] = {q [0], q [1]... q [k-1]}, and so on to obtain a first leakage value of each range in the first k ranges in a range dimensional FFT signal of L frames, as follows:

$$Q\ [0] = \{q\ [0], q\ [1]... q\ [k-1]\}, q\ [0], q\ [1]... q\ [k-1] \in \text{Frame 1};$$
$$Q\ [1] = \{q\ [0], q\ [1]... q\ [k-1]\}, q\ [0], q\ [1]... q\ [k-1] \in \text{2nd frame};$$
$$\ldots$$
$$Q\ [L-1] = \{q\ [0], q\ [1] \ldots q\ [k-1]\}, q\ [0], q\ [1] \ldots q\ [k-1] \in \text{L-th frame};$$

where L is an integer greater than 1.

After obtaining the first leakage of each range in the first k ranges in the range-dimensional FFT signal of each frame, the first leakage values of each range in the first k ranges of each frame are reordered to obtain a first leakage values q * [0] to q * [k-1] after ordered (OS), where q * [0] = OS {Q [0], q [0], Q [1], q [0],... Q [L-1], q [0]} (q * [0] represents a first leakage value of all ranges 0 in the first k ranges in frame L, and q [0], q [0] represents a first leakage value q [0] in the first k range of q [0] in the first frame Q [0]). Order statistics is performed on the first leakage value of the same order in frame L to obtain the following sequences, and then median values from each sequence are selected as the second leakage values.

$$q * [1] = \text{OS} \{Q\ [0], q\ [1], Q\ [1], q\ [1], \ldots Q\ [L-1], q\ [1]\};$$
$$\ldots$$
$$q * [k-1] = \text{OS} \{Q\ [0], q\ [k-1], Q\ [1], q\ [k-1], \ldots Q\ [L-1], q\ [k-1]\}.$$

A median value is selected from q * [0], q * [1], ... q * [k-1] as the second leakage value in this order.

Based on this, the leakage value in Step 2603 may be specifically a second leakage value.

In addition, when a leakage cancellation processing is performed on the range-dimensional FFT data generated at the time of target detection based on the leakage values corresponding to each order obtained in a target-free scenario, the leakage value may be directly used for cancellation, or the leakage value may be processed to a certain extent, and then the leakage cancellation processing may be performed by using the processed leakage value. In an embodiment, Sep 2603 may include: subtracting a leakage value belonging to the same order among the k leakage values from the first k data of each chirp signal in the range-dimensional FFT data generated by the currently received signal at the time of target detection to achieve leakage elimination of the received signal; or, subtracting a fine-tuned leakage value belonging to the same order among fine-tuned k leakage values from the first k data of each chirp signal in the range-dimensional FFT data generated from the currently received signal to achieve leakage elimination of the received signal.

Fine-tuning the leakage values may include, but is not limited to, performing uniform linear processing on the leakage values in different orders, or performing weighting processing with different weights on the leakage values in different orders.

In this embodiment, for the leakage cancellation of the received signal, specific signal leakage path and application scenario of the radar system are not limited. The k leakage values obtained here may be used to cancel intrinsic leakage, and may also be used to cancel transmitter channel-receiving channel leakage, or may be used in scenarios containing both types of leakage, as long as it is a scenario for canceling low-frequency leakage signals.

Further, after eliminating leakage of the received signal to obtain leakage-eliminated range-dimensional FFT data, following processing may be further performed: processing the leakage-eliminated range-dimensional FFT data through Doppler-dimensional Fourier transform to obtain range-Doppler spectrum; and obtaining range and/or velocity information of the target object based on the range-Doppler spectrum. In some optional embodiments, estimating a wave arrival direction and other operations may be continued based on the range-Doppler spectrum to determine angle (such as horizontal angle and/or pitch angle) information of the target.

In an exemplary embodiment, after obtaining the leakage-eliminated range-dimensional FFT data, it may be continued to be processed through Doppler-dimensional Fourier transform (also referred to as "2D FFT") to obtain Doppler-dimensional FFT data (also referred to as "2D FFT data", and "velocity-dimensional FFT data"), thereby forming a range-Doppler spectrum. By performing constant false alarm detection (Constant False Alarm Rate, CFAR) on the range-Doppler spectrum to remove a false target from energy dimension, target information has range-dimensional information and/or velocity-dimensional information.

In addition, angle information of the target object may further be determined based on the range-Doppler spectrum.

In an embodiment, complex data at the peak of the Doppler-dimensional FFT data generated by the transmitter channel may be extracted from the Doppler-dimensional FFT data in the range-Doppler spectrum, and synthesized into a receiving vector to determine angle information of the target object.

Another embodiment of the present application relates to a processing method for receiving leakage in an FMCW, including following steps:

Step a: processing, in a target-free scenario, a received signal through range-dimensional Fourier transform to obtain range-dimensional FFT data, and extracting, for each chirp signal in the range-dimensional FFT data, first k data in the chirp signal; and

Step b: obtaining, for each data belonging to a same order among the extracted first k data, a leakage value of the order.

The method according to this embodiment is intended to provide a method for calculating a leakage value, and the application scenario of the leakage value is not limited in this embodiment. For step description of Step a to Step b, please refer to the aforementioned Step 2501 to Step 2502. Different from these steps, in this embodiment, the order of the first k data is determined according to an order of time when the data in each chirp signal in the range-dimensional FFT data is acquired. For example, when a scanning frequency changes from a low frequency to a high frequency, corresponding frequencies of the first k data in each chirp signal acquired are relatively low. When the scanning frequency changes from a high frequency to a low frequency, corresponding frequencies of the first k data in each chirp signal acquired in the first order are relatively high. In the method steps of the embodiment shown in FIG. 26, specific implementation processes related to the corresponding Steps 2501 to 2502 may be applied to the corresponding Steps a and b of this embodiment, which will not be repeated in this embodiment.

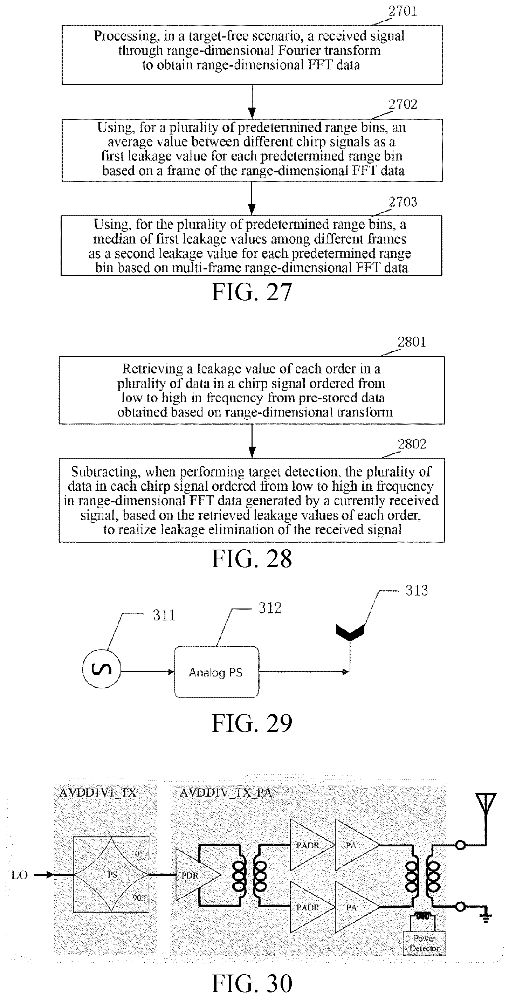

As shown in FIG. 27, still another embodiment of the present invention relates to a processing method for receiving leakage in an FMCW, including Step 2701 to Step 2702.

Step 2701: Processing, in a target-free scenario, a received signal through range-dimensional Fourier transform to obtain range-dimensional FFT data. For step description of this step, please refer to the aforementioned Step 2501, which will not be repeated in this embodiment.

Step 2702: Using, for a plurality of predetermined range bins, an average value between different chirp signals as a first leakage value for each predetermined range bin based on a frame of the range-dimensional FFT data.

As shown in FIG. 20b, one frame of range-dimensional FFT data may be divided into a plurality of range intervals along a range-dimensional direction, and a length of each range interval is the same. Each such range interval may be referred to as a range bin, and data contained in each chirp signal is distributed in each range bin. For these range bins, a ange bin for which leakage elimination is desired may be selected according to actual needs to generate a leakage value corresponding to the range bin. Each selected range bin is the predetermined range bin, and a method for generating a corresponding leakage value for each predetermined range bin is to obtain an average value between chirp signals included in a current predetermined range bin as a leakage value of the predetermined range bin, which is also referred to as a first leakage value.

As can be seen from FIG. 20b, the range bins are arranged from small to large along the range-dimensional direction, and frequencies of data in each chirp signal is also arranged from small to large along the range-dimensional direction. Calculating the first leakage value of each predetermined range bin is essentially calculating the first leakage value of a frequency segment corresponding to each predetermined range bin.

This embodiment aims to obtain a corresponding leakage value for the range bin of interest, so as to perform leakage cancellation processing on the chirp signal in the range bin of interest in an actual measurement scenario.

Further, Step 2703 may be further included after Step 2702.

Step 2703: Using, for the plurality of predetermined range bins, a median of first leakage values among different frames as a second leakage value for each predetermined range bin based on multi-frame range-dimensional FFT data.

In an exemplary embodiment, after obtaining each first leakage value belonging to a same predetermined range bin in each frame, a leakage belonging to the same predetermined range bin among frames may be further obtained. In this embodiment, a leakage value that quantifies the leakage belonging to the same predetermined range bin among frames is recorded as a second leakage value. For example, a median value of first leakage values belonging to the same predetermined range bin among different frames may be used as the second leakage value.

As shown in FIG. 28, yet another embodiment of the present invention relates to a processing method for receiving leakage in an FMCW, which includes Step 2801 to Step 2802.

Step 2801: Retrieving a leakage value of each order in a plurality of data in a chirp signal ordered from low to high in frequency from pre-stored data obtained based on range-dimensional transform.

In an exemplary embodiment, there are a plurality of pre-stored leakage values, and the leakage values are set up based on data for different frequencies in range-dimensional FFT data obtained by range-dimensional transform on a signal received by the FMCW radar. Generally, there are a plurality of chirp signals in the range-dimensional FFT data, and the plurality of leakage values in this embodiment correspond to the leakage values in a corresponding order among the plurality of data ordered from low to high in frequency in each chirp signal. For example, a pre-stored leakage value may be a leakage value corresponding to a first order in the plurality of chirp signals ordered from low to high in frequency.

In an embodiment, when storing the leakage value, one leakage value may be stored for the order of data at each sampling frequency point in each chirp signal in the range-dimensional FFT data, or corresponding leakage values may be stored only for the order of data at each low-frequency sampling frequency point. Specific quantity of stored values, corresponding frequency point granularity, and whether the frequency points are continuous at equal intervals, may be defined according to actual needs.

In addition, a process of acquiring a leakage value, may include, but is not limited to, acquiring using the method steps in the previous embodiment, and the process of acquiring the leakage value of each order is not limited in this embodiment.

Step 2802: Subtracting, when performing target detection, the plurality of data in each chirp signal ordered from low to high in frequency in range-dimensional FFT data generated by a currently received signal, based on the retrieved leakage values of each order, to realize leakage elimination of the received signal.

In an exemplary embodiment, based on a specific order in the chirp signal corresponding to the retrieved leakage values of each order, which are ordered from low to high in frequency, and frequencies of the range-dimensional FFT data corresponding to the order, data at a same or similar frequency and in a same or similar order (the same order corresponds to the same or similar frequency) in each chirp signal in the range-dimensional FFT data generated by the currently received signal may be subtracted to eliminate leakage of the received signal and obtain leakage-cancelled range-dimensional FFT data.

In some embodiments, if a storage space for storing the leakage values is sufficiently large, the leakage values for each order in the data ordered from low to high in frequency in the chirp signal in the data obtained based on the range-dimensional transform may be stored, or the leakage values for each order of each data at low frequency may be stored. In this way, a frequency point of the order corresponding to the stored leakage values may be the same as or correspond to a frequency point of the corresponding order in each chirp signal in the range-dimensional FFT data to be subtracted, or the frequency point of the order corresponding to the respective chirp signals in the range-dimensional FFT data to be subtracted. Accordingly, Step 2802 may include: interpolating, when performing target detection, the retrieved leakage values of each order.

When performing target detection, the data of the corresponding order of each chirp signal in the range-dimensional FFT data generated by the currently received signal is subtracted based on the interpolated leakage value of each order, to realize leakage elimination of the received signal.

In this embodiment, the data of the corresponding order in each chirp signal in the range-dimensional FFT data generated by the currently received echo signal is subtracted based on the retrieved leakage values of each order, to realize leakage elimination of the received signal.

In this embodiment, since the order of the retrieved leakage value is aligned with the frequency of the corresponding order in each chirp signal in the range-dimensional FFT data to be processed, alignment subtraction may be directly performed according to the relationship of the same order, to complete the leakage elimination of the received signal.

In some other embodiments, if a storage space for storing the leakage values is limited, it is impossible to store the leakage values of each order in each data ordered from low to high in frequency in the chirp signal in the data obtained based on the range-dimensional transform, or although they are stored, they are different from or not similar to the frequency points of the corresponding order in each chirp signal in the range-dimensional FFT data to be processed. In this case, it is necessary to perform interpolation processing on the extracted leakage value so that the frequency point of the order corresponding to the interpolated leakage value may be the same as or correspond to the frequency point of the corresponding order in each chirp signal in the range-dimensional FFT data to be subtracted. Accordingly, Step 2802 may include: interpolating the retrieved leakage value of each order.

When performing target detection, the data of the corresponding order of each chirp signal in the range-dimensional FFT data generated by the currently received signal is subtracted based on the interpolated leakage value of each order, to realize leakage elimination of the received signal.

In this embodiment, since the order of the interpolated leakage value is aligned with the frequency of the corresponding order in each chirp signal in the range-dimensional FFT data to be processed, alignment subtraction may be directly performed according to the relationship of the same order, to complete the leakage elimination of the received signal.

In an exemplary embodiment, an interpolation method may be a linear interpolation method.

Since the signal transmitter chain using analog phase-shifter architecture has problems of low phase modulation Accuracy (Resolution) and phase modulation Accuracy (Accuracy), it is unable to meet various requirements of high precision and accuracy.

FIG. 29 is a simplified schematic diagram of a signal processing chain of an analog phase-shifter architecture, and FIG. 30 is a simplified schematic diagram of an analog phase-shifter in the signal processing chain shown in FIG. 29.

As shown in FIG. 29, when the sensor transmits a signal, for a transmitter chain, a signal generator 311 constituted by, for example, a phase-locked loop (PLL) generates an LO signal (such as a frequency sweep signal in 77 GHz band), which may, for example, be an FMCW signal. An analog phase-shifter (Analog PS) 312 performs phase-shifting operation on the received LO signal, and then radiates the received LO signal into a predetermined spatial area through a transmitting antenna 313 to perform operations such as target detection and measurement.

Optionally, in the transmitter chain structure shown in FIG. 29, the corresponding analog phase-shifter structure may be as shown in FIG. 30, and the specific phase-shifting principle thereof may be shown in following formula:

$$LO_{IN} \xrightarrow{0/90^{0}\text{shifter}} \begin{cases} LO_I = \sin\big(\omega_c t + \varphi(t)\big) \\ LO_Q = \cos\big(\omega_c t + \varphi(t)\big) \end{cases} \xrightarrow{PA} LO_{OUT} = A \cdot LO_I + B \cdot LO_Q = \sqrt{A^2 + B^2}\sin(\omega_c t + \varphi(t) + \theta),$$

where

$$\theta = \tan\left(\frac{B}{A}\right).$$

As can be seen, two signals (i.e., LOI and LOQ) are obtained by phase-shifting the received LO signal (i.e., LOIN) by 0° and 90° respectively, and are amplified by a power amplifier (PA) and fitted into an output signal LOOUT, that is, the output signal LOOUT is phase-shifted θ compared with the LOIN input signal, where a value of phase-shift θ is determined by amplitude A of the signal LOI and amplitude B of the signal LOQ.

In an exemplary embodiment, the analog phase-shifter architecture shown in FIG. 30 may also be implemented by means of a Delay Line Unit, that is, by using a Narrow-band assumption of the signal to perform phase-shifting by means of time delay. The principle is shown in following formula:

$$LO_{IN} = \sin\big(\omega_c t + \varphi(t)\big) \xrightarrow{Delay\ Line\ Unit} LO_{OUT} = \sin\big(\omega_c(t-\tau) + \varphi(t-\tau)\big) \underset{\approx}{Narrow-band\ assumption} \sin\big(\omega_c(t-\tau) + \varphi(t)\big),$$

where $\tau$ is a time delayed by the delay line.

Since the above analog phase-shifter has low phase modulation accuracy (Resolution) and phase modulation accuracy (Accuracy), it cannot meet the needs of current sensors. Although its phase modulation accuracy and phase modulation accuracy may be improved through calibration, the phase-shifter of the analog architecture needs to be calibrated off-line, which greatly increases the difficulty and complexity of engineering implementation and product mass production. At the same time, the analog phase-shifter also has some serious problems, such as large area, large loss, stability and channel coupling.

Based on this, an embodiment of the present application proposes a signal transmitter chain of a digital phase-shifter architecture, so as to effectively improve phase modulation accuracy and phase modulation accuracy, while avoiding the operation of off-line calibration of chains and components such as phase-shifters in the transmitter chain, thereby reducing the complexity and difficulty of engineering implementation. In addition, it may effectively reduce the transmitter chain area and loss of the phase-shifter architecture, improve the stability of the system, and reduce channel coupling.

FIG. 12B is a simplified schematic diagram of a signal transmitter chain of a digital phase-shifter architecture according to an embodiment of the present application. FIG. 12C is a schematic diagram based on the digital phase-shifter architecture of a signal transmitter chain shown in FIG. 12B. FIG. 12D is a schematic diagram of a transmitter chain including a specific compensation module according to an embodiment of the present application.

An embodiment of the present application provides a signal transmitter chain applicable to an electromagnetic wave sensor. The transmitter chain may include an analog signal source and a digital phase-shifter. The analog signal source is configured to provide an initial analog signal (such as an LO signal), and the digital phase-shifter is configured to provide a phase-shifted signal generated in a digital domain. The digital phase-shifter may also phase-shift the initial analog signal based on the generated phase-shifted signal to perform a preset phase-shifting operation on the initial analog signal.

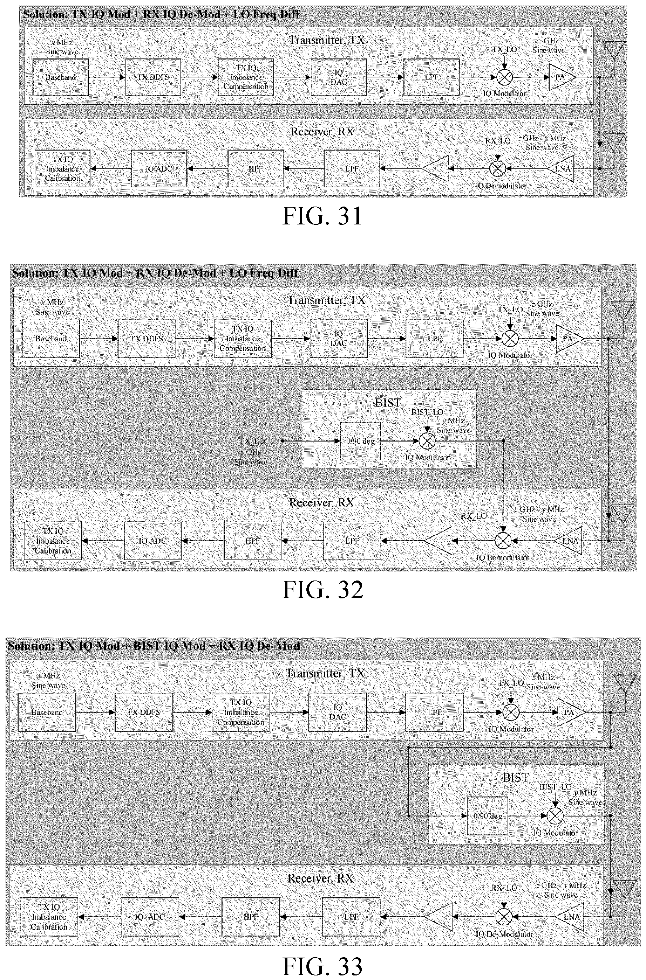

FIG. 1 is a schematic diagram of a transceiving chain according to an embodiment of the present application. FIG. 31 is a schematic diagram of a transceiving chain including a TX IQ Mod, an RX IQ De-Mod, and an LO Freq Diff according to an embodiment of the present application. FIG. 32 is a schematic diagram of a transceiving chain combined with a BIST based on the structure shown in FIG. 31. FIG. 33 is a schematic diagram of a transceiving chain including a TX IQ Mod, a BIST IQ Mod, and an RX IQ De-Mod according to an embodiment of the present application.

Hereinafter, based on the transmitter chain structure disclosed in the embodiment of the present application, a transceiving chain constituted by the transmitter chain will be described.

In the signal processing chain shown in FIG. 1, a frequency of the TX-LO signal received by the IQ modulator in the transmitter chain and a frequency of the RX-LO signal received by the Real Mixer in the receiver chain may be the same. For example, as shown in FIG. 6, if a signal output by the Baseband is a sine wave of x MHz, the TX-LO signal and the RX-LO signal may be both a sine wave of z GHz.

In the embodiment shown in FIG. 1, the transmitter chain adopts a digital phase-shift architecture, and the receiver chain may adopt a component of an analog architecture, that is, a component adopting IQ is not used, which effectively be compatible with sensors of the receiver chain of the analog architecture, and effectively reduce the development cost of an entire transceiving chain system.

In this embodiment, the receiver chain may include a receiving antenna, that is, the receiving antenna may be connected through a peripheral port of a chip, and formed on a carrier such as a PCB board. Meanwhile, in some optional embodiments, the receiving antenna may also be integrated on a package of the chip to form an AiP or an AoP, that is, a chip structure with a packaged antenna.

In some optional embodiments, in order to match the transmitter chain of the digital phase-shifter architecture, relevant adjustments may be made to the receiver chain accordingly. For example, the transceiving chain shown in FIG. 31 may include a transmitter chain architecture and a receiver chain similar to those in FIG. 1 (the same portions will not be specifically described here to avoid redundant description). That is, the Real Mixer in the receiver chain in FIG. 1 is adjusted to an IQ Demodulator, and the Real ADC is adjusted to an IQ ADC. In this case, the receiver chain may include a low noise amplifier (LNA), an IQ Demodulator (IQ Demodulator), a transimpedance amplifier (TIA), a low pass filter (LPF), a high pass filter (HPF), an IQ digital-to-analog converter (IQ ADC), and the like, which are connected in sequence. That is, after being sequentially processed by the LNA, IQ Demodulator, TIA, LPF, HPF and IQ, an echo signal received by the receiving antenna is converted into an IQ digital baseband signal, and a subsequent digital signal processing module processes the IQ digital baseband signal to obtain parameter information such as distance, velocity, angle, height and micro-motion characteristics (i.e., micro-Doppler) of the target.

In an embodiment, when performing self-calibration based on the transceiving chain shown in FIG. 31, a signal output port of the transmitter chain and a signal input port of the receiver chain are directly connected through a transmission line, that is, the transmitter chain directly transmits a transmitted signal to the receiver chain through the transmission line, so as to realize the self-calibration operation of the receiving and/or transmitter chains without passing through the transmitting antenna and the receiving antenna. In this case, there is a certain frequency offset between the TX-LO signal received by the IQ modulator in the transmitter chain and the RX-LO signal received by the IQ Demodulator in the receiver chain. For example, as shown in FIG. 12C, if the signal output by the Baseband is a sine wave of x MHz, the TX-LO signal may be a sine wave of z GHz, and the RX-LO signal may be a sine wave of (z GHz - yMHz), that is, the frequency offset at this time is y MHz.

In some optional embodiments, as shown in FIG. 31, the transmitter chain (shown as Transmitter, TX in the figure) may be calibrated by adding a receiver chain (shown as Receiver, RX in the figure), and a TX IQ imbalance compensation module in the transmitter chain may perform compensation operation based on the calibrated data. At the same time, the transmitter chain (shown as Transmitter, TX in the figure) may also be calibrated by multiplexing the receiver chain (shown as Receiver, RX in the figure) actually used for signal transmission and receiving, and the TX IQ imbalance compensation module in the transmitter chain and/or the receiver chain may perform compensation operation based on the calibrated data. Similar implementations may be carried out in other embodiments, and for the sake of simplicity, they will not be described in detail later.

In some optional embodiments, based on the structure shown in FIG. 31, in order to realize accurate calibration of the transceiving chain, an internal Built-in Self-Test (BIST) module may be provided at an RX-LO port of the IQ Demodulator of the receiver chain shown in FIG. 31. That is, as shown in FIG. 32, based on the structure of the transceiving chain shown in FIG. 31, an IQ BIST architecture is provided at the RX-LO port of the receiver chain, so as to realize input of an LO signal having a preset frequency offset to the RX-LO port of the IQ Demodulator of the receiver chain. For example, an IQ BIST is constituted by a phase angle converter, an IQ Modulator (IQ Modulator), and the like. By utilizing a received signal, such as the TX-LO signal, which passes through the phase angle converter and then through the IQ modulator, a frequency offset signal is formed based on a frequency offset signal of another input signal BIST-LO of the IQ modulator, and input to the RX-LO port of the IQ Demodulator. For example, if the signal of TX-LO is a sine wave of z GHz and the signal of BIST-LO is a sine wave of y MHz, the frequency-offset signal input to the RX-LO port of the IQ Demodulator is obtained as (z GHz - y MHz). It should be noted that in different embodiments, x, y, and z are all schematic values, and specific numerical values may be the same or different.

In some optional embodiments, based on the IQ BIST architecture of the transceiving chain structure shown in FIG. 32, calibration may also be performed for the transmitter chain of the digital phase-shifter architecture by multiplexing the receiver chain of the transceiving chain. In some other embodiments, when it comes to the calibration operation on the transmitter chain using the receiver chain and the calibration operation on the receiver chain using the transmitter chain, the calibration operations may be realized by multiplexing the corresponding receiver chain or the transmitter chain in a chain that actually transmits and receives a signal, or the calibration operation on the corresponding transmitter chain or the receiver chain in a chain that actually transmits and receives a signal may also be realized by adding a corresponding calibration receiver chain or a calibration transmitter chain.

Optionally, the IQ BIST may include a phase angle converter and an IQ Modulator. The phase angle converter is used to calibrate the I path and the Q path in the transmitter chain of the digital architecture respectively, and the other input signal BIST-LO of the IQ Modulator may be a sine wave of y MHz, which is used to simulate the characteristics related to the echo signal formed by the transmitted signal being reflected by the target, where x, y, and z in FIG. 32 are all positive numbers, and x ≠ y ≠ z may be generally between 0 and 1000.

Optionally, in the transceiving chain shown in FIG. 32, a TX IQ Imbalance Compensation module (TX IQ Imbalance Compensation) may further be provided in the transmitter chain (e.g., between TX DDFS and IQ DAC) and/or a TX IQ Imbalance Compensation module (TX IQ Imbalance Compensation) may be provided in the receiver chain (e.g., after Real ADC), so that the transmitted and/or received signal may be supplemented based on calibration parameters (or coefficients) derived from the above self-calibration operation to solve problems such as IQ imbalance.

In some optional embodiments, based on the structure shown in FIG. 32, as shown in FIG. 33, the IQ BIST module may be provided between the signal output port of the transmitter chain and the signal input port of the receiver chain, that is, the transmitter chain directly transmits a transmitted signal to the receiver chain through the IQ BIST module, so as to realize self-calibration operation of the receiver chain and/or the transmitter chain without passing through the transmitting antenna and the receiving antenna.

It should be noted that in the transmitter chain structure shown in FIGS. 1, 32 and 33, only an IQ compensation unit (TX IQ Imbalance compensation unit) is exemplified. In practical applications, an LO compensation unit (TX LO leakage compensation), an HD3 compensation unit (TX HD3 compensation), and the like may further be added to the transmitter chain based on actual needs, so as to constitute a compensation module (TX compensation) including an LO compensation unit (TX LO leakage compensation), an IQ compensation unit (TX IQ Imbalance compensation) and/or an HD3 compensation unit (TX HD3 compensation).

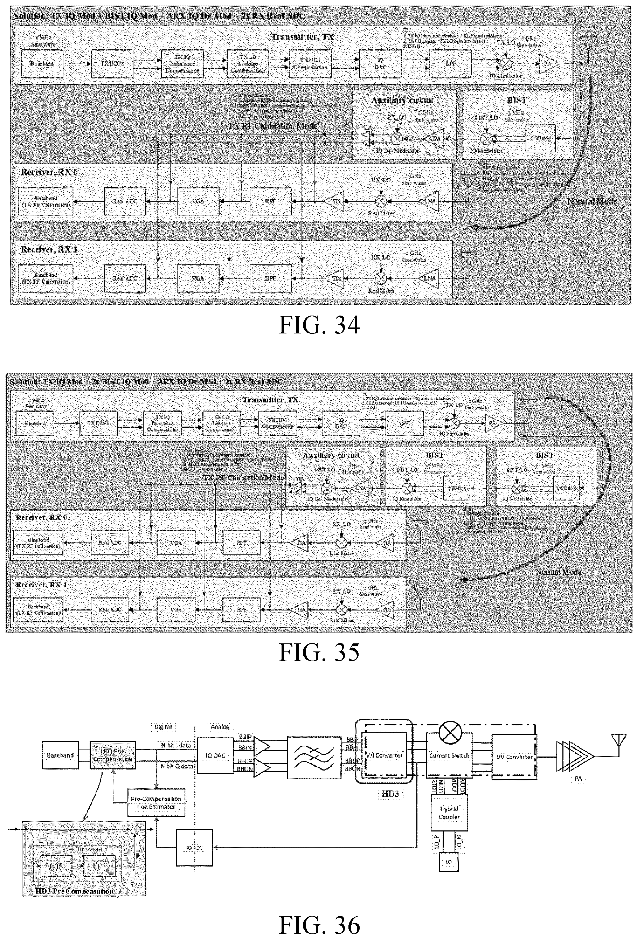

FIG. 34 is a schematic diagram of a transceiving chain including an auxiliary circuit and a BIST IQ Mod according to an embodiment of the present application. FIG. 35 is a schematic diagram of another transceiving chain including an auxiliary circuit and a BIST IQ Mod according to an embodiment of the present application.

As shown in FIG. 34, referring to the structure shown in FIGS. 12D and 33 and related description, a transceiving chain may include a transmitter chain, a receiver chain, and a calibration chain. The transmitter chain may include a TX digital baseband signal source (TX Baseband), a direct digital frequency synthesizer (TX DDFS), a Compensation module (Compensation), an IQ digital-to-analog converter (IQ DAC), a low-pass filter (LPF), an IQ Modulator (IQ Modulator), a power amplifier (PA), and the like, which are connected in sequence. At the same time, a signal amplified by the power amplifier is radiated to a preset spatial area through a transmitting antenna. The receiver chain may include an LNA, a Real Mixer, a Trans-Impedance Amplifier (TIA), a High-Pass Filter (HPF), a Variable Gain Amplifier (VGA), a real digital-analog converter (Real ADC), an RX Baseband for TX RF Calibration, and the like, which are connected in sequence. That is, an echo signal received by a receiving antenna is sequentially processed by the LNA, Real Mixer, TIA, HPF, VGA and real ADC and converted into a real digital baseband signal. A subsequent digital signal processing module processes the real digital baseband signal to obtain parameter information such as distance, velocity, angle, height and micro-motion characteristics of a target.

For the transmitter chain, the compensation module (TX compensation) provided between the TX DDFS and the IQ DAC may include an LO compensation unit (TX LO leakage compensation), an IQ compensation unit (TX IQ Imbalance compensation), and/or a HD3 compensation unit (TX HD3 compensation), and other units, so as to realize corresponding compensation operation for LO leakage, IQ Imbalance and HD3 in the transmitter chain of the digital phase-shifter architecture.

In some optional embodiments, a calibration module may be further provided between the transmitter chain and the receiver chain, and the calibration compensation module may be configured to multiplex the receiver chain to perform operations such as calibration on the transmitter chain of the digital phase-shifter architecture. At the same time, the compensation module may realize compensation operation for the transmitted signal at a transmitter chain end based on parameters or coefficients obtained by the calibration operation of the calibration module. In other embodiments, a corresponding receiving compensation module may be provided in the receiver chain simultaneously or separately, that is, the receiving compensation module may realize compensation for an echo signal at a receiver chain end based on parameters or coefficients obtained by the above-described calibration operation.

As shown in FIG. 34, the calibration module may include a BIST unit, an auxiliary circuit unit (auxiliary circuit), and the like. That is, an output port of the transmitting chain is connected to any node between the Real Mixer and the Real ADC in the receiver chain through the BIST unit and the auxiliary circuit unit. For example, the IQ Modulator in the transmitting chain generates a radio frequency signal of (z GHz ± x MHz) based on a digital phase-shifted baseband signal of x MHz and an LO signal of z GHz, and then outputs it to the BIST unit through the output port. The BIST unit performs a frequency offset operation of y MHz on the received radio frequency signal to obtain an analog echo signal of (z GHz ± x MHz ± y MHz), and then uses an IQ De-Modulator in the auxiliary unit to reduce the frequency to obtain a preset intermediate frequency signal (z GHz ± x MHz ± y MHz-z GHz = ± x MHz ± y MHz). The intermediate frequency signal is then input to a preset node in the receiver chain to implement the calibration operation in the transmitting chain.

Optionally, the auxiliary circuit unit may be a quadrature demodulator circuit, and an output end of the auxiliary circuit unit may be connected to any one of a node between the TIA and the HPF, a node between the HPF and the VGA, and a node between the VGA and the Real ADC in the receiver chain. In addition, in order to multiplex a structure of the receiver chain to the greatest extent, after the output port of one transmitter chain passes through the BIST unit and the auxiliary circuit unit, the two branches I and Q may also be connected to different transmitter chains, respectively, that is, as shown in FIG 10, one transmitter chain is calibrated by multiplexing two receiver chains. After the calibration for the transmitter chain is completed, a compensation unit such as the LO compensation unit (TX LO leakage compensation), the IQ compensation unit (TX IQ Imbalance compensation) and/or the HD3 compensation unit (TX HD3 compensation) in the compensation module (TX compensation) may be used to implement compensation operation corresponding to the LO leakage, IQ Imbalance HD3, and other problems in the transmitter chain of the digital phase-shifter architecture based on the parameters obtained by calibration.

In some optional embodiments, the BIST unit may include a phase angle converter and an IQ modulator (IQ Modulator) connected in sequence. Td the auxiliary circuit unit may include an LNA, an IQ De-Modulator and a TIA, which are connected in sequence. That is, the phase angle converter receives a radio frequency signal output from the transmitter chain, and one input end of the IQ Modulator is connected to an output end of the phase angle converter, and the other input end receives a y MHz BIST-LO signal to generate a preset echo signal. The LNA transmits the received echo signal to one input end of the IQ De-Modulator after amplification, and the other input end of the IQ De-Modulator is used to receive a z GHz RX-LO signal. Two output branches (i.e., I-branch and Q-branch) of the IQ De-Modulator are respectively connected to the corresponding nodes in the corresponding receiver chain after TIA, so as to output the generated preset intermediate frequency signal to two receiver chains, thereby realizing a more efficient multiplexing receiver chain design while realizing the calibration operation.

It should be noted that, for the calibration operation in the embodiment of the present application, if the transmitter chain transmits a frequency sweep signal, in the actual calibration operation, the TX LO signal may be used as a single tone signal for point-by-point calibration. At the same time, the TX LO signal may also be used as a frequency sweep signal to perform a large bandwidth calibration operation, or even the bandwidth of frequency sweep calibration may be used to realize the calibration operation for the frequency sweep signal of the whole frequency band at one time.

Based on the structure shown in FIG. 34, in order to further suppress the HD3, LO Leakage, and IQ Imbalance in the transmitter chain of the digital phase-shifter architecture to a preset degree, it may be realized by cascading at least two BIST units. As shown in FIG. 35, through two BIST units connected in series, noise caused by the above defects may be suppressed to a level of -50 dB, thereby effectively reducing the difficulty in developing and designing an analog component in a related chain.

In some optional embodiments, based on the transmitter chain of the digital phase-shifter architecture disclosed in the embodiment of the present application, when performing calibration and compensation operations for IQ Imbalance, a compensation coefficient of the IQ Imbalance may be obtained based on spectrum analysis in a time domain (Time-Domain), or the compensation coefficient of the IQ Imbalance may be obtained based on spectrum peak ratio in a frequency domain (Frequency-Domain).

In some optional embodiments, in order to further improve the accuracy of the IQ Imbalance compensation coefficient, an ideal compensation coefficient may be approximated by iterative calibration and compensation, or the ideal compensation coefficient may be obtained by multi-observation calibration and compensation.

In an embodiment, for an iterative calibration and compensation mode, it is possible to determine whether or not to stop iterative operation based on magnitude relationship between compensation coefficients of two consecutive calibration compensations, or whether a difference between the compensation coefficients of the two calibration compensations satisfies a preset iteration condition, and use a compensation coefficient obtained when the iterative operation is stopped as a final compensation coefficient in a current scenario to perform subsequent operation. For a multi-observation calibration and compensation mode, after multiple (such as three) calibration and compensation operations, FFT (fast Fourier transform) may be performed on measurement data obtained by each operation, and corresponding amplitude and phase information may be obtained. Then, the measurement may be differentiated and normalized to obtain relevant data, and an observation matrix may be constructed. Subsequently, a corresponding compensation coefficient may be reversely solved based on the data obtained by inverting the observation matrix.

In some optional embodiments, based on a similar idea of obtaining the IQ Imbalance compensation coefficient, a compensation coefficient of LO leakage and/or HD 3 may also be obtained by means of iterative calibration and compensation, or by means of multi-observation calibration and compensation.

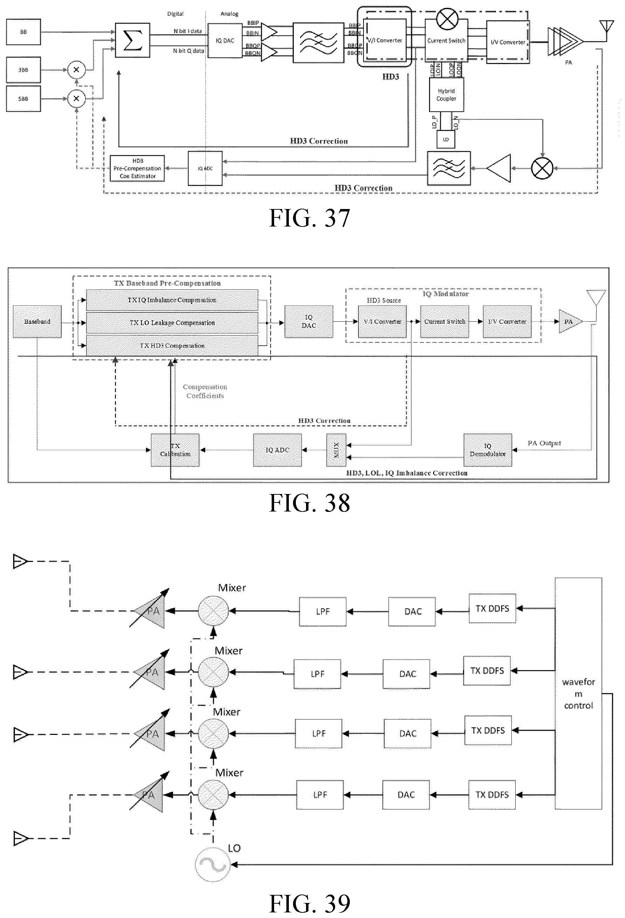

FIG. 36 is a schematic diagram of a digital pre-compensation HD3 architecture based on a cubic module according to an embodiment of the present application. FIG. 37 is a schematic diagram of a digital pre-compensation HD3 architecture based on a frequency-multiplied waveform generator module according to an embodiment of the present application.

In some optional embodiments, based on the transmitter chain of the digital phase-shifter architecture disclosed in the embodiment of the present application, when the calibration and compensation operation is performed for HD3, a main source of generation of HD3 in an active mixer is nonlinear middle third harmonic of the V/I Converter, so it may be realized by the compensation architecture based on the cubic module as shown in FIG36, or the compensation structure based on the triple frequency waveform generator as shown in FIG37.

FIG. 38 is a schematic diagram of calibration and compensation of a transmitter chain based on a digital phase-shifter architecture according to an embodiment of the present application. As shown in FIG. 38, based on the related technical content of the calibration and compensation operation for IQ Imbalance, LO leakage, and HD3 in the embodiment of the present application, the compensation operation for IQ Imbalance may be realized by compensating a conjugate signal of a BB (baseband) signal to reverse cancel an image component, and the compensation operation mode is not affected by the calibration mode of IQ Imbalance. The compensation for LO Leakage may be achieved by adjusting DC components of both I and Q channels (i.e. DC bias). Similarly, a calibration mode of the LO Leakage has no impact on its compensation scheme. For HD3, since third-order harmonic distortion of a quadrature mixer V/I Converter is a main source of HD3, and the harmonic distortion will be affected by DC bias, when both the LO Leakage and HD3 in the transmitter chain need to be calibrated, it is necessary to perform LO Leakage calibration first, followed by HD3 calibration, to ensure accurate performance of HD3 calibration.

In addition, a compensation mode of HD3 in a digital pre-compensation architecture based on a digital cubic module and a digital pre-compensation architecture based on a frequency-multiplied waveform generator module will directly affect a subsequent calibration scheme and a subsequent compensation process. Specifically:

In an optional embodiment, for the digital pre-compensation architecture based on the digital cubic module, after calibrating and compensating the LO Leakage, after calibrating and compensating LO Leakage, a root source of the HD3 problem, i.e., a compensation coefficient of HD3, may be calibrated under a stable DC bias; then, IQ Imbalance is calibrated, and after continuing to compensate IQ Imbalance, the third-order harmonic distortion in both the I and Q channels according to the pre-compensation results for IQ Imbalance.

In an optional embodiment, for the digital pre-compensation architecture based on the frequency-multiplied waveform generator module, after calibrating and compensating for the LO Leakage, a compensation coefficient for HD3 may be obtained by calibration, and the IQ Imbalance may be calibrated and compensated under a stable DC bias; subsequently, actual waveforms of signals of both I and Q channels and a compensation coefficient for HD3 are respectively calculated based on the compensated results, and waveform information of 3 times and 5 times frequency that need to be pre-compensated is inversely calculated.

In another optional embodiment, for the digital pre-compensation architecture based on the frequency-multiplied waveform generator module, the LO Leakage may be calibrated and compensated first, then a pre-compensation coefficient for HD3 and IQ Imbalance may be calibrated simultaneously by multiple (e.g., three) observations, and then a pre-compensation coefficient at a HD3 mirror position may be calibrated by re-observation (e.g., twice); and ultimately, based on the pre-compensation coefficient at HD3 and HD3 mirror position, 3 times and 5 times frequency coefficients that need to be pre-compensated are inversely calculated. It should be noted that the observation in the embodiment of the present application is used to represent operations such as testing and comparison and analysis of different test results.

Based on the architecture of the transmitter chain and/or the receiver chain of the digital phase-shifter architecture disclosed in the embodiment of the present application, in addition to being applied to the electromagnetic wave sensor for transmitting and/or receiving a signal, it can also solve the problems of unequal antenna feeding path lengths between different transmission/receiver chains, and unequal TXLO feeding path lengths (i.e., between LO and a mixer in each transmitter channel). And the architecture of the transmitter chain and/or the receiver chain of the digital phase-shifter architecture disclosed in the embodiment of the present application may also be used as an auxiliary chain to perform operations such as calibration for the receiver chain and/or transmitter chain of the analog phase-shifter architecture.

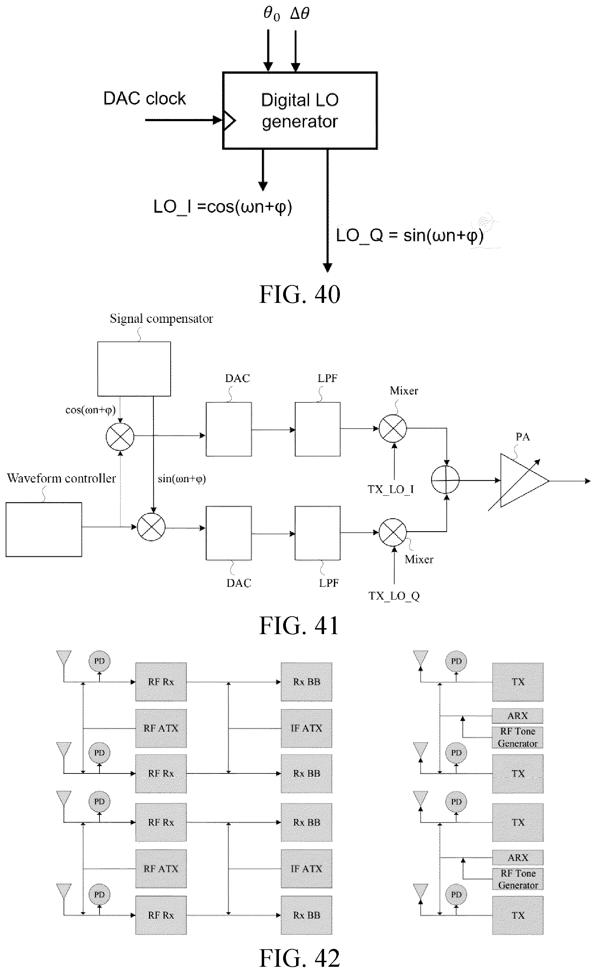

FIG. 39 is a schematic diagram of a transmitter chain having at least two transmitter channels according to an embodiment of the present application. FIG. 40 is a schematic structural diagram of a digital LO signal generator according to an embodiment of the present application. FIG. 41 is a schematic structural diagram of a compensation module for unequal feeding path lengths according to an embodiment of the present application.

As shown in FIG. 39, for a transmitter chain using at least two transmitter channels, since each transmitter channel will be connected to a same Local Osillator (LO) source, a feeding path length (TXLO) between the Local Osillator signal and the Mixer in each transmitter channel is different, which will lead to relative time delay problem between different transmitter channels. In addition, since use of unequal-length transmitting antenna feeding lines in an antenna array may achieve better chain budget, simpler antenna design and routing, lower coupling between antennas, better target angle resolution performance, smaller modules and costs, the antenna design adopting the unequal-length transmitting antenna feeding lines is increasingly widely used, especially for close-range measurement, relatively closed space areas (such as indoor or cabin lights) and other application scenarios, or in various scenarios using packaged antenna chips (AiP), such as application scenarios with wide frequency sweep. However, due to different lengths of transmitting antenna feeding lines between different transmitter channels, it will cause relative time delay problems when radio frequency signals pass through different transmitting antennas.

In view of the problem of relative time delay of signals caused by different feeding path lengths between different transmitter channels or between receiving channels in the transceiving chains, an embodiment of the present application provides a compensation scheme for the relative time delay caused by unequal feeding path lengths based on the digital phase-shift architecture, so as to effectively improve the quality of transmitted and received signals.

In an exemplary embodiment, as shown in FIG. 39, a transmitting antenna array of a digital phase-shifter architecture includes four transmitter channels, which share a waveform controller module (waveform control) and a local oscillator (LO). Any one of the transmitter channels includes a transmission direct digital frequency synthesizer (TX DDFS), an IQ digital-to-analog converter (DAC), an analog low-pass filter (Analog LPF), an IQ Mixer (Mixer), a power amplifier (PA), and a transmitting antenna, which are connected in sequence. That is, the waveform controller module is respectively connected to the TX DDFS in each transmitter channel, and the local oscillator LO is respectively connected to an input end of the Mixer in each transmitting channel, so as to up-mix a phase-shifted signal output by the LPF in each transmitting channel to form a radio frequency signal for transmission through each transmitting antenna. In view of the problem of unequal feeding path lengths between the local oscillator LO and the Mixer in each transmitter channel and/or the problem of unequal feeding path lengths between the PA of each transmitter channel and its transmitting antenna, preset compensation may be performed in the transmission direct digital frequency synthesizer (TX DDFS) to reduce the time delay problem of transmitted signals caused by the unequal feeding path lengths.

In an embodiment, in view of the problem of unequal feeding path lengths between the local oscillator (LO) and the Mixer in each transmitter channel, a shortest feeding line from the local oscillator (LO) to the Mixer in one of the transmitter channels may be used as a reference, and then path length differences between the Mixer in the remaining transmitter channels and the local oscillator (LO) relative to the reference are acquired. Since a propagation velocity c of a transmitted signal is relatively fixed, a corresponding time delay value may be obtained by dividing the path length difference of each of the transmitter channels by the velocity c. When transmitting a signal later, corresponding compensation may be directly performed in the TX DDFS to obtain a time delay of each transmitter channel relative to the reference. At the same time, a similar mode be used to solve the problem of unequal feeding path lengths between the PA of each transmitter channel and its transmitting antenna, to obtain and compensate for the time delay problem caused by the feeding line difference between the transmitter channels.

When specific compensation is performed for a transmitter chain that transmits an FMCW wave, the time delay may be compensated by using a digital LO generator, based on parameters such as a time delay $\mu$, a period T of frequency sweep, a bandwidth $\beta$ of frequency sweep, and a sweep start frequency fc caused by a feeding path length relative to the reference, and adapting a clock signal of a subsequent DAC. As shown in FIG. 40, a Digital LO generator is used for compensation in DDFS, that is, one input is $\Delta\theta = \mu * \beta/T$, and the other input is $\theta0 = fc\mu - \mu2 * \beta/2T$, where $\mu$ is a time delay difference between a corresponding feeding line of each transmitter channel relative to a reference feeding line. Meanwhile, as shown in FIGS. 40-41, an output LO-I (i.e., cos ($\omega$n + $\psi$) of the digital LO generator as a signal compensator is used as the input of the I-path in the DAC, and an output LO-Q (i.e., sin ($\omega$n + $\psi$)) of the digital LO generator is used as the input of the Q-path in the DAC.

It should be noted that FIGS. 40-41 shows a schematic diagram of a structure of one transmitter channel, while FIG. 15 shows a transmitting antenna array having four transmitter channels. In practical application, the transmitting antenna array only needs to include at least two (e.g., two, three or five) transmitter channels, and compensation operation may also be performed in a process of receiving a signal and/or processing a signal. For a structure with one transmitter channel and/or one receiving channel, a similar idea may also be used to directly perform compensation in the TX DFFS or in a process of receiving a signal and/or processing a signal.

For relevant technical solutions of using the idea of the architecture of the transmitter chain and/or receiver chain of the digital phase-shifter architecture disclosed in the embodiments of the present application as an auxiliary chain to perform calibration and other operations on the receiver chain and/or transmitter chain of the analog phase-shifter architecture and the receiver chain and/or transmitter chain of the digital phase-shifter architecture, reference may be made to FIGS. 42-45.

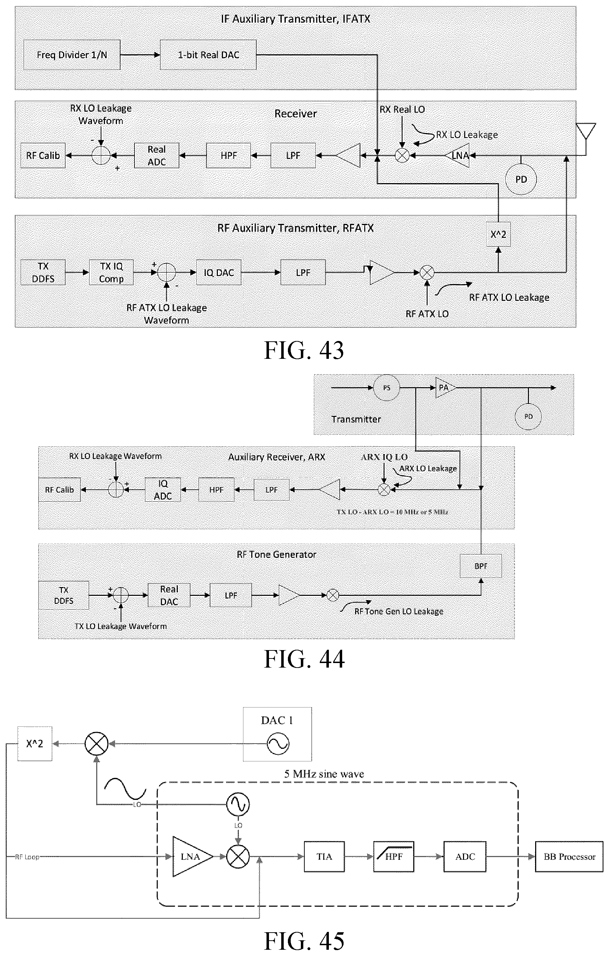

FIG. 42 is a schematic diagram of calibrating and compensating a transceiving chain using an auxiliary circuit according to an embodiment of the present application. FIG. 43 is a schematic diagram of calibrating and compensating a receiver chain using an auxiliary transmitting circuit according to an embodiment of the present application.

In an exemplary embodiment, a signal transceiving chain may generally include an antenna, a radio frequency analog component, a baseband analog component, a baseband digital processor, and the like. The radio frequency analog component may include a PLL, a PA, a PS, an LNA, an LO, a power detector (PD), and the like; and the baseband analog component may include an LPF, an HPF, an ADC, and the like.

There are various non-ideal conditions in an analog component or circuit, and they will change with temperature changes. For example, frequency responses of the radio frequency analog component and circuit in a transmitter chain (TX), the baseband analog component and circuit in a receiver chain (RX), the radio frequency analog component and circuit in the receiver chain (RX) may have imbalance defects, and both a PA output port and an LNA input port may have PD accuracy problems. There may also be problems such as local oscillator leakage (LO leakage) in the receiver chain (RX). Moreover, when the analog component works at different frequencies, its amplitude-frequency responses will also be different, which is equivalent to adding an unexpected window function to the received signal, thereby adversely affecting subsequent operations such as target distance and velocity estimation. Especially in multi-target scenarios, it may even lead to detection of false targets or omission of real targets. In addition, in the case of at least two chains, there may also be different frequency responses between different receiver chains, which will additionally introduce noise information, such as different phases and amplitudes, to the receiver chains, especially the introduced phases will directly affect subsequent estimation of an echo direction of the target, thereby reducing the accuracy of the target angle estimation.

In some embodiments, errors of the analog component and circuit may be measured by an external device, and then certain compensation operation may be performed on them, such as Bench calibration or ATE calibration, to calibrate the performance of the analog component and circuit of the receiver chain.

An embodiment of the present application further provides a scheme for calibrating a transmitter chain and/or receiver chain based on an auxiliary chain mode, so as to realize real-time calibration of an analog component and circuit while realizing accurate calibration, without the participation of a peripheral device, which effectively reduces the influence of changes in parameter indexes of a radio frequency component caused by environmental changes.

As shown in FIG. 42, a transceiving chain of an electromagnetic wave signal may be calibrated in real time by providing an auxiliary calibration circuit (Auxiliary). The auxiliary calibration circuit (i.e., an auxiliary calibration chain) may be integrated into an electromagnetic wave sensor, so as to effectively reduce the influence of changes in parameter indexes of a radio frequency component caused by environmental changes while realizing real-time and accurate calibration without the participation of a peripheral device.

In an embodiment, for a transmitter, an Auxiliary Reveiver (ARX) may be provided in a sensor at a position adjacent to the transmitter to realize real-time calibration operation on the transmitter. Similarly, for a receiver, an Auxiliary Transmitter (ATX) may also be provided in the sensor at a position adjacent to the receiver (i.e., a signal receiver chain) to realize real-time calibration operation on the receiver. In addition, an auxiliary path may be provided between two paths to be calibrated, so that one auxiliary path may be multiplexed for calibration for at least two different paths. As shown in FIG. 42, a common ARX is provided between two transmitters, and a common ATX is provided between two receivers, which may further avoid problems such as such as wiring or excessively long lines. In an optional embodiment, for the antenna array having four transmitter channels and four receiving channels shown in FIG. 42, two ARXs and two ATXs may be provided, that is, each ARX is provided between two transmitter channels, and each ATX is provided between two receiving channels, so as to effectively reduce the difficulty of routing and improve the real-time performance of calibration.

As shown in FIG. 42, for the receiver, since the receiver may be divided into a radio frequency portion (i.e., RF Rx) and a baseband portion (i.e., Rx BB), in order to further improve the accuracy of calibration, an auxiliary calibration path may be respectively provided for RF Rx and Rx BB. For example, a radio frequency auxiliary transmission unit (which may be referred to as RF ATX for short) is provided for RF Rx, and a baseband auxiliary transmission unit (which may be referred to as IF ATX for short) is provided for Rx BB. In addition, for the ARX path, the ARX may be calibrated by providing an RF tone signal transmitter (RF Tone Generator), and then the calibrated ARX may be used to calibrate the transmitter channel (TX).

In some optional embodiments, as shown in FIG. 42, for the RF Rx and Rx BB in the Receiver, the Rx BB may be calibrated by the IF ATX, the RF ATX may be calibrated by the calibrated Rx BB, and ultimately the Rx BB may be calibrated by the calibrated RF ATX, thereby realizing the calibration operation of the entire receiver.

Based on the structure shown in FIG. 42 in combination with the contents shown in FIG. 43, a calibration scheme of a Receiver is described. That is, the receiving channel may include a receiving antenna (or a receiving port), an LNA, a Mixer, a TIA, an LPF, an HPF, a Real ADC and other components, and a PD connected to an input port of the LNA, and the like, which are connected in sequence. The receiver may be divided into RF Rx and Rx BB based on the Mixer, that is, along a signal transmission direction, the Mixer and a preceding portion thereof may be defined as RF Rx, and the remaining portion may be defined as Rx BB. As shown in FIG. 43, the RF Rx may include a receiving antenna (or a receiving port), an LNA, a real mixer, a PD, and the like.

The IF ATX provided corresponding to the Rx BB of the receiver may include a frequency divider (such as a Freq Divider 1/N) and a Real DAC (such as a 1-bit Real DAC) connected in sequence. That is, an output of the Real DAC is connected to an output of the Real Mixer. As shown in FIG. 43, the IF ATX may include a frequency divider (such as a Freq Divider 1/N) and a Bit digital-to-analog converter (such as a 1-bit Real DAC) connected in sequence. That is, the IF ATX may stably generate a tone signal (single Tone) in a variety of environments through the frequency divider and the digital-to-analog converter, and the tone signal may also be freely configured to a variety of frequencies.

In some optional embodiments, in order to improve the accuracy of calibration, the IF ATX may also be calibrated before the IF ATX calibrates the Rx BB, such as calibration of an intermediate frequency (IF) frequency response in the IF ATX, DC calibration, and the like. After completing the calibration of the IF ATX, the calibrated IF ATX may be used to calibrate the Rx BB of the receiving channel. For example, the calibrated IF ATX may be used to transmit tone signals of different frequencies to complete calibration, compensation and other operations on an Rx BB department. Optionally, a frequency of a tone signal transmitted by the IF ATX (e.g., tens of MHz) may be determined based on a sampling frequency of the Real ADC in the receiver.

The RF ATX provided corresponding to the RF Rx of the receiving channel may include a TX DDFS, an IQ compensation module (TX IQ Comp), an adder, an IQ digital-to-analog converter (IQ DAC), a low-pass filter (LPF), an amplifier (e.g., PA), a multiplier, a local oscillator (LO, not shown in the figure) and a squarer ($x^2$), which are connected in sequence. An output end of the multiplier is connected to an output end of the Mixer in the receiver via the squarer to form a first calibration branch, and the output end of the multiplier is also connected to a chain between the PD and the transmitting antenna in the receiver to form a second calibration branch. The IQ compensation module may be configured to compensate for an imbalance of IQ in the RF ATX, the adder may be configured to compensate for local oscillator leakage (LO Leakage) in the RF ATX, and the squarer may be configured to compensate for residual sideband effect caused by the imbalance of IQ in the RF ATX.

In some optional embodiments, in order to improve the accuracy of calibration, the RF ATX may further be calibrated before the RF ATX calibrates the Rx ATX, for example, a calibration operation for problems such as local oscillator leakage, radio frequency response, and IQ imbalance in the RF ATX. After the calibration of the RF ATX is completed, the calibrated RF ATX is used to calibrate the RF Rx of the receiver. For example, tone signals of different frequencies may be transmitted through the calibrated RF ATX. Then, a baseband signal processing module in the receiver chain may be used to calibrate and compensate a power detector (PD) at an input end of the LNA in the radio frequency portion RF Rx of the receiver, a total gain from the LNA to the ADC in the receiver, and auxiliary calibration of the frequency response.

In some optional embodiments, when calibrating the Receiver using the IF ATX and the RF ATX, the IF ATX may be calibrated first, the calibrated IF ATX may be used to calibrate the Rx BB in the receiver, then the calibrated Rx BB may be used to calibrate the RF ATX through the first calibration branch (i.e., through a squarer) of the RF ATX, and ultimately calibration of the RF Rx in the receiver may be realized using the second calibration branch in the calibrated RF ATX, thereby realizing calibration and compensation operations of the entire receiver.

Specifically, as shown in FIG. 43, the Rx BB, the Real DAC, and the like may be calibrated first by the 1-bit Real DAC, then the LO leakage and the IQ imbalance in the RF ATX may be calibrated by the calibrated RxBB, and ultimately the calibrated RF ATX transmits a signal and the signal is input from the LNA in the receiver to correct the RF LO leakage and the RF frequency response of the RF Rx.

FIG. 44 is a schematic diagram of calibrating and compensating a transmitter chain using an auxiliary receiving circuit according to an embodiment of the present application. As shown in FIG. 44, the Transmitter may include a phase-shifting module PS, an amplifier PA, a power detector PD, and the like. For example, the transmitter may adopt a transmitter chain of a digital phase-shift architecture (Digital phase shifter) described in any embodiment of the present application. For details, please refer to the related diagrams and text descriptions, and it will not be repeated here. Since the transmitter adopts a digital phase-shifter architecture, while achieving more accurate phase-shifting operation, the transmitter channel may simultaneously support multi-antenna DDM, FDM (Frequency Division Multiplexing) and other modes. It may also eliminate a calibration operation of an RF Phase-Shifter, reduce isolation and coupling in a phase-shifting system, and reduce chain loss and manufacturing costs. In addition, in view of possible TX IQ mismatch, LO leakage and other problems, the transmitter of the digital phase-shifter architecture may also support RF Frequency Response compensation and calibration operation for IQ imbalance and LO leakage in a digital domain.

In view of TX IQ Mismatch, LO leakage, frequency response and other problems in the transmitter, relevant calibration and compensation operations may be performed by providing an Auxiliary Receiver (ARX for short). As shown in FIG. 44, the ARX may include a Mixer, a TIA, an LPF, an HPF, an IQ ADC, an adder and an RF calibration module (RF Calib), which are connected in sequence. That is, an ARX IQ LO signal is received at one input of the Mixer and the other input is connected to a node before PD of the transmitter in a signal transmission direction (i.e., a direction of the arrow shown in FIG. 12E), or to any node after the phase-shifter (module). For example, it is connected to an output end of a PA (synchronously implementing calibration of the PA), an input end of the PA and the like, to perform calibration operation on the transmitter through the ARX. There is a set frequency difference between a frequency of the LO signal in the transmitter and a frequency of the ARX IQ LO signal so that there is a frequency error between the two signals to simulate a real transceived signal loop.

In an optional embodiment, in order to further improve the calibration accuracy, a corresponding calibration circuit (i.e., a calibration receiving unit) may be provided for the ARX (i.e., an auxiliary receiving unit). For example, an RF tone signal generating circuit (RF Tone Generator) shown in FIG. 44 may include a TX DDFS, an adder, a Real DAC, an LPF, an amplifier, a multiplier, and a Band Pass Filter (BPF), which are connected in sequence. The adder may be configured to perform calibration compensation for the TX LO leakage Waveform (TX LO leakage Waveform), the multiplier may be configured to compensate for RF Tone Gen LO leakage, and the BPF is may be configured to filter out a DC signal generated by the LO leakage of the RF Tone Generator. That is, the RF Tone Generator may be configured to generate a plurality of stable Tone signals of different frequencies to enable calibration operation on the ARX.

In some optional embodiments, as shown in FIG. 44, the ARX may be calibrated using the RF Tone Generator first, and then the calibrated ARX may be used to calibrate the Transmitter including a PA, for example, calibrate components and circuits such as a PD at PA output, a phase-shifter in the transmitter, a total gain from DAC to PA output, and a frequency response.

Specifically, as shown in FIG. 44, a plurality of stable tone signals with different frequencies may be generated by using an RF Tone Generator to assist in calibrating the ARX, and then the calibrated ARX may be used to assist in calibrating the IQ imbalance, local oscillator leakage, inconsistent frequency response, and other problems of the transmitter.

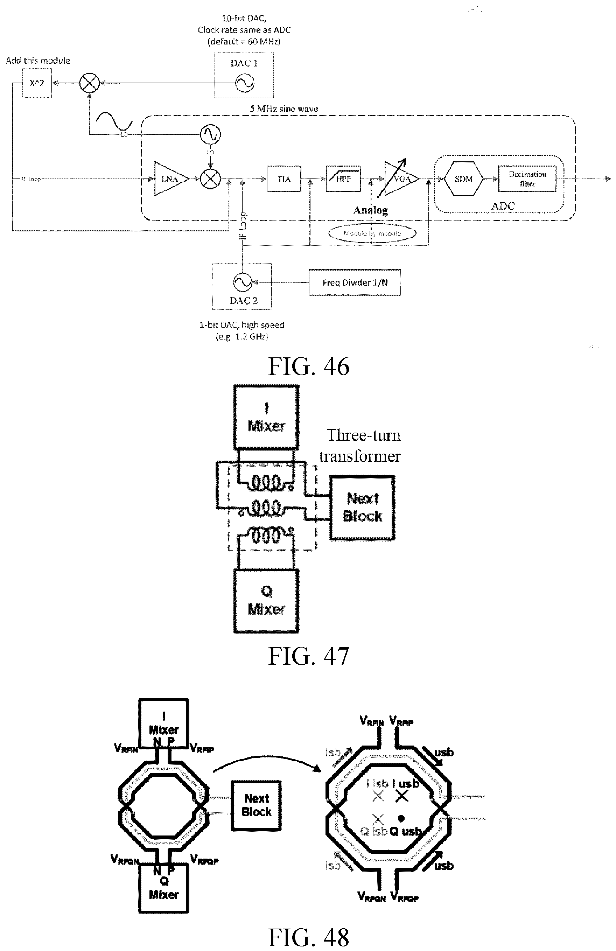

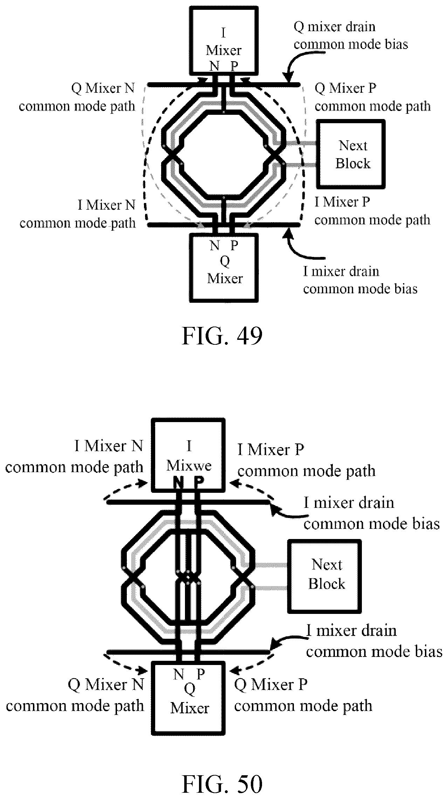

FIG. 45 is a schematic structural diagram of an auxiliary circuit according to an embodiment of the present application. FIG. 46 is a schematic structural diagram of another auxiliary circuit according to an embodiment of the present application. FIG. 48 is a schematic structural diagram of an IQ Mixer according to an embodiment of the present application. FIG. 49 is a schematic diagram corresponding to the structure shown in FIG. 48.

In some optional embodiments, based on the structure shown in FIGS. 42-43 and related description, ATX may also be implemented by a squarer in combination with a multi-bit DAC. As shown in FIG. 45, the receiver includes an LNA, a mixer, a TIA, an HPF, an ADC and a BB processing module (BB Processor) and a local oscillator (LO), which are connected in sequence. The mixer uses a first LO signal provided by the local oscillator to down-convert an echo signal provided by the LNA to obtain an intermediate frequency signal (i.e., an analog baseband signal). The ATX may include a first DAC (i.e., DAC1), a mixer and a squarer ($x^2$), which are connected in sequence. The first DAC provides an analog signal to a receiving end of the mixer in the ATX, and the other receiving end of the mixer may be connected to the local oscillator in the receiver to mix an analog echo signal output by the first DAC by using a second LO signal provided by the local oscillator, and then output an analog intermediate frequency signal to an input end of the squarer. The squarer connects the processed analog intermediate frequency signal to an input end of the TIA to calibrate the circuits and components such as TIA, HPF, ADC and the like in the receiver. In some other optional embodiments, the ATX may also output the analog echo signal directly to a receiving end of the squarer through the DAC, and the squarer transmits the processed analog echo signal to an input end of the LNA to achieve calibration of circuits and components such as LNA, mixer, TIA, HPF, ADC and the like in the receiver.

In some optional embodiments, as shown in FIG. 46, based on the structure shown in FIG. 45, for the receiver including a VGA and an ADC including an SDM unit and a decimation filter unit (Decimation filter), a second DAC may be further provided. An output end of the second DAC may be connected to any node between the mixer and the TIA, between the TIA and the HPF, between the HPF and the VGA, and between the VGA and the ADC in the receiver to calibrate corresponding circuits and components. Optionally, the first DAC may be a multi-bit (e.g., 10-bit) DAC, and the second DAC may be a 1-bit DAC.

The ATX composed of the DAC and the squarer may be reasonably changed by those skilled in the art based on the contents disclosed above. The specific implementation mode is not limited in the present application, as long as it can achieve the same or similar functions of the ATX in the embodiments of the present application.

In some optional embodiments, when the ATX is provided in vicinity of the receivers, the ATX may be provided, for example, in a gap between the receivers; and two or more receivers may share one ATX. Similarly, when the ARX is provided in vicinity of the transimitters, the ARX may be provided, for example, in a gap between the transimitters; and two or more transimitters may share one ARX. Optionally, the ATX and/or ARX described above may be intermittently operated. For example, ATX may transmit a tone signal for calibration in an operating interval of the receiver (such as between frames or chirps) to perform real-time and effective calibration and compensation operations on the receiver. Similarly, the ARX may also generate a tone signal for calibration using a tone generator in an operating interval of the receiver (such as between frames or chirps) to effectively calibrate the ARX first. Then, the transmitter is effectively calibrated through the calibrated ARX to ensure that calibration and compensation operations are performed in a preset manner.

According to the scheme of implementing the calibration of the transmitter and/or the receiver based on the auxiliary chain mode shown in FIGS. 42-46, based on the auxiliary chain mode, an auxiliary circuit is added to an integrated circuit such as a chip or die to assist in calibrating a main path circuit to effectively improve the performance of an analog circuit and module. At the same time, at least a portion of the radio frequency circuits and component may be calibrated in real time in an on-the-fly manner, thereby effectively improving the calibration performance, and further effectively reducing the difficulty of radio frequency implementation while improving the radio frequency performance.

Since the mixer is a very important and critical component for frequency conversion in the transceiving chain, it is widely used in wireless communication devices such as communication and radar, for example, a single sideband mixer with good suppression effect on image signals, and an IQ mixer in the transceiving chain in the embodiments of the present application. The IQ mixer (such as a single sideband mixer) includes two branches, I-branch and Q-branch with a phase difference of 90°, to transmit a signal.

For an application scenario with a relatively compact layout area, such as in a high-frequency sensor application in a millimeter wave frequency band, physical distances between the I-branch and the Q-branch, and between an input branch and an output branch before mixing, etc. are short, which may cause an electromagnetic wave signal to have a problem of signal leakage between branches, between input and output ports, and between an IQ matching network and a mixer output by means such as magnetic coupling, substrate coupling, electrical coupling, and the like, thereby leading to serious deterioration of image rejection ratio and local oscillator leakage of mixer.

In an optional embodiment, since the mixer output network needs to ensure power synthesis of both I and Q branches while meeting the requirement of impedance matching, the present application provides a new mixer structure, that is, by improving passive network of a mixer output, isolation between the I and Q branches is effectively improved while effectively reducing leakage of the local oscillator signal.

FIG. 47 is a schematic diagram of a circuit module of an IQ Mixer according to an embodiment of the present application. As shown in FIG. 47, an IQ mixer may include an I-branch mixing unit, a Q-branch mixing unit and a transformer unit. The I-branch mixing unit may be configured to output an I-path signal, the Q-branch mixing unit may be configured to output a Q-path signal, and the transformer unit may be configured to magnetically couple the I-path signal and the Q-path signal to synthesize an IQ-mixed output signal, and transmit the IQ mixed output signal to a Next Block. The transformer unit may be provided between the I-branch mixing unit and the Q-branch mixing unit to increase a physical distance between the I-branch mixing unit and the Q-branch mixing unit with a relatively short-circuited IQ mixer, thereby effectively reducing the coupling between the I-branch mixing unit and the Q-branch mixing unit, achieving the purpose of improving rejection ratio of the IQ mixer and facilitating layout design of the board.

The short-circuited IQ mixer is implemented by short-circuiting outputs of the I-branch and the Q-branch of the mixer IQ respectively, and then matching them to a Next Block through Matching Networks, that is, performing signal synthesis by electrical coupling. As shown in FIG. 47, in the IQ mixer according to an optional embodiment of the present application, a branch inductor may be connected in series between output ends of the I-branch mixing unit and between output ends of the Q-branch mixing unit respectively, and then a magnetic coupling inductor is provided between the two branch inductors to form a three-turn transformer structure. That is, output of the I-branch mixing unit and output of the Q-branch mixing unit are magnetically coupled and synthesized by magnetic coupling, so as to obtain an IQ mixed output signal described above. Common modes of the I-branch mixing unit and the Q-branch mixing unit are not directly connected, so they may be adjusted separately, making the application scenarios of the component more flexible. Then, the IQ mixed output signal is directly transmitted to the Next Block through two ends of the magnetic coupling inductor as output ends. That is, the three-turn transformer structure has four input ends and two output ends.

Based on the three-turn transformer structure shown in FIG. 47, if an LO signal and a signal to be mixed (such as an echo signal) enter P and N ends of each of the I-branch and the Q-branch of the three-turn transformer, current direction and magnetic field direction formed on the three-turn transformer are shown in FIG. 48. At this time, an lsb magnetic field is superimposed and a usb magnetic field is cancelled, so that a high-quality single sideband signal may be output. That is, based on the three-turn transformer structure, down-mixing operation or up-mixing operation of the signal to be mixed may be realized.

In some optional embodiments, even in a scenario where there is a phase difference between the LO signal and the signal to be mixed, since the signals are cancelled in a same way on the three-turn transformer, the output of the three-turn transformer is still a single sideband signal when there is no imbalance between the LO signal and the signal to be mixed.

Compared with the short-circuited IQ mixer that performs power synthesis by electrically coupling, the magnetically coupled IQ mixer provided in the embodiment of the present application performs power synthesis by magnetically coupling. The I and Q branches of the magnetically coupled IQ mixer may be completely consistent and axisymmetric, and no additional phase error will be introduced due to inconsistent trace lengths of the I and Q branches, which may make related circuits (such as millimeter-wave and other high-frequency circuits) more robust in subsequent manufacturing process and more resistant to process instability. For example, in the magnetically coupled IQ mixer in the embodiment of the present application, as shown in FIG. 49, a transformer tap may be provided on a midline between the P and N ports, so that the structure of the mixer may be axisymmetric based on the midline, and common mode path lengths of the P port and the N port are equal, that is, the symmetry of P and N in the magnetically coupled IQ mixer is better than that in the short-circuited IQ mixer, thereby making the leakage of the local oscillator signal smaller.

In some optional embodiments, the magnetically coupled IQ mixer provided by the embodiment of the present application may be applied to various circuits such as a transmitter channel and on-chip self-test, and may be used as an up-conversion mixer in each electromagnetic wave circuit. For example, the IQ mixer in each transmitter channel (or transmitter chain) and the BIST in the embodiments of the present application may adopt the magnetically coupled IQ mixer in this embodiment of the present application.

FIG. 50 is a schematic diagram of a physical structure of another IQ Mixer according to an embodiment of the present application. As shown in FIG. 50, an embodiment of the present application further provides a structure of another magnetically coupled IQ mixer, in which tap feeding lines of the I and Q branches are partially overlapped. For example, for the I-branch, a tap of the I-branch may be bypassed from one side of the Q-branch (such as through a via) and extended to one side of the I-branch, and then connected to a common-mode bias voltage. Similarly, A tap of the Q-branch may be bypassed from one side of the I-branch (such as through a via) and extended to one side of the Q-branch, and then connected to a common-mode bias voltage. The above-described routing mode may make a path of a common-mode path more definite, and it is less susceptible to interference from other circuits. Meanwhile, the three-turn transformer in the IQ Mixer in the embodiment of the present application may be square, octagonal, regular octagonal, or the like, that is, as long as it is axisymmetrically distributed along a center between N and P in a top view or a bottom view.

An embodiment of the present application further provides an integrated circuit, which may include: a signal transceiving channel for transmitting a radio signal and receiving an echo signal formed by reflection of the radio signal by a target object; and a signal processing chain according to any one of the embodiments of the present application, for compensating a digital baseband signal obtained after processing; and/or a signal calibration and/or compensation chain according to any one of the embodiments of the present application, for calibrating and/or compensating a signal receiving/transmitter chain.

In some optional embodiments, the integrated circuit may be a millimeter wave radar chip or a lidar chip (such as an FMCW lidar chip), for obtaining information such as distance, angle, velocity, shape, size, surface roughness, and dielectric characteristics of a target. Optionally, the integrated circuit may have an Antenna-In-Package (AiP) chip structure, an Antenna-On-Package (AoP) chip structure, an Antenna-On-Chip (AoC) chip structure, or the like.

In an optional embodiment, different integrated circuits (e.g., chips) may be combined with each other to form a cascade structure, which will not be described herein for the sake of simplicity, but it should be understood that techniques that would be known to those skilled in the art based on the contents disclosed in the present application are to be included in the scope disclosed in the present application.

An embodiment of the present application further provides a wireless communication device, which may include: a carrier; an integrated circuit according to any one of the embodiments of the present application, which is mounted on the carrier; and an antenna mounted on the carrier for transceiving a radio signal. The antenna and the integrated circuit may be integrated into a singal component to be mounted on the carrier (that is, the antenna may be an antenna provided in an AiP or AoC structure). The integrated circuit and the antenna may also be two separate individual components, which are connected to form a System on Chip (SoC) structure. The carrier may be a Printed Circuit Board (PCB), such as a development board, a data acquisition board, or a motherboard of a device, and the first transmission line may be a PCB trace.

An embodiment of the present application further provides a terminal device, which may include: a device body; and a wireless communication device according to any one of the embodiments of the present application, which is mounted on the device body for object detection and/or communication.

Specifically, on the basis of the embodiments described above, in some optional embodiments of the present application, the wireless communication device may be provided outside or inside the device body, while in other optional embodiments of the present application, the wireless communication device may be partially provided inside and partially provided outside the device body. The embodiments of the present disclosure are not limited thereto, it all depends specifically.

In some optional embodiments, the above described device body may be components and products applied to fields such as smart cities, smart houses, transportation, smart homes, consumer electronics, security monitoring, industrial automation, in-cabin detection (such as smart cockpits), medical devices and health care. For example, the device body can be smart transportation device (such as automobiles, bicycles, motorcycles, ships, subways, trains, etc.), security device (such as cameras), liquid level/flow rate detection device, smart wearable device (such as bracelets, glasses, etc.), smart home device (such as frequency sweeping robots, door locks, televisions, air conditioners, smart lights, etc.), various communication devices (such as mobile phones, tablet computers, etc.), as well as road gates, smart traffic lights, smart signs, traffic cameras and various industrial mechanical arms (or robots), etc. The device body can be various instruments for detecting vital signs parameters and various devices equipped with the instruments, such as vital signs characteristics detection in automobile cabins, indoor personnel monitoring, intelligent medical devices, consumer electronic devices, etc.

The wireless communication device may be a wireless communication device described in any embodiment of the present disclosure, and the structure and operating principle of the wireless communication device have been described in detail in the above embodiments, and will not be repeated here.

It should be noted that, the wireless communication device may achieve functions such as target detection and/or communication by transceiving radio signals to provide detection target information and/or communication information to the device body, thereby assisting or even controlling the operation of the device body.

For example, when the above-described device body is applied to an Advanced Driving Assistance System (ADAS), the wireless communication device (such as millimeter wave radar, lidar, and the like) as an on-board sensor may assist the ADAS system in realizing application scenarios such as adaptive cruise, Autonomous Emergency Braking (AEB), Blind Spot Detection (BSD) , Lane Change Assist (LCA), Rear Cross Traffic Alert (RCTA), parking assistance, rear vehicle warning, collision avoidance, pedestrian detection, and the like, and may also be used in application scenarios such as car door opening collision avoidance.

The above-described embodiments are intended to express only the preferred embodiments of the present invention and the principles of the techniques employed, and the description thereof is more specific and detailed, but should not therefore be construed as limiting the scope of the invention patent. It is possible for those skilled in the art to make various significant changes, readjustments and substitutions without departing from the scope of the present invention. Therefore, although the present invention has been described in more detail by the above embodiments, the present invention is not limited to the above embodiments, but may include more other equivalent embodiments without departing from the idea of the present invention, and the scope of protection of the patent of the present invention is defined by the scope of the appended claims.

From the foregoing, it will be appreciated that specific embodiments of the invention have been described herein for purposes of illustration, but that various modifications may be made without deviating from the scope of the invention. Accordingly, the invention is not limited except as by the appended claims.

**Claims**

1. A signal processing method applied to a frequency modulated continuous wave (FMCW) radar having at least two receiving channels with unequal path lengths, the at least two receiving channels comprising a reference receiving channel and at least one additional receiving channel having a path length difference relative to the reference receiving channel; wherein for any one of the receiving channels, the method comprises steps of:

   processing an echo signal received by the receiving channel to obtain a digital baseband signal; and
   compensating the digital baseband signal obtained after the processing based on the path length difference of the receiving channel relative to the reference receiving channel and frequency information pertaining to a transmitted signal corresponding to the received echo signal.

2. The signal processing method according to claim 1, wherein the unequal (disparity in) path lengths comprise: unequal feeding path lengths of receiving antennas, and/or unequal RXLO lengths (length from a local oscillator to a mixer of each receiving channel).

3. The signal processing method according to claim 1, wherein the frequency information pertaining to the transmitted signal corresponding to the received echo signal comprises a bandwidth of frequency sweep, a period of frequency sweep, and/or a center frequency of frequency sweep.

4. The signal processing method according to claim 1, wherein the unequal path lengths comprise unequal feeding path lengths of receiving antennas; and the step of compensating the digital baseband signal obtained after the processing comprises:

   acquiring an echo signal received by the reference receiving channel according to a time delay produced by a feeding path length of a reference receiving antenna corresponding to the reference receiving channel; and processing the echo signal to obtain a digital baseband signal of the reference receiving antenna at a receiving end;
   generating an echo signal received by a receiving channel i according to a time delay produced by a feeding path length of a receiving antenna i corresponding to the receiving channel i and the echo signal received by the reference receiving channel; and processing the echo signal to obtain a digital baseband signal of the receiving antenna i at the receiving end; wherein the receiving channel is any one of the at least one additional receiving channel; and
   compensating the digital baseband signal of the receiving antenna i at the receiving end based on a difference between the digital baseband signal of the receiving antenna i at the receiving end and the digital baseband signal of the reference receiving antenna at the receiving end.

5. The signal processing method according to claim 1, wherein the unequal path lengths comprise unequal RXLO lengths; and the step of compensating the digital baseband signal obtained after the processing comprises:

acquiring an echo signal received by the reference receiving channel according to a time delay produced by a reference RXLO length corresponding to a reference receiving antenna corresponding to the reference receiving channel; and processing the echo signal to obtain a digital baseband signal of the reference receiving antenna at a receiving end;

generating an echo signal received by a receiving channel i according to a time delay produced by an $RXLO_i$ length corresponding to a receiving antenna i corresponding to the receiving channel i and the echo signal received by the reference receiving channel; and processing the echo signal to obtain a digital baseband signal of the receiving antenna i at the receiving end; wherein the receiving channel is any one of the at least one additional receiving channel; and

compensating the digital baseband signal of the receiving antenna i at the receiving end based on a difference between the digital baseband signal of the receiving antenna i at the receiving end and the digital baseband signal of the reference receiving antenna at the receiving end.

6. The signal processing method according to claim 1, wherein the unequal path lengths comprise unequal feeding path lengths of receiving antennas and unequal RXLO lengths; and the step of compensating the digital baseband signal obtained after the processing comprises:

acquiring an echo signal received by the reference receiving channel according to a time delay produced by a feeding path length of a reference receiving antenna corresponding to the reference receiving channel and a time delay produced by a reference RXLO length corresponding to the reference receiving antenna; and processing the echo signal to obtain a digital baseband signal of the reference receiving antenna at a receiving end;

generating an echo signal received by a receiving channel i according to a time delay produced by a feeding path length of a receiving antenna i corresponding to the receiving channel i and a time delay produced by an $RXLO_i$ length corresponding to the receiving antenna i, and the echo signal received by the reference receiving channel; and processing the echo signal to obtain a digital baseband signal of the receiving antenna i at the receiving end; wherein the receiving channel is any one of the at least one additional receiving channel; and

compensating the digital baseband signal of the receiving antenna i at the receiving end based on a difference between the digital baseband signal of the receiving antenna i at the receiving end and the digital baseband signal of the reference receiving antenna at the receiving end.

7. The signal processing method according to claim 4, 5 or 6, wherein the step of processing the echo signal received by the receiving channel to obtain the digital baseband signal comprises:

acquiring an echo signal received by the reference channel according to a time delay produced by a feeding path length of a reference receiving antenna corresponding to the reference receiving channel and a time delay produced by a reference RXLO length corresponding to the reference receiving antenna;

generating an echo signal received by a receiving channel i according to a time delay produced by a feeding path length of a receiving antenna i corresponding to the receiving channel i and a time delay produced by an $RXLO_i$ length corresponding to the receiving antenna i, and the echo signal received by the reference channel; and

processing the echo signal received by the receiving channel i and the echo signal received by the reference receiving channel to obtain a digital baseband signal of the receiving antenna i at the receiving end and a digital baseband signal of the reference receiving antenna at the receiving end.

8. The signal processing method according to claim 7, wherein the digital baseband signal of the receiving antenna i at the receiving end is compensated based on a bandwidth of frequency sweep, a chirp effective duration, and a time delay of a current receiving antenna relative to the reference receiving antenna.

9. The signal processing method according to claim 8, further comprising: performing a first phase compensation on the digital baseband signal of the receiving antenna i at the receiving end based on a difference between the digital baseband signal of the receiving antenna i at the receiving end and the digital baseband signal of the reference receiving antenna at the receiving end.

10. The signal processing method according to claim 9, wherein the first phase compensation is performed on the digital baseband signal of the receiving antenna i at the receiving end based on the bandwidth of frequency sweep, the chirp effective duration, a center frequency of a frequency sweep signal, and the time delay of the current receiving antenna relative to the reference receiving antenna.

11. The signal processing method according to claim 8 or 10, further comprising: performing a second phase compensation on the digital baseband signal of the receiving antenna i at the receiving end based on a difference between the digital baseband signal of the receiving antenna i at the receiving end and the digital baseband signal of the reference receiving antenna at the receiving end.

12. The signal processing method according to claim 11, wherein the second phase compensation is performed on the digital baseband signal of the receiving antenna i at the receiving end based on the bandwidth of frequency sweep, the chirp effective edge period, a time delay produced by the reference receiving antenna, and the time delay of the current receiving antenna relative to the reference receiving antenna.

13. The signal processing method according to claim 7, wherein the step of compensating the digital baseband signal of the receiving antenna i at the receiving end comprises: compensating the digital baseband signal of the receiving antenna i at the receiving end based on a bandwidth of frequency sweep, a chirp effective edge period, a center frequency of a frequency sweep signal, and a time delay of a current receiving antenna relative to the reference receiving antenna.

14. The signal processing method according to claim 7, wherein acquiring the echo signal received by the reference receiving channel comprises:

acquiring a first received signal $x1(t - \tau_{11})$ input from the reference receiving antenna through a low noise amplifier (LNA) to a mixer on a receiving channel where the reference receiving antenna is located, and a second received signal $x1(t - \tau_{12})$ input through a local oscillator (LO) to the mixer on the receiving channel where the reference receiving antenna is located; and

performing correlation processing on the obtained first received signal $x1(t - \tau_{11})$ and the second received signal $x1(t - \tau_{12})$ to obtain an echo signal $x1(t - \tau_{11}) x1^*(t - \tau_{12})$ received by the reference receiving channel; wherein

$$x1(t - \tau_{11}) = x1(t)*\exp\left(-j * \left(2\pi f_c \tau_{11} + \pi \frac{\beta}{T}(2\tau_{11}t - \tau_{11}^2)\right)\right);$$

and

$$x1(t - \tau_{12}) = x1(t)*\exp\left(-j * \left(2\pi f_c \tau_{12} + \pi \frac{\beta}{T}(2\tau_{12}t - \tau_{12}^2)\right)\right);$$

where

$$x1(t) = \exp\left(j * \left(2\pi f_c t + \pi \frac{\beta}{T}t^2 + \theta\right)\right), 0 \le t \le T ;$$

where $\beta$ represents a bandwidth of frequency sweep, T represents a time when a frequency of a single chirp signal of the FMCW radar rises, $\theta$ represents an initial phase of the signal, $f_c$ is a center frequency of the frequency sweep signal, $\tau_{11}$ represents a time delay caused by a feeding path length of the reference receiving antenna, and $\tau_{12}$ represents a time delay produced by the reference RXLO length corresponding to the reference receiving antenna.

15. The signal processing method according to claim 14, wherein generating the echo signal received by the receiving channel i comprises:

acquiring a third received signal $x1(t - \tau_{11} - \mu_{i11})$ input from the receiving antenna i through the LNA to a mixer on a receiving channel on which the receiving antenna i is located, and a fourth received signal $x1(t - \tau_{12} - \mu_{i12})$ input through the local oscillator (LO) to the mixer on the receiving channel where the receiving antenna i is located; and

performing correlation processing on the obtained third received signal $x1(t - \tau_{11} - \mu_{i11})$ and fourth received signal $x1(t - \tau_{12} - \mu_{i12})$ to obtain an echo signal $x1(t - \tau_{11} - \mu_{i11}) x1^*(t - \tau_{12} - \mu_{i12})$ received by the receiving channel i; wherein

$$x1(t - \tau_{11} - \mu_{i11})\, x1^*(t - \tau_{12} - \mu_{i12}) = x1(t - \tau_{11})\quad x1^*(t - \tau_{12})\quad * \quad \exp\left(-j * \left(2\pi f_c(\mu_{i11} - \mu_{i12})\right)\right)$$

$$* \exp\left(j * \left(2\pi\tfrac{\beta}{T}(\mu_{i11} - \mu_{12})\tau_{i12}\right)\right) * \exp\left(j * \pi\tfrac{\beta}{T}(\mu_{i11}^2 - \mu_{i12}^2)\right) * \exp\left(-j * \left(2\pi\tfrac{\beta}{T}(\mu_{i11} - \mu_{i12})t\right)\right) * \exp\left(j *\right.$$

$$\left.\left(2\pi\tfrac{\beta}{T}\mu_{i11}(\tau_{11} - \tau_{12})\right)\right);$$

where $\mu_{i11}$ represents a time delay produced by the feeding path length of the receiving antenna i relative to the feeding path length of the reference receiving antenna, and $\mu_{i12}$ represents a time delay produced by an $RXLO_i$ length corresponding to the receiving antenna i relative to the reference RXLO length.

16. A computer-readable storage medium having computer-executable instructions stored therein, wherein the computer-executable instructions are used for implementing the signal processing method according to any one of claims 1 to 15.

17. A signal processing chain applied to an FMCW radar having at least two receiving channels with unequal path lengths, comprising: a processing module, and a compensation module; wherein

the processing module is configured to process, for any receiving channel, an echo signal received by the receiving channel to obtain a digital baseband signal; where the at least two receiving channels comprise a reference receiving channel and at least one additional receiving channel having a path length difference relative to the reference receiving channel; and
the compensation module is configured to compensate the digital baseband signal obtained after the processing based on the path length difference of the receiving channel relative to the reference receiving channel and frequency information pertaining to a transmitted signal corresponding to the received echo signal.

18. The signal processing chain according to claim 17, wherein the compensation module is configured to compensate the digital baseband signal obtained after the processing in accordance with the received signal compensation method according to any one of claims 1 to 15.

19. The signal processing chain according to claim 17 or 18, wherein the compensation module comprises: a first multiplier M1, a second multiplier M2, and a first digital local oscillator; wherein

an input to the first digital local oscillator comprises $\theta\_0$ and $\Delta\theta$, which contain information used for compensation, an output LO_I of the first digital local oscillator is LO_I = $\cos(\omega_0 t + \varphi_0)$, and an output LO_Q of the first digital local oscillator is LO_Q = $\sin(\omega_0 t + \varphi_0)$;
one input of the first multiplier M1 is a preprocessed received signal $\cos(\omega t + \varphi)$ of the receiving antenna i at the receiving end, the other input of the first multiplier M1 is the output LO_I of the first digital local oscillator, and the output of the first multiplier M1 is a real part $Y_{i\_}I$ of the compensated received signal of the receiving antenna i; and
one input of the second multiplier M2 is a preprocessed digital baseband signal $\cos(\omega t + \varphi)$ of the receiving antenna i at the receiving end, the other input of the second multiplier M2 is the output LO_Q of the first digital local oscillator, and an output of the second multiplier M2 is an imaginary part $Y_{i\_}Q$ of the compensated received signal of the receiving antenna i.

20. The signal processing chain according to claim 19, wherein the compensation module comprises a third multiplier M3, a fourth multiplier M4, a fifth multiplier M5, a sixth multiplier M6, a first adder S1, a second adder S2, and a second digital local oscillator; wherein

an input of the second digital local oscillator comprises $\theta_0$ and $\Delta\theta$, which contain information used for compensation, an output LO_I of the second digital local oscillator is LO_I = $\cos(\omega_0 t + \varphi_0)$, and an output LO_Q of the second digital local oscillator is LO_Q = $\sin(\omega_0 t + \varphi_0)$;
one input of the third multiplier M3 is a real part $\cos(\omega t + \varphi)$ of the preprocessed digital baseband signal of the receiving antenna i at the receiving end, the other input of the third multiplier M3 is the output LO_I of the second digital local oscillator, and the output of the third multiplier M3 is an input to the second adder;
an input of the fourth multiplier M4 is the output LO_Q of the second digital local oscillator, and the output of the fourth multiplier M4 is an input to the first adder;
one input of the fifth multiplier M5 is an imaginary part $\sin(\omega t + \varphi)$ of the preprocessed digital baseband signal of the receiving antenna i at the receiving end, the other input of the fifth multiplier M5 is the output LO_I of the second digital local oscillator, and the output of the fifth multiplier M5 is the other input to the first adder;

an input of the sixth multiplier M6 is the output LO_Q of the second digital local oscillator, and the output of the sixth multiplier M6 is connected to the other input to the first adder;

the two inputs of the first adder S1 are the output of the fourth multiplier M4 and the output of the fifth multiplier M5 respectively, and an output of the first adder S1 is a real part $Y_{i\_}I$ of the compensated received signal of the receiving antenna i; and

the two inputs of the second adder S2 are the output of the third multiplier M3 and the output of the sixth multiplier M6 respectively, and the output of the first adder S1 is an imaginary part $Y_{i\_}Q$ of the compensated received signal of the receiving antenna i.

21. A signal processing chain, comprising a waveform generator and a plurality of transmitter channels connected to the waveform generator, wherein at least two transmitter channels have different signal transmission delays, and at least one of the transmitter channels comprises a direct digital frequency synthesizer; and

the direct digital frequency synthesizer is configured to generate a compensation signal according to a time delay difference of a signal transmission delay of a corresponding transmitter channel and a reference transmission delay, and to compensate a transmitted signal of the corresponding transmitter channel using the compensation signal.

22. A signal processing method applied to an antenna array of an electromagnetic wave component having at least two signal transmitter chains, the signal transmitter chains being phase-shifters comprising a digital phase-shift architecture, the signal processing method comprising:

determining a reference transmission delay and a time delay difference of a signal transmission delay for each of transmitter channels relative to the reference transmission delay;

generating a compensation signal corresponding to each of the transmitter channels according to the time delay difference; and

compensating a transmitted signal of a corresponding transmitter channel using the compensation signal.

23. A signal processing chain, comprising a signal transmitter chain and a signal receiver chain, wherein the signal transmitter chain comprises a plurality of transmitter channels implemented based on an analog circuit, each of the transmitter channels comprises a respective transmitting antenna, at least two of the transmitter channels have different signal transmission delays, and a plurality of the transmitting antennas transmit electromagnetic wave signals in a time-division multiplexing (TDM) mode;

the signal receiver chain comprises at least one receiving channel, and the at least one receiving channel comprises a signal compensator implemented using a digital phase-shift architecture; and

the signal compensator is configured to determine a transmitter channel corresponding to a currently received echo signal, generate a compensation signal according to a time delay difference of a signal transmission delay of a corresponding transmitter channel relative to a reference transmission delay, and compensate the currently received echo signal using the compensation signal.

24. A signal processing method applied to an antenna array of an electromagnetic wave component having at least two signal transmitter chains, the signal processing method comprising:

determining a reference transmission delay and a time delay difference of a signal transmission delay for each of transmitter channels relative to the reference transmission delay;

generating a compensation signal corresponding to each of the transmitter channels according to the time delay difference; and

determining a transmitter channel corresponding to a currently received echo signal, and compensating an intermediate frequency phase difference and/or frequency difference of the currently received echo signal using the corresponding compensation signal.

25. A target detection method applied to a Doppler Division Multiplexing (DDM) radar sensor having at least one transceiving channel, the method comprising:

processing an echo signal received by a receiving channel by range-dimensional Fourier transform to obtain range-dimensional FFT data, and performing phase-shift compensation on the range-dimensional FFT data by using a phase-shift error coefficient of a transmitter channel to obtain range-dimensional FFT compensation data;

processing the range-dimensional FFT compensation data through Doppler-dimensional Fourier transform to

**EP 4 535 673 A1**

obtain Doppler-dimensional FFT data; and

determining velocity information of a target object based on the Doppler-dimensional FFT data.

26. A signal processing chain, comprising a transmitter chain for transmitting an electromagnetic wave signal and a receiver chain for receiving an echo signal formed based on an electromagnetic wave signal, wherein

the transmitter chain comprises an analog signal source and a digital phase-shifter, wherein the analog signal source is configured to provide an initial analog signal; the digital phase-shifter is configured to generate a digital phase-shifted signal and phase-shift the initial analog signal based on the digital phase-shifted signal to perform a preset phase-shifting operation on the initial analog signal;

the receiver chain comprises an analog-to-digital converter and a digital baseband processing module, wherein the analog-to-digital converter is configured to perform analog-to-digital conversion on a received echo signal to obtain a digital baseband signal, and the digital baseband processing module is configured to sequentially perform range-dimensional Fourier transform and velocity-dimensional Fourier transform on the digital baseband signal;

the digital baseband processing module comprises a phase-shift compensation unit configured to use a phase-shift error coefficient of the digital phase-shifter in the transmitter chain to perform phase-shift compensation on range-dimensional FFT data obtained by the range-dimensional Fourier transform; and

the digital baseband processing module is configured to perform velocity-dimensional Fourier transform according to the compensated range-dimensional FFT data.

27. A processing method for receiving leakage in an FMCW, comprising following steps:

processing a received signal in a target-free scenario through range-dimensional Fourier transform to obtain range-dimensional FFT data, and extracting, for each chirp signal in the range-dimensional FFT data, first k data in the chirp signal ordered from low to high in frequency;

obtaining, for each data belonging to a same order among the first k data of each group extracted from different chirp signals, a leakage value of the order; wherein among the first k data of each group, the data belonging to the same order have a same corresponding frequency; and

subtracting, when performing target detection, data of a corresponding order of each chirp signal in the range-dimensional FFT data generated by a currently received signal, by using a leakage value of respective order, to implement leakage elimination of the received signal.

28. A processing method for receiving leakage in an FMCW, comprising following steps:

processing, in a target-free scenario, a received signal through range-dimensional Fourier transform to obtain range-dimensional FFT data; and

using, for a plurality of predetermined range bins, an average value between different chirp signals as a first leakage value for each predetermined range bin based on a frame of the range-dimensional FFT data.

29. The processing method according to claim 28, further comprising:
using, for the plurality of predetermined range bins, a median of first leakage values among different frames as a second leakage value for each predetermined range bin based on a plurality of frames of range-dimensional FFT data.

30. A signal processing chain applied to an electromagnetic wave sensor, the signal processing chain is a transmitter chain comprising an analog signal source and a digital phase-shifter; wherein

the analog signal source is configured to provide an initial analog signal; and

the digital phase-shifter is configured to provide a phase-shifted signal generated in a digital domain and phase-shift the initial analog signal based on the phase-shifted signal to perform a preset phase-shift operation on the initial analog signal.

31. A signal calibration chain, comprising the signal processing chain according to claim 30; wherein
a receiving antenna connection port of a signal receiver chain in the signal processing chain is connected to a transmitting antenna connection port of a signal transmitter chain in the signal processing chain; and the signal receiver chain is further configured to calibrate the signal transmitter chain.

32. A signal calibration chain, comprising the signal processing chain according to claim 30, and a Built-in Self-Test (BIST) module; wherein

a receiving antenna connection port of a signal receiver chain in the signal processing chain is connected to a transmitting antenna connection port of a signal transmitter chain in the signal processing chain through the BIST module; and

the signal receiver chain in the signal processing chain is further configured to calibrate the signal transmitter chain.

33. A signal calibration chain, comprising two signal receiver chains, a BIST module, an auxiliary circuit unit, and the signal processing chain according to claim 30; wherein

each of the signal receiver chains comprises a real mixer, a real analog-to-digital converter and a digital signal processing module; the real mixer is configured to down-convert a received echo signal based on a received local oscillator signal to obtain an analog intermediate frequency signal, and the echo signal is a signal formed by a signal transmitted by a signal transmitter chain being reflected and/or scattered by a target object; the real analog-to-digital converter is configured to perform analog-to-digital conversion on a received intermediate frequency signal to obtain a digital intermediate frequency signal; and the digital signal processing module is configured to process the digital intermediate frequency signal to obtain a target parameter; and

receiving antenna connection ports of the two signal receiver chains are respectively connected to a transmitting antenna connection port of the signal processing chain through the auxiliary circuit unit and the BIST module in sequence, and the signal receiver chains are configured to calibrate an intermediate frequency portion of the signal transmitter chain.

34. A signal compensation chain, comprising the signal processing chain according to claim 30, and a compensation module; wherein

the compensation module is configured to compensate for at least one of an IQ mismatch, an IQ imbalance, a signal leakage, and a harmonic distortion defect of the signal processing chain.

35. An integrated circuit, comprising a signal transceiving channel configured to transmit a radio signal and receive an echo signal formed by reflection of the radio signal by a target; and a signal processing chain according to any one of claims 17-21, 23 and 26 and configured to compensate a digital baseband signal obtained after processing; and/or

the signal calibration chain according to any one of claims 30-33; and/or

the signal compensation chain according to claim 34 configured to calibrate and/or compensate a signal receiving/transmitter chain.

36. A wireless communication device, comprising:

a carrier;

the integrated circuit according to claim 35, which is mounted on the carrier; and

an antenna mounted on the carrier, for transmitting and receiving a radio signal.

37. A terminal device, comprising:

a device body; and

the wireless communication device according to claim 36, which is mounted on the device body for object detection and/or communication.

FIG. 1

FIG. 2

300

Processing, for any receiving channel, an echo signal received by the receiving channel to obtain a digital baseband signal, wherein at least two receiving channels include a reference receiving channel and at least one remaining receiving channel having a length difference relative to the reference receiving channel

301

Compensating the digital baseband signal obtained after the processing based on the length difference of the receiving channel relative to the reference receiving channel and frequency information of a transmitted signal corresponding to the received echo signal

FIG. 3

400

Acquiring an echo signal received by the reference receiving channel according to a time delay generated by a feeder length of a reference receiving antenna corresponding to the reference receiving channel and a time delay generated by a reference RXLO length corresponding to the reference receiving antenna

401

Generating an echo signal received by a receiving channel i according to a time delay generated by a feeder length of a receiving antenna i corresponding to the receiving channel i and a time delay generated by an RXLOi length corresponding to the receiving antenna i, and the echo signal received by the reference receiving channel that has been obtained; where i is an integer greater than or equal to 1

402

processing the echo signal received by the receiving channel i and the echo signal received by the reference receiving channel to obtain a digital baseband signal of the receiving antenna i at the receiving end and a digital baseband signal of the reference receiving antenna at the receiving end

403

Compensating the digital baseband signal of the receiving antenna i at the receiving end by using a difference between the digital baseband signal of the receiving antenna i at the receiving end and the digital received signal of the reference receiving antenna at the receiving end

FIG. 4

EP 4 535 673 A1

FIG. 5

FIG. 6

FIG. 7

58

FIG. 8

FIG. 9

FIG. 10

FIG. 11A

FIG. 11B

1102

1101

11031    11041

11051

$\cos(\omega n+\varphi)$

1106

$\sin(\omega n+\varphi)$

TX_LO_I

11032    11042

11052

TX_LO_Q

## FIG. 12A

142

141

143

1421

DAC

1422

DDFS

1423

## FIG. 12B

Digital phase-shifter architecture at receiving end

TX_LO

| Baseband signal source | TX DDFS | TX compen-sation | IQ DAC | LPF | | PA |

IQ modulator

## FIG. 12C

FIG. 12D

FIG. 12E

Determining a reference transmission delay and a time delay difference between a signal transmission delay of each of transmission channels and the reference transmission delay ⟋1301

Generating a compensation signal corresponding to each of the transmission channels according to the time delay difference ⟋1302

Compensating a transmitted signal of a corresponding transmission channel using the compensation signal ⟋1303

FIG. 13

FIG. 14A

FIG. 14B

FIG. 15A

FIG. 15B

FIG. 16

Determining a reference transmission delay and a time delay difference between a signal transmission delay of each of transmission channels and the reference transmission delay ⟋1701

Generating a compensation signal corresponding to each of the transmission channels according to the time delay difference ⟋1702

Determining a transmission channel corresponding to a currently received echo signal, and compensating the currently received echo signal using the corresponding compensation signal ⟋1703

FIG. 17

1801
Processing an echo signal received by a receiving channel through range-dimensional Fourier transform to obtain range-dimensional FFT data, and performing phase-shift compensation on the range-dimensional FFT data by using a phase-shift error coefficient of a transmission channel to obtain range-dimensional FFT compensation data

1802
Processing the range-dimensional FFT compensation data through Doppler-dimensional Fourier transform to obtain Doppler-dimensional FFT data

1803
Determining velocity information of a target object based on the Doppler-dimensional FFT data

FIG. 18

FIG. 19A

**2D-FFT**

FIG. 19B

FIG. 20A

FIG. 20B

FIG. 21A

v Along Doppler dimension

$\longleftarrow$

| $P_{N-1}$ | $P_{N-2}$ | | | | $P_1$ | $P_0$ |

$\longleftarrow$ 1D FFT plane -M-th range gate data slice

$\bigotimes$

| $W_{N-1}$ | $W_{N-2}$ | | | | $W_1$ | $W_0$ |

$\longleftarrow$ Phase-shift error coefficient

$\parallel$

| $Q_{N-1}$ | $Q_{N-2}$ | | | | $Q_1$ | $Q_0$ |

$\longleftarrow$ Phase-shift compensated 1D FFT data slice

$\Downarrow$

| | TX₁ | | | TX₀ | |

$\longleftarrow$ 2D FFT data slice (TX0 and TX1 represent peak values of 2D FFT corresponding to transmission antennas TX0 and TX1, respectively)

## FIG. 21B

Multi-receiving channel-2D FFT data slice 0 $\Rightarrow$ Multi-channel merging detection $\Rightarrow$ Extracting FFT vector of target echo of TX0 $\Rightarrow$ Synthesizing to an MIMO virtual array to receive FFT vector $\Rightarrow$ Angle calculation

Multi-receiving channel-2D FFT data slice 1 $\Rightarrow$ Multi-channel merging detection $\Rightarrow$ Extracting FFT vector of target echo of TX1 $\Rightarrow$

## FIG. 22

331 — Signal transceiving channel

332 — Target detection module

## FIG. 23

$2A*X(t-\tau)$ $\otimes$ $\rightarrow$ LPF $\rightarrow$

$X(t)$

## FIG. 24

2501

Processing, in a target-free scenario, a received signal through range-dimensional Fourier transform to obtain range-dimensional FFT data, and extracting, for each chirp signal in the range-dimensional FFT data, first k data in the chirp signal ordered from low to high in frequency

2502

Obtaining, for each data belonging to a same order among the first k data of each group extracted from different chirp signals, a leakage value of the order. Among the first k data of each group, data belonging to the same order have a same corresponding frequency

2503

Subtracting, when performing target detection, data of a corresponding order of each chirp signal in the range-dimensional FFT data generated by a currently received signal, by using a leakage value of respective order, to realize leakage elimination of the received signal

FIG. 25

26011

Processing, in a target-free scenario, a received signal of each frame through range-dimensional Fourier transform to obtain range-dimensional FFT data of each frame, and extracing, for each chirp signal in the range-dimensional FFT data of each frame, first k data in the chirp signal ordered from low to high in frequency

26021

In a frame unit, obtaining, for each data belonging to a same order in each chirp signal in the extracted range-dimensional FFT data in each frame, a first leakage value of the order in the frame

26022

Obtaining, for each first leakage value belonging to a same order in each frame, a second leakage value of the order between frames

2603

Subtracting, when performing target detection, data of a corresponding order of each chirp signal in the range-dimensional FFT data generated by a currently received signal, by using a leakage value of respective order, to realize leakage elimination of the received signal.

FIG. 26

2701

Processing, in a target-free scenario, a received signal
through range-dimensional Fourier transform
to obtain range-dimensional FFT data

2702

Using, for a plurality of predetermined range bins, an
average value between different chirp signals as a
first leakage value for each predetermined range bin
based on a frame of the range-dimensional FFT data

2703

Using, for the plurality of predetermined range bins, a
median of first leakage values among different frames
as a second leakage value for each predetermined range
bin based on multi-frame range-dimensional FFT data

## FIG. 27

2801

Retrieving a leakage value of each order in a
plurality of data in a chirp signal ordered from
low to high in frequency from pre-stored data
obtained based on range-dimensional transform

2802

Subtracting, when performing target detection, the plurality of
data in each chirp signal ordered from low to high in frequency
in range-dimensional FFT data generated by a currently received
signal, based on the retrieved leakage values of each order,
to realize leakage elimination of the received signal

## FIG. 28

311    312    313

S → Analog PS →

## FIG. 29

FIG. 30

FIG. 31

FIG. 32

FIG. 33

FIG. 34

FIG. 35

FIG. 36

EP 4 535 673 A1

FIG. 37

FIG. 38

FIG. 39

$\theta_0 \quad \Delta\theta$

DAC clock

Digital LO generator

LO_I =cos(ωn+φ)

LO_Q = sin(ωn+φ)

## FIG. 40

Signal compensator

DAC    LPF    Mixer    PA

cos(ωn+φ)

Waveform controller    sin(ωn+φ)

TX_LO_I

DAC    LPF    Mixer

TX_LO_Q

## FIG. 41

PD    RF Rx    Rx BB    PD    TX

RF ATX    IF ATX    ARX
RF Tone Generator

PD    RF Rx    Rx BB    PD    TX

PD    RF Rx    Rx BB    PD    TX

RF ATX    IF ATX    ARX
RF Tone Generator

PD    RF Rx    Rx BB    PD    TX

## FIG. 42

## IF Auxiliary Transmitter, IFATX

Freq Divider 1/N → 1-bit Real DAC

## Receiver

RX LO Leakage Waveform

RF Calib ← ⊕ ← Real ADC ← HPF ← LPF ← ▷ ← ⊗ ← LNA ← 

RX Real LO
RX LO Leakage
PD

## RF Auxiliary Transmitter, RFATX

TX DDFS → TX IQ Comp → ⊕ → IQ DAC → LPF → ▷ → ⊗

X^2

RF ATX LO Leakage Waveform

RF ATX LO Leakage

RF ATX LO

**FIG. 43**

## Transmitter

PS → PA → PD

## Auxiliary Receiver, ARX

RX LO Leakage Waveform

RF Calib ← ⊕ ← IQ ADC ← HPF ← LPF ← ▷ ← ⊗

ARX IQ LO
ARX LO Leakage
TX LO - ARX LO = 10 MHz or 5 MHz

## RF Tone Generator

TX DDFS → ⊕ → Real DAC → LPF → ▷ → ⊗

TX LO Leakage Waveform

RF Tone Gen LO Leakage

BPF

**FIG. 44**

DAC 1

X^2 ← ⊗ ← 

5 MHz sine wave

LO

RF Loop → LNA → ⊗ → TIA → HPF → ADC → BB Processor

LO

**FIG. 45**

FIG. 46

FIG. 47

FIG. 48

Q mixer drain
common mode bias

I
Mixer
N   P

Q Mixer N
common mode path

Q Mixer P
common mode path

Next
Block

I Mixer N
common mode path

I Mixer P
common mode path

N   P
Q
Mixer

I mixer drain
common mode bias

FIG. 49

I Mixer N
common mode path

I
Mixwe
N   P

I Mixer P
common mode path

I mixer drain
common mode bias

Next
Block

I mixer drain
common mode bias

Q Mixer N
common mode path

N   P
Q
Mixer

Q Mixer P
common mode path

FIG. 50

<table>
<tr><td colspan="2">**INTERNATIONAL SEARCH REPORT**</td><td>International application No.<br><br>**PCT/CN2024/099411**</td></tr>
</table>

| A. | CLASSIFICATION OF SUBJECT MATTER |
|---|---|

H04B 1/525(2015.01)i;  G01S 7/35(2006.01)i;  G01S 7/285(2006.01)i;  G01S 7/41(2006.01)i;  H04B 1/40(2015.01)i;  H04B 1/04(2006.01)i;  G01S 13/58(2006.01)i;  G01S 13/522(2006.01)i;  G01S 7/292(2006.01)i

According to International Patent Classification (IPC) or to both national classification and IPC

| B. | FIELDS SEARCHED |
|---|---|

Minimum documentation searched (classification system followed by classification symbols)

IPC:  G01S H04B

Documentation searched other than minimum documentation to the extent that such documents are included in the fields searched

Electronic data base consulted during the international search (name of data base and, where practicable, search terms used)

CNABS; CNTXT; CNKI; VEN; ENTXT; WEB OF SCIENCE; IEEE: 调频连续波, 雷达, 长度, 时延, 延时, 延迟, 不等, 不相等, 不同, 不相同, 补偿, 修正, 校正, 校准, 泄漏, 泄露, 排序, 顺序, 平均, 均值, FMCW, frequency modulated continuous wave, radar, length, delay, unequal, different, compensate, correct, calibrate, leak, sort, order, average, mean

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 110618406 A (GM GLOBAL TECHNOLOGY OPERATIONS LLC) 27 December 2019 (2019-12-27)<br>    description, paragraphs 34-44 | 1, 3, 17-18, 21-26, 30-37 |
| Y | CN 110618406 A (GM GLOBAL TECHNOLOGY OPERATIONS LLC) 27 December 2019 (2019-12-27)<br>    description, paragraphs 34-44 | 2, 4-16 |
| Y | CN 111630410 A (ROBERT BOSCH CO., LTD.) 04 September 2020 (2020-09-04)<br>    figures 5 and 6 | 2, 4-16 |
| X | CN 112462336 A (DONGHUA UNIVERSITY) 09 March 2021 (2021-03-09)<br>    abstract | 28, 29 |
| A | CN 108474840 A (TEXAS INSTRUMENTS INC.) 31 August 2018 (2018-08-31)<br>    entire document | 1-37 |

☑ Further documents are listed in the continuation of Box C.    ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 September 2024** | **19 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/099411** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 108776330 A (HUNAN TIME VARING TRANSMISSION CO., LTD.) 09 November 2018 (2018-11-09) entire document | 1-37 |
| A | CN 111308427 A (NXP USA INC.) 19 June 2020 (2020-06-19) entire document | 1-37 |
| A | DE 202018105377 U1 (SILICON RADAR GMBH) 07 November 2018 (2018-11-07) entire document | 1-37 |

Form PCT/ISA/210 (second sheet) (July 2022)

**INTERNATIONAL SEARCH REPORT**

| International application No. |
|---|
| **PCT/CN2024/099411** |

| Box No. III      Observations where unity of invention is lacking (Continuation of item 3 of first sheet) |
|---|

This International Searching Authority found multiple inventions in this international application, as follows:

Independent claim 1 and claims 2-15, which directly or indirectly refer to independent claim 1, relate to a signal processing method. Independent claim 16 relates to a computer-readable storage medium. Independent claim 17 and claims 18-20, which directly or indirectly refer to independent claim 17, relate to a signal processing link. Independent claims 21, 23, 26 and 30-34 relate to a signal processing link. Independent claims 22 and 24 relate to a signal processing method. Independent claim 25 relates to a target detection method. Independent claim 27 relates to an FMCW leakage-receiving processing method. Independent claim 28 and claim 29, which directly refers to independent claim 28, relate to an FMCW leakage-receiving processing method. Independent claim 35 relates to an integrated circuit. Independent claim 36 relates to a radio device. Independent claim 37 relates to a terminal device.

Independent claims 1, 16, 17, 23-26 and 30-37 and independent claim 27 or 28 do not have a same or corresponding technical feature. The same technical feature between independent claims 27 and 28 is "in a target-free scenario, performing distance dimension Fourier transform processing on a received signal to obtain distance dimension FFT data". The feature described above is common general knowledge. Therefore, independent claims 1, 16, 17, 23-26 and 30-37 and independent claim 27 or 28, and independent claim 27 and independent claim 28 do not have a same or corresponding special technical feature that defines a contribution which the inventions make over the prior art, do not have a technical relationship therebetween, do not fall within a single general inventive concept, and therefore do not comply with the requirement of unity of invention and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

   ☐ The additional search fees were accompanied by the applicant's protest but the applicable protest fee was not paid within the time limit specified in the invitation.

   ☐ No protest accompanied the payment of additional search fees.

Form PCT/ISA/210 (continuation of first sheet) (July 2022)

# INTERNATIONAL SEARCH REPORT
## Information on patent family members

International application No.

**PCT/CN2024/099411**

| Patent document cited in search report | | | Publication date (day/month/year) | Patent family member(s) | Publication date (day/month/year) |
|---|---|---|---|---|---|
| CN | 110618406 | A | 27 December 2019 | None | |
| CN | 111630410 | A | 04 September 2020 | None | |
| CN | 112462336 | A | 09 March 2021 | None | |
| CN | 108474840 | A | 31 August 2018 | None | |
| CN | 108776330 | A | 09 November 2018 | None | |
| CN | 111308427 | A | 19 June 2020 | None | |
| DE | 202018105377 | U1 | 07 November 2018 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311830908
- CN 202311828622
- CN 202311791286
- CN 202310702586
- CN 202311870043
- CN 202410586691